(19) Europäisches Patentamt / European Patent Office / Office européen des brevets

(11) **EP 2 449 930 A2**

(12) **EUROPEAN PATENT APPLICATION**

(43) Date of publication:
**09.05.2012 Bulletin 2012/19**

(51) Int Cl.:
*A47J 37/12* *(2006.01)*

(21) Application number: **11009714.4**

(22) Date of filing: **05.05.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **05.05.2009 US 175703 P
17.09.2009 US 243457 P
23.11.2009 US 623868
21.01.2010 US 691064**

(62) Document number(s) of the earlier application(s) in
accordance with Art. 76 EPC:
**10718794.0 / 2 427 087**

(71) Applicant: **Spinfry, INC.
Lincoln, Rhode Island 02865 (US)**

(72) Inventors:
• **Foster, Paul Lincoln
Lincoln
Rhode Island
02865 (US)**

• **Millikin, Rory C.P.
Kelowna
British Columbia
V1W 4Y7 (CA)**
• **Thornock, Del Moffat
Concord
California
94518 (US)**

(74) Representative: **Hargreaves, Timothy Edward
Marks & Clerk LLP
Aurora
120 Bothwell Street
Glasgow
G2 7JS (GB)**

Remarks:
This application was filed on 08.12.2011 as a
divisional application to the application mentioned
under INID code 62.

(54) **Cooking device**

(57) A cooking device comprises a rotatable food basket disposed within the cooking device, a damping mechanism configured to reduce a vibration generated by the rotatable food basket rotating within the cooking device, a cooking vessel disposed within the cooking device, wherein the rotatable food basket is disposed within the cooking vessel, wherein the cooking vessel is configured to hold a cooking liquid, and a drive mechanism coupled to the rotatable food basket to facilitate rotating the rotatable food basket.

Fig. 1

EP 2 449 930 A2

**Description**

**FIELD OF THE INVENTION**

The present invention relates to a cooking device, and, for example, to vibration damping in a centrifugal cooking device, a dual bay cooking device, tube heating in a cooking device, electromagnetic coupling for a centrifugal basket in a cooking device, and retrofitting systems for a cooking device.

**BACKGROUND OF THE INVENTION**

A popular method of cooking many food items is to fry or deep fry them. A brief list of foods that may be deep fried include french fries, potato chips, chicken, pork, beef, candy bars, ice cream, etc. Many other types of food are amenable to deep frying. Deep frying generally involves immersing the food item in a high-temperature, fat-based solution, such as cooking oil (e.g., canola oil, peanut oil, vegetable oil, olive oil, liquefied shortening etc.) until the food is cooked. These and other foods may be cooked in other cooking liquids. For example, water may be used to steam, blanch, and boil certain foods.

While fried foods have a certain appeal due to the particular taste and texture imparted to foods that are deep fried, such fried foods have some undesirable characteristics. For example, immersing foods in cooking oil results in additional fat being introduced into the food, and this fat is not generally beneficial to the person consuming the food. Furthermore, conventional deep frying methods generally do not attempt to remove this added fat. The added fat that is consumed with fried foods raises health concerns because a high level of fat in one's diet is generally not recommended for good health and nutrition. High quantities of saturated and trans fats such as those found in fried foods have been linked to adverse medical conditions. When cooking other foods in a liquid, such as cooking pasta in water, it may also be desirable to remove excess cooking liquid from the cooked food prior to serving or consuming the cooked food.

Thus, some attempts have been made to remove fat from fried foods or other cooking liquids from cooked foods prior to serving the foods. These attempts, however, require some intervening process between the time the food is removed from the high-temperature oil and the time when the food is served to a consumer. The longer the time between removal from the oil and service to the consumer, the cooler the fried food becomes. As the fried food cools, the freshness and desirability of the fried food decreases at least in part to the change in texture of the fried food because of oil absorption. For example, when french fries begin to cool after being removed from the cooking oil, the outside of the french fries cools more rapidly than the inside. This difference in cooling rates between the outside and inside results in the oil soaking in and collecting in the center of the french fries, which results in soggy french fries containing excess oil. Studies of fried foods have shown that as much as eighty percent of the oil absorbed by the fried food is absorbed during this cooling process.

The prior art has attempted to introduce various means of removing oil from newly fried foods. For example, some prior art discloses the use of centrifuges and ultrasonic energy, sometimes in tandem to remove oil from fried foods. In the case of centrifuges, the prior art generally utilizes a center post or column to serve as the axis for the spinning cycle of the fryer. In some instances the center post is solid, while in other instances, the center post is hollow to allow for a drive shaft to be installed which shaft will spin the food basket when it is in the upper spin position. One issue with the utilization of a center shaft is that it generally requires a perforation of the vessel contain the frying oil and therefore may be prone to leakage of hot oils over time. In addition, such a center post structure may focus vibratory energy from the center post into the machine itself. Center posts also may cause issues with retrofitting of existing fryer vessels and maintenance of the equipment.

In conventional cooking devices, any moving parts generally do not move in a fashion that creates circumstances giving rise to substantial vibration or vibratory actions because in such conventional cooking devices, the range of motion of the moving parts is limited. For example, in a conventional deep fryer, the moving parts are limited to loading, lowering, and raising the basket or container holding the food being fried.

In cooking devices that containing rotating parts that employ centrifugal force to facilitate cooking the food, vibration or vibratory actions may be introduced. For example, fryer devices may utilize a spinning basket that uses centrifugal force to remove excess frying oil from fried foods. The vibratory actions may adversely effect the desirability, functionality, and/or safety of the cooking device.

Additionally, there is a need for a centrifugal cooking device, such as in a deep bay fryer, that accommodates two centrifugal baskets. There is a further need for a cooking device that may utilize tube heating to heat the cooking liquid. Still another need exists for a centrifugal basket that uses electromagnetic coupling to engage a rotational motor.

**SUMMARY**

In an embodiment, a food cooking apparatus generally comprises two sections: a cooking section and a liquid removal section; other embodiments, however, may provide the liquid removal section without providing the cooking section. The cooking section houses and/or heats liquid for cooking the food, and the liquid removal section is operable to reduce the liquid content of the food. The cooking device may further comprise a centrifugal liquid removal device locatable within the liquid removal section and a mechanism configured to move the food from the cooking section to the liquid removal section. Various aspects of the cooking device are subject to being automated.

In accordance with various embodiments, a retrofit apparatus for a preexisting cooking device comprises a hood that defines a liquid removal section, a motor disposed within the hood, and a motor gear rotatable by the motor to facilitate rotating a centrifugal liquid removal device. The motor gear may comprise a plurality of teeth configured to engage a motor gear coupling on a shaft of the centrifugal liquid removal device, and the motor gear may be configured to automatically engage the motor gear coupling to facilitate rotating the centrifugal liquid removal device. In other embodiments, a lifting mechanism in the preexisting cooking device is configured to move the centrifugal liquid removal device from a cooking section to the liquid removal section. In still other embodiments, the retrofit apparatus comprises means for moving the basket well between the liquid removal section and the cooking section.

According to further embodiments, the hood of the retrofit apparatus comprises a housing. The retrofit apparatus may further comprise a basket well locatable within the housing, and the basket well may be moveable between a cooking section and the liquid removal section. In an embodiment, the centrifugal liquid removal device is disposable within the basket well.

In still other embodiments, the basket well comprises a bearing surface and a basket well gear, and the basket well gear comprises a plurality of teeth disposed around the circumference of the basket well. The motor may comprise a spinning gear configured to interface with the basket well gear at the circumference of the basket well. In other embodiments, the motor gear is configured to interface with the basket well gear, where the basket well gear and the motor gear comprise an axis of rotation substantially the same as an axis about which the basket well is configured to rotate, and wherein the basket well gear and the spinning gear comprise substantially the same diameter.

Further, according to an embodiment, a cooking device comprises a rotatable food basket disposed within the cooking device and a damping mechanism configured to reduce a vibration generated by the rotatable food basket rotating within the cooking device. An aspect of the cooking device includes a basket partition in the rotatable food basket, and the basket partition is configured to maintain a substantially equal distribution of a food within the rotatable food basket.

In an embodiment, the cooking device includes a motor in a hood for rotating the rotatable food basket, and it further includes a lifting plate and a lifting mechanism operable to move the rotatable food basket between a cooking section and a spinning section. The hood may be operable to reduce energy consumption by about 13% compared with an open bay cooking device without the hood.

According to an embodiment, the cooking device also comprises a first basket portion and a second basket portion configured to be disposed within a first section and a second section of the rotatable food basket. The first basket portion may include a first handle slot, and the second basket portion may include a second handle slot. The first handle slot and the second handle slot are configured to receive a handle to facilitate removal of the first basket portion and the second basket portion from the rotatable food basket.

In accordance with various embodiments, the hood of the cooking device comprises a motor gear that includes a plurality of teeth configured to receive a motor key on a central shaft of the rotatable food basket. The motor key may be configured to automatically seat with the plurality of teeth in the motor gear via an electromagnetic coupling in response to an instruction from a microprocessor controller, and the motor gear, the plurality of teeth, the motor, and the motor key are interoperable to facilitate rotating the rotatable food basket.

The cooking device, in accordance with an aspect of the present invention, further includes a cooking vessel disposed within the cooking device, with the rotatable food basket being disposed within the cooking vessel. The cooking vessel is configured to hold a cooking liquid. The damping mechanism may comprise an energy absorbing device disposed between the cooking vessel and a frame of the cooking device. The energy absorbing device may include a spring disposed between the frame and at least one of a side and a bottom of the cooking vessel. In an embodiment, the energy absorbing device includes an energy absorbing material configured to be operable in a heated environment and in conjunction with the cooking liquid.

In an embodiment, the cooking device includes a frame configured to receive the cooking vessel, and the damping mechanism includes an energy absorbing device disposed between the frame and a surface external to the cooking device. A drive mechanism may be coupled to the rotatable food basket to facilitate rotating the rotatable food basket, and the damping mechanism may be coupled to the drive mechanism to reduce the vibration generated by the rotatable food basket rotating within the cooking device.

Further, in an embodiment a rotatable food basket for a cooking device comprises a first section and a second section. A lifting plate coupling rotatably connects the rotatable food basket to a lifting plate to facilitate moving the rotatable food basket between a cooking section and a spinning section of the cooking device. A first basket portion disposed within the first section of the rotatable food basket comprises a first handle slot, and a second basket portion disposed within the second section of the rotatable food basket comprises a second handle slot. The first handle slot and the second handle slot are configured to receive a handle to facilitate removal of the first basket portion and the second basket portion from the rotatable food basket. The rotatable food basket further comprises a food slot configured to hold a food in a substantially vertical orientation. The first basket portion, the second basket portion, and the food slot facilitate maintaining a substantially equal distribution of a food in the rotatable food basket while the rotatable food basket is rotating.

In another embodiment, a centrifugal liquid removal device comprises a horizontal surface and a vertical surface. The vertical surface and the horizontal surface form a food compartment that is a cylindrical basket comprising a mesh covering at least one of the horizontal surface and the vertical surface. The centrifugal liquid removal device further comprises a particle basket disposed about the cylindrical basket, and the particle basket has a particle mesh that is finer than the mesh covering at least one of the horizontal surface and the vertical surface. A submerser plate facilitates maintaining the food in a cooking section of the food compartment.

The centrifugal liquid removal device may also comprise a first stackable portion that includes at least a portion of the horizontal surface and the vertical surface, and the first stackable portion is configured to receive a first type of food. A second stackable portion is configured to receive a second type of food. A plurality of segments are configured to distribute the food within the centrifugal liquid removal device, and the plurality of segments comprises at least one of two compartments, three compartments, four compartments, five compartments, and six compartments. Further, the centrifugal liquid removal device comprises a gear that interfaces with at least one of the horizontal surface and the vertical surface to facilitate rotating the food compartment to remove a liquid from a food. The food compartment is configured to hold at least one of french fries, hash browns, meat patties, vegetable patties, fish, chicken nuggets, chicken, fish, pork, beef, meat, taco shells, ice cream, chocolate, fruit, strawberries, potatoes, hot dogs, com dogs, and sausages.

In accordance with another embodiment, a cooking device comprises a rotatable food basket disposed within the cooking device and a damping mechanism configured to reduce a vibration generated by the rotatable food basket rotating within the cooking device. A lifting plate and a lifting mechanism are operable to move the rotatable food basket between a cooking section and a spinning section. The cooking device further comprises a first basket portion and a second basket portion configured to be disposed within a first section and a second section of the rotatable food basket. A cooking vessel is disposed within the cooking device, and the rotatable food basket is disposed within the cooking vessel. The cooking vessel is configured to hold a cooking liquid.

In various embodiments, the vibration damping mechanism may comprise a vessel energy absorbing device disposed between the cooking vessel and a frame of the cooking device. The energy absorbing device may comprise at least one of: a spring disposed between the frame and at least one of a side and a bottom of the cooking vessel; an energy absorbing material configured to be operable in a heated environment and in conjunction with a cooking liquid; and a frame energy absorbing device disposed between a frame and a surface external to the cooking device. The frame is configured to receive the cooking vessel, and frame comprises supports, with the frame energy absorbing device being disposed between the supports for the frame. The frame further comprises at least one of a bolt and a locking device.

The cooking device further comprises a drive mechanism coupled to the rotatable food basket to facilitate rotating the rotatable food basket, and the damping mechanism is coupled to the drive mechanism to reduce the vibration generated by the rotatable food basket rotating within the cooking device. Additionally, the damping mechanism is configured to isolate at least one of the rotatable food basket, the cooking vessel, and the drive mechanism from the frame to facilitate reducing the vibration generated by the rotatable food basket rotating within the cooking device.

In accordance with another embodiment, a retrofit apparatus for a preexisting cooking device comprises a hood that defines a liquid removal section, and the hood comprises a housing. A motor is disposed within the hood, and the motor rotates a motor gear to facilitate rotating a centrifugal liquid removal device. A plurality of teeth in the motor gear automatically engage a motor gear coupling on a shaft of the centrifugal liquid removal device.

The retrofit apparatus further comprises a basket well located within the housing, and the basket well is moveable between a cooking section and the liquid removal section. The centrifugal liquid removal device is disposed within the basket well, the basket well comprises a bearing surface and a basket well gear, and the basket well gear comprises a plurality of teeth disposed around the circumference of the basket well. A spinning gear is coupled to the motor to interface with the basket well gear at the circumference of the basket well. Also, the retrofit apparatus comprises means for moving the basket well between the liquid removal section and a cooking section of the preexisting cooking device, for example, via a motor. A heating element is disposed within the housing for heating a liquid in the cooking section of the preexisting cooking device.

Further, an embodiment of a cooking device comprises a fryer bay that includes a cooking section and a spinning section. A first basket is disposed in a first section of the fryer bay, and a second basket is disposed in a second section of the fryer bay. The first basket and the second basket are independently movable between the cooking section and the spinning section, and the first basket and the second basket are independently removable from the cooking device.

The cooking device may comprise a first lifting mechanism, first lifting arms, and a first lifting plate for moving the first basket between the cooking section and the spinning section. A second lifting mechanism, second lifting arms, and a second lifting plate may be configured to move the second basket between the cooking section and the spinning section, with the second lifting arms extending around the first lifting plate to facilitate independently moving the first basket and the second basket. Guide posts may be disposed proximate to at least one of the first lifting plate and the second lifting plate to facilitate guiding the at least one of the first basket and the second basket between the cooking section and the spinning section.

In various embodiments, the cooking device further comprises a first cover for the first basket, and a second cover for the second basket. The first cover and the second cover facilitate independent operation of cooking in the first basket and the second basket. First hinges may be coupled to the first cover, and second hinges may be coupled to the second cover. The first hinges and second hinges are located on at least one of adjacent, opposite, and neighboring sides of the cooking device. A separating plate is located between the first basket and the second basket, and the separating plate comprises a solid portion proximate the spinning section and a perforated portion proximate the cooking section.

Further, in accordance with another embodiment, a cooking device comprises a centrifugal liquid removal device, a cooking section comprising a cooking liquid, and a spinning section for at least partially removing the cooking liquid from a food. A tube heating element in the cooking section heats the cooking liquid and runs at least partially through the cooking liquid, and a coolant is disposed in the tube heating element. In various embodiments, means for utilizing exhaust heat from the spinning section facilitates at least one of preheating and reheating the coolant in the tube heating element. For example, a heat exchanger may be utilized to preheat or reheat the coolant with the exhaust heat. A vacuum motor and a vacuum vent facilitate reducing a pressure in the cooking device to remove the cooking liquid from the food, and the means for utilizing exhaust heat may include the vacuum motor and the vacuum vent.

Moreover, a cooking device, according to an embodiment, comprises a rotatable food basket and a hood with a lip. The hood and lip are interoperable to prevent heat loss. A motor in the hood rotates the rotatable food basket, and a motor gear includes a plurality of teeth configured to receive a motor key on a central shaft of the rotatable food basket. The motor key is configured to automatically seat with the plurality of teeth in the motor gear via an electromagnetic coupling. In various embodiments, the motor gear, the plurality of teeth, the motor, and the motor key are interoperable to facilitate rotating the rotatable food basket. The cooking device may further comprise means for inducing sonic vibration, such as an ultrasonic device, motor and/or generator, in the rotatable food basket to agitate a food in the rotatable food basket and to prevent sticking of the food. In an embodiment, the hood and the lip are interoperable to achieve an energy consumption improvement of about 13%.

In accordance with various embodiments, a controller for a cooking device is configured to cause the cooking device to perform a method that comprises receiving an instruction relating to a cook time, a spin time, and a cook temperature and moving a centrifugal liquid removal device to a cooking section. The centrifugal liquid removal device comprises a food to be cooked. The method further comprises measuring a cooking liquid temperature in the cooking section and adjusting a heating element until the cooking liquid temperature is substantially equal to the cook temperature. The food is agitated in the cooking section. After the cook time, the method comprises instructing a motor to move the centrifugal liquid removal device to a liquid removal section, and rotating the centrifugal liquid removal device for the spin time to remove an amount of liquid from the food. A spin speed of the centrifugal liquid removal device may be a linearly changing variable spin speed.

In an embodiment, the method further comprises damping a vibration in the cooking device, adjusting at least one of the cook temperature, the cook time, and the spin time in order to obtain a predetermined cooling rate of the food, and removing the food from the cooking device. In various embodiments, the instruction received may relate to the spin speed, a food type, a spin temperature, and a food result. Further, the method may further comprise measuring a liquid removal section temperature, adjusting the liquid removal section temperature until it is substantially equal to the spin temperature, adjusting at least one of the cook temperature, the spin temperature, the cook time, the spin time, and the spin speed in order to obtain the food result, and adjusting at least one of the spin temperature and the spin speed in order to obtain the predetermined cooling rate of the food.

According to various embodiments, a cooking device may comprise a housing, a drawer slidably coupled to the housing, and a door coupled to the drawer and the housing. A cooking basket disposed in the drawer may configured to hold a food, and a lifting mechanism may move the cooking basket between a cooking section and a spinning section when the drawer is located in the housing and when the door is closed. A center post may be connected to the cooking basket, and a motor may be coupled to a gear for spinning the cooking basket. In an embodiment, the gear automatically couples to the center post when the cooking basket moves from the cooking section to the spinning section to facilitate spinning the cooking basket to remove a liquid from the food. The cooking device may comprise a door that is slidably coupled to the drawer and the housing for moving the drawer into and out of the housing.

## BRIEF DESCRIPTION OF THE DRAWINGS

The subject matter of the present invention is particularly pointed out and distinctly claimed in the concluding portion of the specification. The invention, however, both as to structure and method of operation, may best be understood by reference to the following description taken in conjunction with the claims and the accompanying drawing figures, in which like parts may be referred to by like numerals.

FIG. 1 illustrates a cross-section of a cooking device according to an embodiment of the present invention.

FIG. 2 illustrates a cross-section of a cooking device according to an embodiment of the present invention.

FIG. 3A illustrates a side view of a cooking device and filtering system according to an embodiment of the present invention.

FIG. 3B illustrates a side view of a valve portion of a filtering system according to an embodiment of the present invention.

FIG. 4A illustrates a partial cross-section of a cooking device according to an embodiment of the present invention.

FIG. 4B illustrates a top view of a servo and discharge arm assembly according to an embodiment of the present invention.

FIG. 4C illustrates a top view of a cooking device according to an embodiment of the present invention.

FIG. 4D illustrates a cross-section of a cooking device according to an embodiment of the present invention.

FIG. 4E illustrates a cross-section of a cooking device according to an embodiment of the present invention.

FIG. 5 illustrates a schematic of a cooking system according to an embodiment of the present invention.

FIG. 6A illustrates a schematic of a portion of a frame section and basket well according to an embodiment of the present invention.

FIG. 6B illustrates a schematic of a portion of a frame section and basket well according to an embodiment of the present invention.

FIG. 6C illustrates a schematic of a portion of a frame section and basket well according to an embodiment of the present invention.

FIG. 7A illustrates a perspective view of an embodiment of the present invention.

FIG. 7B illustrates a perspective view of an embodiment of the present invention.

FIG. 7C illustrates a perspective view of an embodiment of the present invention.

FIG. 8 illustrates a cut-away view of an embodiment of the present invention.

FIG. 9 illustrates a cut-away view of an embodiment of the present invention.

FIG. 10A illustrates a side view of a basket according to an embodiment of the present invention.

FIG. 10B illustrates a side view of a basket according to an embodiment of the present invention.

FIG. 10C illustrates a side view of a basket according to an embodiment of the present invention.

FIG. 11 illustrates a perspective view of a cooking device according to an embodiment of the present invention.

FIG. 12 illustrates a side view of a cooking device according to an embodiment of the present invention.

FIG. 13 illustrates a cut-away view of a portion of a frame structure according to an embodiment of the present invention.

FIG. 14A illustrates a cut-away view of a portion of a cooking device according to an embodiment of the present invention.

FIG. 14B illustrates a perspective view of a cooking device according to an embodiment of the present invention.

FIG. 15A illustrates a perspective view of a pre-existing cooking device according to an embodiment of the present invention.

FIG. 15B illustrates a perspective view of a retrofit cooking device according to an embodiment of the present invention.

FIG. 16 illustrates a perspective view of a cooking device according to an embodiment of the present invention.

FIG. 17 illustrates a top view of a cooking device according to an embodiment of the present invention.

FIG. 18A illustrates an exploded, perspective view of a basket and a particle basket according to an embodiment of the present invention.

FIG. 18B illustrates a side view of the embodiment illustrated in FIG. 18A.

FIG. 18C illustrates a perspective view of the embodiment illustrated in FIG. 18A.

FIG. 19A illustrates an exploded, perspective view of a stackable basket according to an embodiment of the invention.

FIG. 19B illustrates another exploded, perspective view of the embodiment illustrated in FIG. 19A.

FIG. 19C illustrates a perspective view of the embodiment illustrated in FIG. 19A.

FIG. 20A illustrates a top view of a segmented basket according to an embodiment of the invention.

FIG. 20B illustrates a perspective view of the embodiment illustrated in FIG. 20A.

FIG. 21A illustrates a perspective view of a submerser plate according to an embodiment of the invention.

FIG. 21B illustrates an exploded, perspective view of the embodiment illustrated in FIG 21A.

FIG. 22A illustrates a side cross-sectional view of a cooking device with a door according to an embodiment of the invention.

FIG. 22B illustrates a side cross-sectional view of the embodiment illustrated in FIG 22A with the door partially open.

FIG. 22C illustrates a side cross-sectional view of the embodiment illustrated in FIG 22A with the door open.

FIG. 23A illustrates an exploded, perspective view of a basket configured to interface with a rotating disk according to an embodiment of the invention.

FIG. 23B illustrates a side cross-sectional view of a cooking device comprising a basket configured to interface with a rotating disk according to an embodiment of the invention.

FIG. 23C illustrates a side cross-sectional view of the embodiment illustrated in FIG. 23B.

FIG. 24A illustrates a side cross-sectional view of a cooking device comprising a telescoping shaft in a cooking device according to an embodiment of the invention.

FIG. 24B illustrates a side cross-sectional view of the embodiment illustrated in FIG. 24A.

FIG. 24C illustrates a side cross-sectional view of the embodiment illustrated in FIG. 24A.

FIG. 24D illustrates a side cross-sectional view of a cooking device comprising a telescoping shaft and a screw drive mechanism in a cooking device according to an embodiment of the invention.

FIG. 24E illustrates a cut-away, perspective view of a lifting plate in a cooking device according to an embodiment of the invention.

FIG. 25A illustrates a cut-away, perspective view of a cooking device comprising an agitation motor according to an embodiment of the invention.

FIG. 25B illustrates a cut-away perspective view of the embodiment illustrated in FIG. 25A.

FIG. 26A illustrates a perspective view of a cooking device with a drawer according to an embodiment of the invention.

FIG. 26B illustrates a perspective view of the embodiment illustrated in FIG. 26A.

FIG. 26C illustrates another perspective view of the embodiment illustrated in FIG 26A.

FIG. 27A illustrates a side cross-sectional view of a telescoping shaft in a cooking device according to an embodiment of the invention.

FIG. 27B illustrates a side cross-sectional view of the embodiment illustrated in FIG. 27A.

FIG. 27C illustrates another side cross-sectional view of the embodiment illustrated in FIG. 27A.

FIG. 28A illustrates a side cross-sectional view of a cooking device with a cam lift mechanism according to an embodiment of the invention.

FIG. 28B illustrates a side cross-sectional view of the embodiment illustrated in FIG. 28A.

FIG. 28C illustrates a side cross-sectional view of the embodiment illustrated in FIG. 28A.

FIG. 29A illustrates an exploded, perspective view of a dual motor configuration in a cooking device according to an embodiment of the invention.

FIG. 29B illustrates a side cross-sectional view of the embodiment illustrated in FIG. 29A.

FIG. 29C illustrates another side cross-sectional view of the embodiment illustrated in FIG. 29A.

FIG. 29D illustrates still another side cross-sectional view of the embodiment illustrated in FIG. 29A.

FIG. 30 illustrates a perspective view of a cooking device having a heating table according to an embodiment of the invention.

FIG. 31A illustrates a top cross-sectional view of a cooking device with a single motor according to an embodiment of the invention.

FIG. 31B illustrates a side cross-sectional view of the embodiment illustrated in FIG. 31A with a cover open.

FIG. 31C illustrates a side cross-sectional view of the embodiment illustrated in FIG. 31A with a basket in a spinning section of the cooking device.

FIG. 31D illustrates a side cross-sectional view of the embodiment illustrated in FIG. 31A with a basket in between a spinning section and a cooking section of the cooking device.

FIG. 31E illustrates a side cross-sectional view of the embodiment illustrated in FIG. 31A with a basket in a cooking section of the cooking device.

FIG. 32A illustrates a side cross-sectional view of a cooking device with a pneumatic lift mechanism according to an embodiment of the invention.

FIG. 32B illustrates a side cross-sectional view of the embodiment illustrated in FIG. 32A with a basket in a spinning section of the cooking device.

FIG. 32C illustrates a side cross-sectional view of the embodiment illustrated in FIG. 32A with a cover open.

FIG. 32D illustrates another side cross-sectional view of the embodiment illustrated in FIG. 32A with a cover open.

FIG. 32E illustrates a side cross-sectional view of the embodiment illustrated in FIG. 32A with a basket in a cooking section of the cooking device.

FIG. 32F illustrates a further side cross-sectional view of the embodiment illustrated in FIG. 32A with a basket in a spinning section of the cooking device.

FIG. 33A illustrates a side cross-sectional view of a cooking device with a linkage lift mechanism according to an embodiment of the invention.

FIG. 33B illustrates a perspective view of the linkage lift mechanism illustrated in FIG. 33A.

FIG. 33C illustrates a perspective view of another linkage lift mechanism according to an embodiment of the invention.

FIG. 33D illustrates a back cross-sectional view of the embodiment illustrated in FIG. 33A with a basket in a cooking section of the cooking device.

FIG. 33E illustrates a back cross-sectional view of the embodiment illustrated in FIG. 33A with a basket in between a cooking section and a spinning section of the cooking device.

FIG. 33F illustrates a back cross-sectional view of the embodiment illustrated in FIG. 33A with a basket in a spinning section of the cooking device.

FIG. 33G illustrates a side cross-sectional view of the embodiment illustrated in FIG. 33A with a cover open.

FIG. 33H illustrates a side cross-sectional view of the embodiment illustrated in FIG. 33A with a basket in a cooking section of the cooking device.

FIG. 34A illustrates a side cross-sectional view of a cooking device with a pressure-relief valve according to an embodiment of the invention.

FIG. 34B illustrates a perspective view of the embodiment illustrated in FIG. 34A.

FIG. 34C illustrates a side cross sectional view of a pressure-relief valve according to the embodiment illustrated in FIG. 34A.

FIG. 34D illustrates another side cross sectional view of a pressure-relief valve according to the embodiment illustrated in FIG. 34A.

FIG. 35A illustrates a perspective view of a cooking device comprising a hood with a venting system according to an embodiment of the invention.

FIG. 35B illustrates another perspective view of the embodiment illustrated in FIG. 35A.

FIG. 36A illustrates a schematic diagram of a cooking device with a conveyor apparatus according to the present invention.

FIG. 36B illustrates a cross section of a cooking device according to an embodiment of the present invention.

FIG. 36C illustrates a cross-section of a cooking device in accordance with a further embodiment of the present invention.

FIG. 37 illustrates a perspective view of a cooking device according to an embodiment of the present invention.

FIG. 38 illustrates a perspective view of a cooking device with an open cover according to an embodiment of the present invention.

FIG. 39 illustrates a front view of a cooking device according to an embodiment of the present invention.

FIG. 40 illustrates a sectional perspective view of a cooking device according to an embodiment of the present invention.

FIG. 41 illustrates a sectional side view of a cooking device according to an embodiment of the present invention.

FIG. 42 illustrates a partial, sectional side view of a cooking device according to an embodiment of the present invention.

FIG. 43 illustrates a side view of a basket and a lifting mechanism according to an embodiment of the present invention.

FIG. 44 illustrates a perspective view of a basket according to an embodiment of the present invention.

FIG. 45 illustrates a sectional perspective view of a basket according to an embodiment of the present invention.

FIG. 46 illustrates a side view of a basket according to an embodiment of the present invention.

FIG. 47 illustrates a side view of a basket with a motor according to an embodiment of the present invention.

FIG. 48 illustrates a sectional perspective view of a basket and a motor according to an embodiment of the present invention.

FIG. 49 illustrates a perspective view of a motor gear according to an embodiment of the present invention.

FIG. 50 illustrates a sectional perspective view of a motor gear according to an embodiment of the present invention.

FIG. 51 illustrates a sectional perspective view of a basket and a lifting plate according to an embodiment of the present invention.

FIG. 52 illustrates a perspective view of a basket with partitions according to an embodiment of the present invention.

FIG. 53 illustrates a top view of a basket according to an embodiment of the present invention.

FIG. 54 illustrates a perspective view of a wire frame according to an embodiment of the present invention.

FIG. 55 illustrates a top view of a wire frame according to an embodiment of the present invention.

FIG. 56 illustrates a perspective view of a wire frame with an insert according to an embodiment of the present invention.

FIG. 57 illustrates an exploded perspective view of a wire frame with inserts according to an embodiment of the present invention.

FIG. 58 illustrates a top view of a wire frame with an insert according to an embodiment of the present invention.

FIG. 59A illustrates a top view of a wire frame with inserts having handle slots according to an embodiment of the present invention.

FIG. 59B illustrates a perspective view of a handle and an insert according to an embodiment of the present invention.

FIG. 60 illustrates a perspective view of a wire frame with partitions according to an embodiment of the present invention.

FIG. 61A illustrates an exploded perspective view of a wire frame with inserts according to an embodiment of the present invention.

FIG. 61B illustrates an exploded perspective view of a handle and an insert according to an embodiment of the present invention.

FIG. 61C illustrates a perspective view of a handle and an insert according to an embodiment of the present invention.

FIG. 62 illustrates a top view of a wire frame with four inserts according to an embodiment of the present invention.

FIG. 63 illustrates a perspective view of a wire frame with four inserts according to an embodiment of the present invention.

FIG. 64 illustrates a side view of a cooking device with a telescoping shaft according to an embodiment of the present invention.

FIG. 65 illustrates a side view of a cooking device with a telescoping shaft according to another embodiment of the present invention.

FIG. 66 illustrates a side view of a dual bay cooking device according to an embodiment of the present invention.

FIG. 67 illustrates a side view of a dual bay cooking device according to another embodiment of the present invention.

FIG. 68 illustrates a top view of a dual bay cooking device according to an embodiment of the present invention.

FIG. 69 illustrates a perspective view of a dual bay cooking device according to an embodiment of the present invention.

FIG. 70 illustrates a perspective view of a basket frame of a dual bay cooking device according to an embodiment of the present invention.

FIG. 71 illustrates a perspective view of a dual bay cooking device and lifting mechanism according to an embodiment of the present invention.

FIG. 72 illustrates a side view of a dual bay cooking device according to an embodiment of the present invention.

FIG. 73 illustrates a perspective view of a cooking device with a vacuum motor according to an embodiment of the present invention.

FIG. 74 illustrates a perspective sectional view of a cooking device with a vacuum motor according to an embodiment of the present invention.

FIG. 75 illustrates a side view of a cooking device with a vacuum motor according to an embodiment of the present invention.

FIG. 76 illustrates a side view of a cooking device with a vacuum motor according to another embodiment of the present invention.

FIG. 77 illustrates a side view of a cooking device with a vacuum motor according to still another embodiment of the present invention.

FIG. 78 illustrates a side view of a cooking device with a vacuum motor and a closed lid according to an embodiment of the present invention.

FIG. 79 illustrates a perspective view of a hash brown insert according to an embodiment of the present invention.

FIG. 80 illustrates a perspective view of a portion of a cooking device with a hash brown insert according to an embodiment of the present invention.

FIG. 81 illustrates a perspective view of a basket and vibration damping mechanism according to an embodiment of the present invention.

FIG. 82 illustrates a perspective view of a basket and vibration damping mechanism according to another embodiment of the present invention.

FIG. 83 illustrates a side sectional view of a vibration damping mechanism according to an embodiment of the present invention.

FIG. 84 illustrates a side sectional view of a vibration damping mechanism according to another embodiment of the present invention.

FIG. 85 illustrates a perspective sectional view of a vibration damping mechanism according to an embodiment of the present invention.

FIG. 86 illustrates a perspective view of a cooking device and vibration damping mechanism according to an embodiment of the present invention.

FIG. 87 illustrates a perspective view of a cooking device with a vibration damping mechanism according to an embodiment of the present invention.

FIG. 88 illustrates a perspective sectional view of a cooking device with a vibration damping mechanism according to an embodiment of the present invention.

FIG. 89 illustrates a perspective view of a cooking device with a vibration damping mechanism according to yet another embodiment of the present invention.

FIG. 90A illustrates an exploded perspective view of an onion slicer according to an embodiment of the present invention.

FIG. 90B illustrates a perspective view of an onion slicer according to another embodiment of the present invention.

FIG. 91 illustrates a perspective view of an onion basket according to an embodiment of the present invention.

FIG. 92 illustrates an exploded perspective view of an onion basket according to another embodiment of the present invention.

FIG. 93 illustrates an exploded perspective view of an onion insert according to an embodiment of the present invention.

FIG. 94 illustrates a perspective view of a filter according to an embodiment of the present invention.

FIG. 95 illustrates an exploded perspective view of a filter according to an embodiment of the present invention.

FIG. 96 illustrates an exploded perspective view of a filter according to another embodiment of the present invention.

FIG. 97 illustrates an exploded perspective view of a filter according to yet another embodiment of the present invention.

FIG. 98 illustrates a perspective view of a filter with a cover according to an embodiment of the present invention.

## DETAILED DESCRIPTION

The detailed description herein makes use of various embodiments to assist in disclosing the present invention. While these embodiments are described in sufficient detail to enable those skilled in the art to practice the invention, it should be understood that other embodiments may be realized and that modifications of structures, arrangements, applications, proportions, elements, materials, or components used in the practice of the present invention, in addition to those not specifically recited, can be varied or otherwise particularly adapted to specific environments, manufacturing specifications, design parameters or other operating requirements without departing from the scope of the present invention and are intended to be included in this disclosure. Thus, the detailed description herein is presented for purposes of illustration only and not of limitation.

In accordance with various embodiments of the present invention, systems, methods and apparatuses for cooking food and removing liquid content therefrom are disclosed. The food cooking apparatus generally comprises two sections: a cooking section and a liquid removal section. Other embodiments, however, may provide the liquid removal section without providing the cooking section, for example, where an existing cooking device is retrofitted with an apparatus for spinning the cooked food to remove liquid therefrom. The cooking section houses and/or heats liquid for cooking the food, and the liquid removal section is operable to reduce the liquid content of the food. A basket located within the apparatus may be moved between the two sections. Such movement may be accomplished manually or automatically, for example, by a motor and/or controller. In various embodiments, the movement of the basket may be accomplished by lifting the basket or container from the side, bottom or top of the basket, cooking device and/or cover.

According to a further embodiment of the invention, the cooking device provides a method for frying foods which includes removing excess and/or unwanted fat, grease, oil, and the like, and simultaneously maintaining a desirable temperature within the food that is being cooked. The terms "cooking" and "frying" and formatives thereof are used interchangeably herein. Other mechanisms for cooking food besides frying fall within the scope of the present invention, such as boiling, blanching, steaming, poaching, simmering, steeping, and the like. For consistency, "frying" and/or "cooking" will be used throughout without limiting the methods of cooking for use in conjunction with embodiments of the present invention. Similarly, while "cooking device" may be used in this specification, it should be understood that any device capable of cooking and/or removing a liquid from a cooked food, such as a fryer device, is contemplated within the scope of the invention.

Additionally, in certain embodiments of the invention, water may be used in place of cooking oil in order to boil, poach, blanch, steam, or otherwise cook certain foods, such as pasta and vegetables. The foods are housed within the basket and cooked in heated water (or exposed to steam) from the water section, where the water section takes the place of the oil section. After cooking in the water, the basket is moved to the spinning section where excess water is removed so that the food does not get soggy from the excess water. Spinning and/or agitating the food also aids in preventing the food from sticking to itself. For example, sonic vibration may be utilized to agitate the food and/or various components of the cooking device in order to aid in preventing the food from sticking to itself or to the cooking basket. In other embodiments, water may be introduced to the cooking device during the spinning process in order to rinse starches and other products of the boiling process from the boiled food. In other embodiments, mixtures may be used, such as a water and oil mix (such as garlic oil, olive oil, butter or the like). Such foods that may be cooked by this process comprise pasta products and vegetables.

In accordance with an embodiment of the present invention, a cooking device comprises an oil section where a food item is fried, and a spinning section where excess oil, grease, fat and the like are removed from the food while, at the same time, providing some degree of convection type cooking. The food is housed within a basket, and the basket is selectively movable between the oil section and the spinning section. A mechanism is employed that allows allowing movement of the basket between the oil section and the spinning section. At least one motor is employed to control operation of the cooking device. For example, in certain embodiments, one motor controls the movement of the basket between sections, and another motor controls the spinning of the basket. In various embodiments, the cooking device has a lid which is closed during the frying and spinning processes. In further embodiments, the cooking device comprises a drawer, and in still further embodiments, the cooking device does not comprise a cover and/or a drawer. In other embodiments, the cooking device comprises a filtering system for removing unwanted particles and debris from the cooking oil. In some embodiments of the invention, the cooking device further comprises various mechanisms for automating the processes involved with the cooking device. In yet other embodiments of the invention, a controller is provided which controls the operation of the various motors and processes to allow for substantially complete automation of the cooking device. In some embodiments, a solid shield or wall is employed around the basket well so as to detain and return oil and fat removed during the spin and/or oil removal cycles and then direct the return of that oil or fat to the frying vessel below.

As noted above, foods that are fried tend to have excess oil at the surface as well as throughout the fried food. As the fried food cools, the outside of the food tends to cool first. The warmer inside temperature of the food draws the excess oil on the surface of the fried food to the inside of the food, resulting in an undesirable texture and taste of the fried food as well as limiting the shelf life of the food. This cooling process increases the amount of oil within the fried food, contrary to many health trends. Various embodiments of the present invention provide a mechanism for reducing this unwanted cooling during the excess oil removal process, leaving the excess oil at the surface of the fried food to be removed before it is drawn towards the center of the fried food, thereby resulting in a fried food that is healthier and more desirable than fried food produced by current methods.

According to various embodiments of the present invention, the cooking device is available in numerous sizes and/or capacities. For example, the cooking device is available in commercial sizes for use by restaurants and other food-frying establishments that must produce hundreds of pounds of fried food every day. Commercial cooking devices also range in size depending on the desired capacity for the commercial fryer. Other embodiments of the invention provide a cooking device that is amenable to use in a user's home. For example, the cooking device for personal use may produce as little as one serving of fried food. Such a personal cooking device may be configured to sit on a countertop in a personal residence. All sizes and capacities of the cooking device are contemplated within the scope of the present invention.

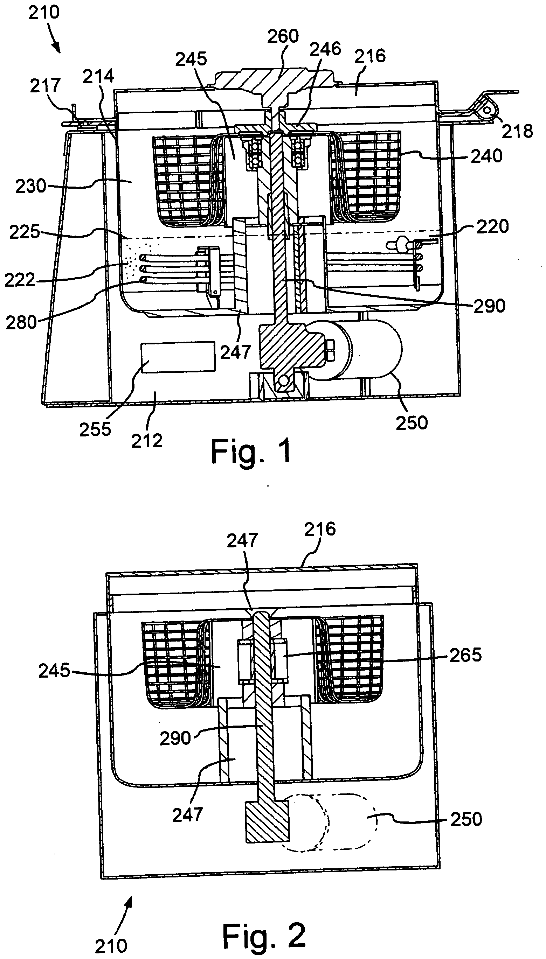

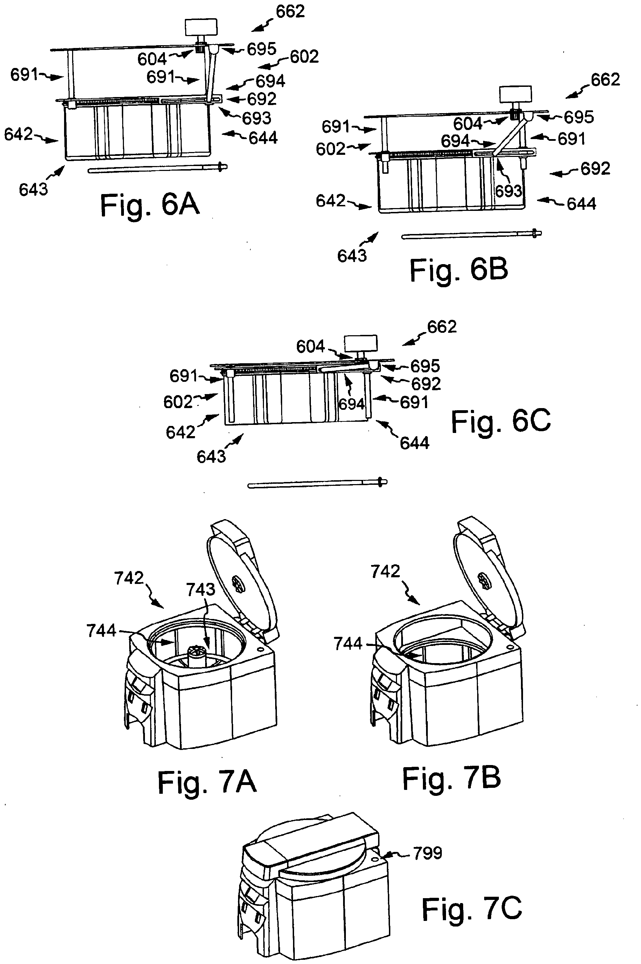

With reference to FIG. 1, an embodiment of the cooking device is now described. Cooking device 210 comprises a device housing 212 and a top cover 216. Top cover 216 comprises a spin motor 260. Device housing 212 comprises a frying vessel 214, a linear motor 250, and a controller 255. Frying vessel 214 comprises an oil section 220, a spinning section 230, a heating element 280, and a basket 240. A guide shaft 290 is configured to operate in conjunction with linear motor 250 and basket 240 to facilitate movement of basket 240 between oil section 220 and spinning section 230. In other embodiments, with momentary reference to FIGS. 6A - 6C, frying vessel 214 may comprise a plurality of guide shafts 691, and other motors, gears, and mechanisms configured to facilitate movement of basket 240 (not shown in FIGS. 6A - 6C) as discussed further below.

With reference again to FIG. 1, according to various embodiments of the invention, device housing 212 houses the components of cooking device 210 and protects the environment within cooking device 210 to enable the frying of the food within cooking device 210, and to protect a user from the high temperatures within cooking device 210. In some embodiments, device housing 212 comprises a thermal insulation material to maintain the outside of cooking device 210 at a reasonable and safe operating temperature.

In accordance with further embodiments of the invention, oil section 220 is located within device housing 212 and is configured to receive basket 240 in order to fry the food contained in basket 240. Oil section 220 is further configured to heat any type of oil that is capable of frying food in a manner that renders the food edible. Such oil may be cooking oil, vegetable oil, corn oil, peanut oil, canola oil, olive oil, and the like. Examples of food that may be cooked in cooking oil 222 are potatoes, chicken, pork, beef, candy bars, ice cream, etc. As noted above, the cooking device may be configured to cook a variety of foods in different cooking liquids. For example, water may be used to steam, blanch, poach, boil, and the like, various foods such as pasta and vegetables.

An exemplary basket 240 may be adaptable to receive any type of food that may be cooked in oil section 220, and in various embodiments, different types, shapes, sizes, and/or configurations of baskets are available to cook different types of food in a manner configured to be suitable for serving and/or consumption. An oil level 225 is maintained in oil section 220 in order to allow for the sufficient immersion of basket 240 and/or the food to be cooked within cooking oil 222.

According to other embodiments of the invention, a mechanism for heating cooking oil 222 is provided. In embodiments, an immersion coil, such as heating element 280 is in thermal contact with cooking oil 222 and is operable to heat cooking oil 222. In some embodiments, heating element 280 is also in physical contact with cooking oil 222, for example, heating element 280 may be located within oil section 220. In other embodiments of the invention, a thermally conductive material may be present between heating element 280 and cooking oil 222. For example, heating element 280 may be located outside of, but in thermal contact with frying vessel 214 which may have thermally conductive walls, or may have a partially thermally conductive wall proximate heating element 280. In yet other embodiments, where heating element 280 is located within oil section 220, frying vessel 214 may be thermally insulated in order to aid in maintaining the outside of cooking device 210 at a safe operating temperature. The heating element is operable to be driven by electricity, gas, solar power, and the like. The heating element may be removably or permanently secured within cooking device 210.

Although a heating element has been discussed, it should be understood that any method of heating the cooking liquid is contemplated within the scope of the present disclosure. For example, the cooking liquid and/or the vessel in which the cooking liquid is contained may be exposed to a gas flame that is configured to heat the cooking liquid. In other embodiments, tubes running through the cooking liquid may be heated by means other than electricity. For example, the tubes may carry a heated liquid that is configured to heat the cooking liquid.

In other embodiments, heating element 280 is located within spinning section 230 and/or is located both within the spinning and oil sections. In still other embodiments, two heating elements may be used. For example, one heating element may be used to heat the oil in the oil section, and a second heating element may be used to aid in maintaining a desirable temperature in the spinning section. Employing a second heating element for heating the spinning section aids in increasing the amount of oil removed from the fried food. The higher the temperature during spinning, the less viscous the oil will be, so it is easier to spin the oil off. And the higher the temperature, the less oil that has been drawn to the center of the fried food. Thus, where spinning occurs at higher temperatures, more oil is available to be spun off the fried food because of the viscosity of the oil and because the food, in a heated state, is more able to shed the oil in and on it.

In accordance with another embodiment of the invention, spinning section 30 is operable to remove excess oil from the surface of the fried food at an elevated temperature. In such an embodiment, basket 240 may be a food spinner wherein the fried food is spun to remove the excess oil. In other embodiments, basket 240 is a centrifugal oil removal device, because the rotation of basket 240 aids in removing oil from the fried food. Spinning section 230 is proximate oil section 220 within frying vessel 214, and is disposed between oil section 220 and top cover 216. After food has been cooked in oil section 220, basket 240 is moved into spinning section 230 to facilitate removing excess oil from the cooked food. As the oil is removed from the food, the removed oil returns to oil section 220 for further use in frying, for removal from cooking device 210 and/or for filtering in order to reclaim the used oil.

According to other embodiments of the invention, with reference to FIGS. 6A - 6C, 7A, 7B, 8 and 9, basket 640, 740, 840, 940 may be configured to reside within a basket well 642, 742, 842, 942. The basket well is configured to provide support to the basket and the food, and to allow the basket to be rotated to facilitate the removal of the oil from the fried food. For example, the basket well may comprise a shape similar to that of the basket so that the basket nests within the basket well. In certain embodiments, the basket well may comprise bottom members 643, 743, 843, 943 and side members 644, 744, 844, 944, and in other embodiments, the basket well may comprise only side members.

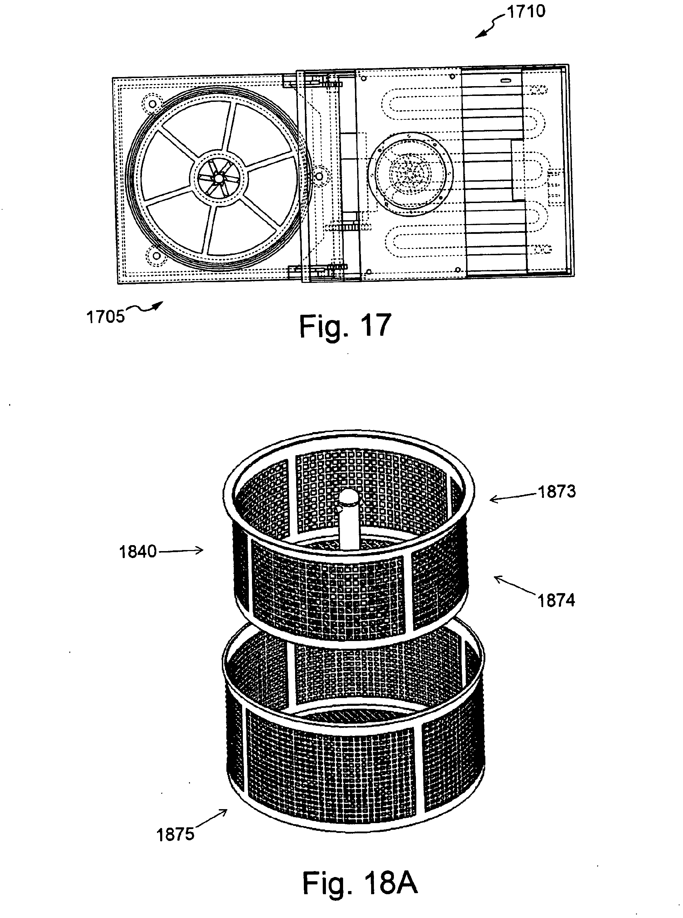

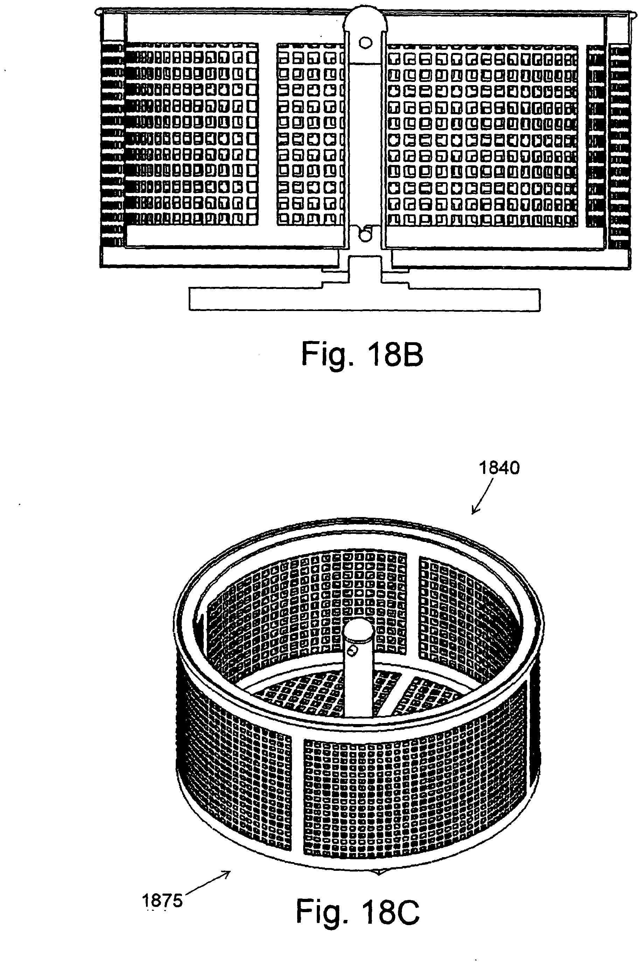

The basket well may further comprise a particle basket that is configured to catch food residue that might be removed from the fried food product during the spinning stage. For example, with reference to FIGS. 18A-18D, various basket configurations comprise baskets with different mesh sizes. Basket 1840 may comprise a fine mesh portion 1873 and a coarse mesh portion 1874. These various mesh portions may allow basket 1840 to hold the food being cooked, they may allow the cooking liquid to cook the food, and they may allow certain food residue to remain in basket 1840 while other food residue is removed. Basket 1840 may further be configured to fit within a particle basket 1875. Particle basket 1875 may be configured to prevent certain food residue from remaining in the cooking liquid after basket 1840 is removed from the cooking liquid. Particle basket 1875 may comprise a mesh that is finer than the mesh in coarse mesh portion 1874 so that some food residue that does not remain in basket 1840 may be captured in particle basket 1875. In various embodiments, basket 1840 may be removed from the cooking device without removing particle basket 1875. Particle basket 1875 may also be removable from the cooking device in order to facilitate cleaning food particles out of particle basket 1875.

In accordance with various embodiments, the food basket and/or particle basket may comprise various mesh sizes. For example, the bottom of the basket may comprise a finer mesh than the sides of the basket to facilitate preventing food particles from leaving the bottom of the basket. The top edge of the basket may be a finer mesh to aid in preventing food particles from drifting out of the basket when it is lowered into the cooking liquid.

In other embodiments, the basket well may be surrounded by a solid wall concentric with the basket well, wherein the solid wall is configured to redirect oil spun off of the cooked food so that the oil returns to the oil section. Such a configuration may also protect sensitive components of the cooking device from the hot oil. In still other embodiments, the cooking device may not comprise a food basket; rather, the mesh basket and/or other screen-type material or structure may be part of the basket well such that the basket wall may be configured to hold the food to be cooked.

According to yet other embodiments, the cooking basket may include a solid bottom covered in a non-stick material so that wet battered food products may be placed in the basket with a reduced chance that the food will stick or weld themselves to the bottom of the basket. For example, as wet battered products are placed in the basket, the batter may drip into holes in the basket, and this batter may solidify when cooked, thereby increasing the difficulty of removing the cooked food products from the basket. The solid bottom may facilitate easier removal of the cooked food from the basket. In accordance with other embodiments, various other portions of the basket may be made of non-stick material to facilitate easier removal of the cooked food from the basket.

In various embodiments, the basket well may comprise steel, stainless steel, ceramic material, composite materials, metals, and combinations thereof. In other embodiments, the basket well may comprise any material and any configuration capable of providing support to the basket and allowing the basket to be rotated to facilitate the removal of oil from the fried food.

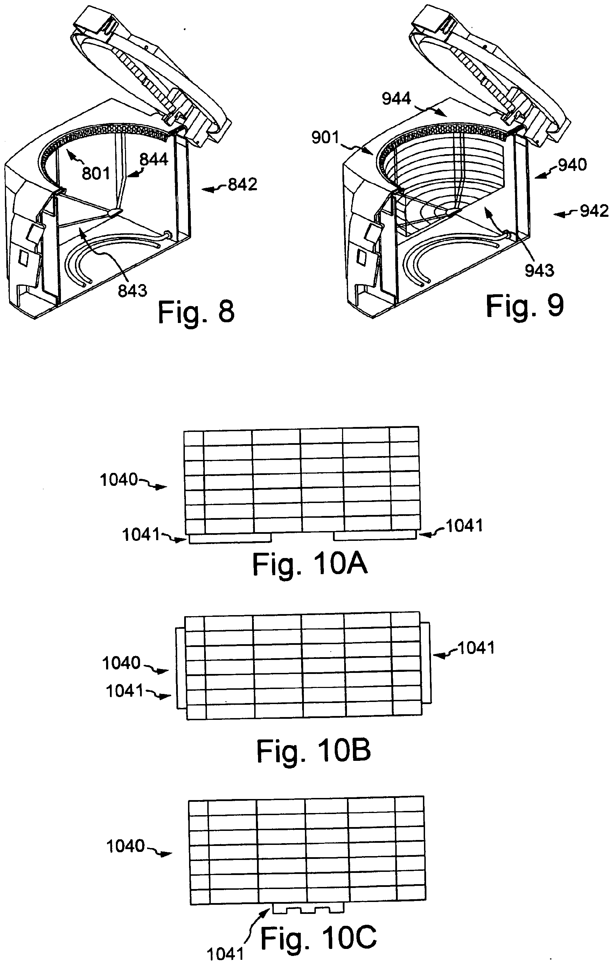

In a further embodiment of the invention, and with reference to FIGS. 9 and 10A - 10C, basket 940, 1040 may be configured to interface with basket-well 942 in order to facilitate the rotation of basket 940, 1040. Basket 1040 may comprise a key and/or keys 1041 that are configured to interface with bottom members 943 and/or side members 944 of basket well 942. For example, one embodiment is configured to allow keys 1041 to interface with bottom members 943 such that when basket well 942 rotates, bottom members 943 abut keys 1041 causing basket 940 to rotate. In another embodiment, keys 1041 are configured to interface with side members 944 such that when basket well 942 rotates, side members 944 abut keys 1041 causing basket 940 to rotate. In further embodiments, basket well 942 may comprise a female and/or male key and basket 940 may comprise a corresponding male and/or female key such that basket 940 is configured to rotate when basket well 942 rotates and when the corresponding male and female keys mate. While keys have been described, it should be understood that any other mechanism and/or structure configured to allow basket 940 to be removable from basket well 942 and to allow basket 940 to rotate when basket well 942 rotates are contemplated within the scope of the present invention. For example, keys 1041 may comprise fins, rods, pins, buttons, clips, snaps, fasteners, adhesives, and any other means now known or hereafter developed for removably allowing basket 940 to interface with basket well 942. However, in other embodiments, it may not be necessary for basket 940 to be removable from basket well 942. Moreover, the cooking device may not comprise basket 940, for example, where the basket well is configured to maintain the food within the basket well.

According to other embodiments of the invention, the basket well may reside within a frame structure disposed within the cooking device. As will be discussed further below, the frame structure may be configured to facilitate the rotation of the basket well and/or the translation of the basket well between the oil section and the spinning section. For example, the frame structure may comprise bearings, tracks, guide shafts, gears, belts, and the like for facilitating movement of the basket well. In other embodiments, the frame structure provides support for the basket well and the basket, such that the frame structure is configured to reduce or more evenly distribute vibration in the cooking device during the oil removal process, particularly when the food may be in an unbalanced position in the food basket. The frame structure may comprise any material suitable for providing the support and reducing the vibration discussed above, and for containing the components necessary to facilitate such purposes.

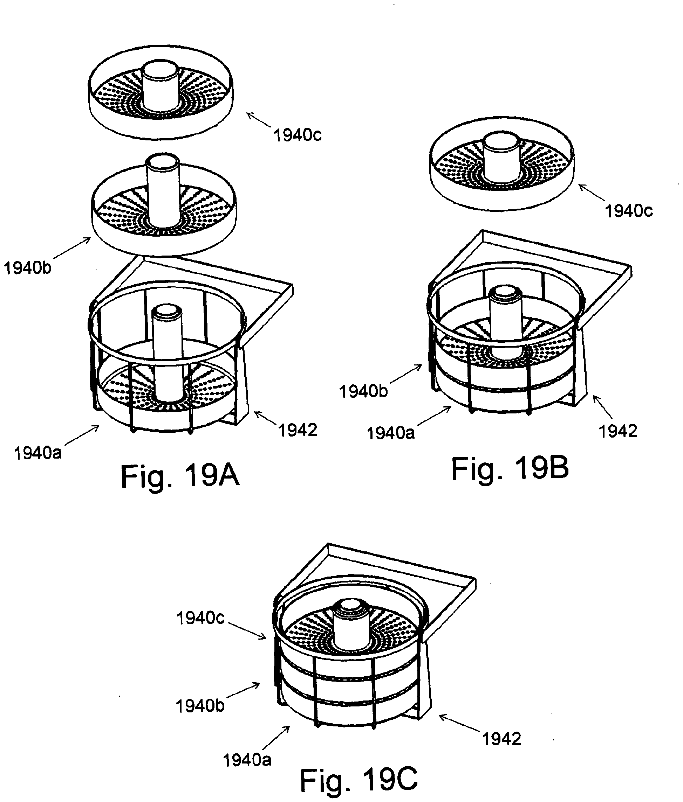

In accordance with other embodiments of the invention, the cooking basket may be configured to allow more than one type of food to be cooked at the same time. For example, with reference to FIGS. 19A-19C, a segmented and/or stackable basket is disclosed. Instead of a single basket, the cooking device may comprise a plurality of baskets 1940a, 1940b, 1940c. Basket portion 1940c may be configured to nest within basket well 1942, basket portion 1940b may be configured to nest within basket well 1942 on top of basket portion 1940c, and basket portion 1940a may be configured to nest within basket well 1942 on top of basket portion 1940b. Such a configuration facilitates cooking more than one type of food at the same time. Such a configuration may further facilitate cooking different types of foods for different lengths of time. For example, food that needs to be cooked for the least amount of time may be placed in basket portion 1940a so that it may be removed from the cooking device first.

It should be noted that although a substantially circular basket and/or circular basket portion has been disclosed, any basket shape may be employed with various embodiments of the present invention. For example, the basket and/or basket portion may be hexagonal, octagonal, triangular, and the like. Any shape may be employed that allows the cooking device to function according to the various methods and processes disclosed herein.

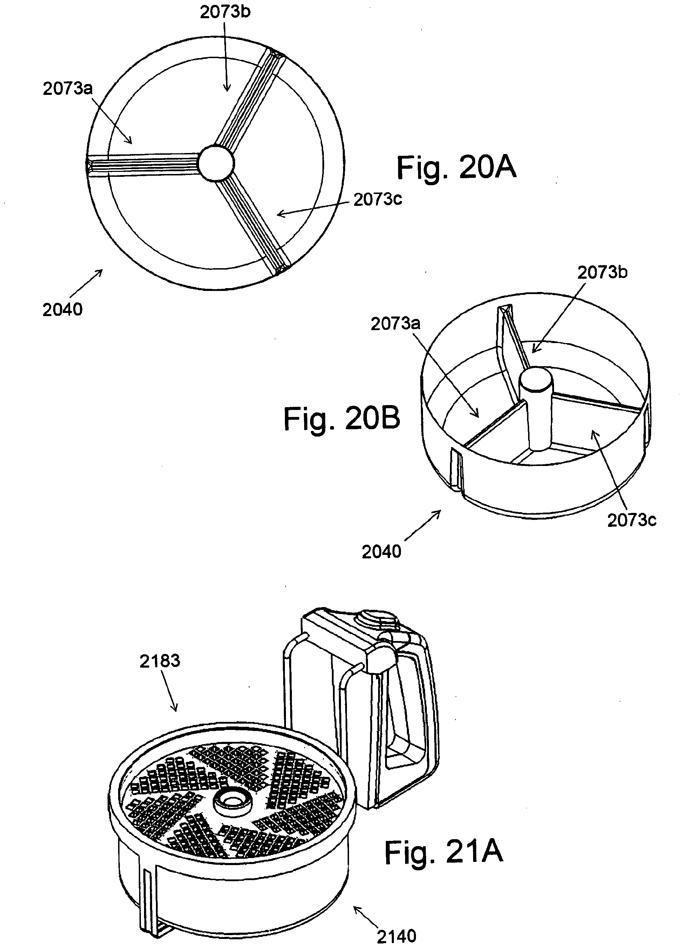

In another embodiment, as illustrated in FIGS. 20A-20B, basket 2040 may comprise a plurality of dividers 2073a-c. Dividers 2073a-c may be configured to allow different types of food to be cooked in each of the sections defined by dividers 2073a-c at the same time within basket 2040.

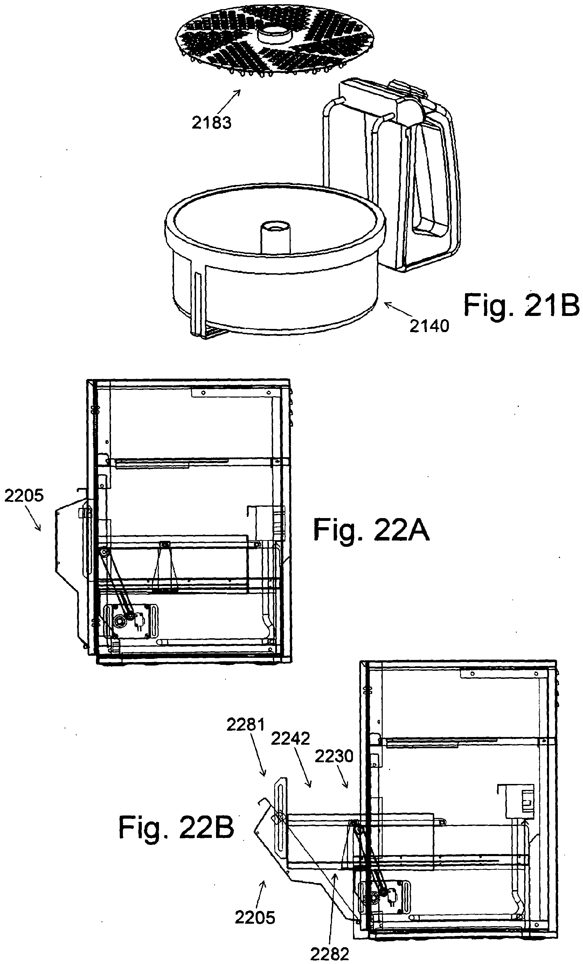

According to other embodiments, and with reference to FIGS. 21A-21B, the cooking device may comprise a submerser plate 2183 that is configured to facilitate maintaining the food within basket 2140. After food is lowered into basket 2140, submerser plate 2183 may be lowered over the food to maintain the food within basket 2140. For example, it may be desirable to keep the food completely submerged within the cooking liquid to facilitate more efficient and/or uniform cooking.

Further embodiments of the invention, with reference back to FIG. 1, provide a top cover 216 that is operable to maintain an elevated temperature within spinning section 230. Top cover 216 is proximate device housing 212, frying vessel 214, and spinning section 230. Top cover 216 is operable to separate the frying environment within cooking device 210 from the environment outside cooking device 210. Top cover 216 comprises a thermally insulating material that reduces temperature loss to the outside of cooking device 210 and that reduces the energy required to maintain cooking device 210 at a desirable operating temperature. The thermal insulating material also maintains the outside surface of top cover 216 at a temperature that is amenable to being touched by a user without injuring the user. Top cover 216 may further comprise a lip and/or edge that is configured to protrude into the cooking device to facilitate preventing cooking liquid from exiting the device. Top cover 216 may also comprise a shock mount 217 that is operative to reduce vibration, shaking, movement and the like and a pivot 218 which is operative to provide rotational movement of top cover 16. Top cover 16 facilitates the maintenance of a desirable temperature within the food that is cooked by cooking device 210 while oil is being removed from the cooked food. For example, top cover 16 is designed to allow basket 240 to rotate within spinning section 230 while top cover 216 remains closed. It is not necessary, according to various embodiments of the invention, to open top cover 216 between frying the food and removing the oil from the food. In some embodiments of the invention, top cover 216 comprises spin motor 260 to facilitate spinning of basket 240 to remove oil from the food. In various embodiments, spin motor 260 may be powered by batteries, direct current, alternating current, solar power, gasoline, and the like.

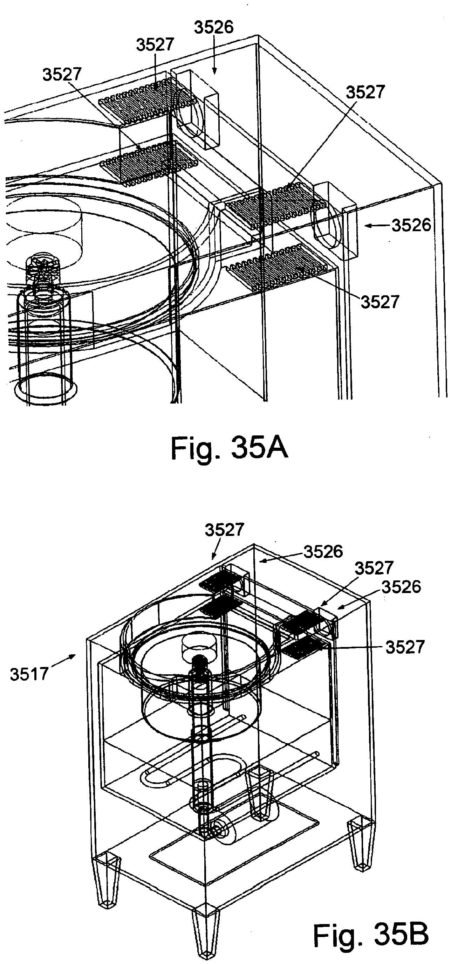

In some embodiments, the cooking device may comprise a hood. The hood may operate in conjunction with the top cover discussed above. The hood may be flush mounted and/or may rise above the cooking device to create additional space for spinning and convection cooking. The hood may also comprise a pressure relief system to facilitate venting the cooking device. The hood may further comprise a fan that is configured to maintain a desired temperature in the cooking section, and the fan may also facilitate moving air over the food to cook the food by convection. As with other aspects of the cooking device, the fan may be a variable speed fan that may be manually and/or automatically controlled to facilitate achieving the optimum outcome for the cooked food. The hood structure may be removable from the cooking device. For example, it may be hinged from the front and/or rear of the cooking device, or the hood may be entirely removable from the cooking device. In one embodiment, with reference to FIGS. 35A-35B, a hood 3517 may comprise a plurality of vents 3527 configured to vent the cooking space within the cooking device (where the cooking space comprises the spinning section and the cooking section). Hood 3517 may comprise a hollow portion, and a fan or fans 3526 may be configured to cause air to flow in the hollow portion. As air flows in the hollow portion, air from the cooking device is vented through hood 3517 to the surrounding environment.

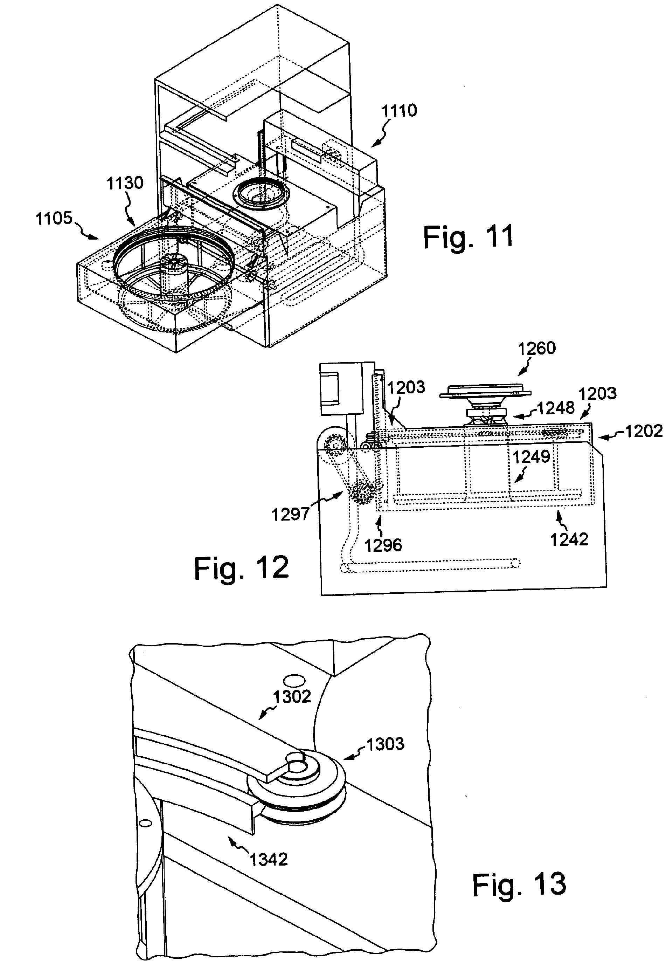

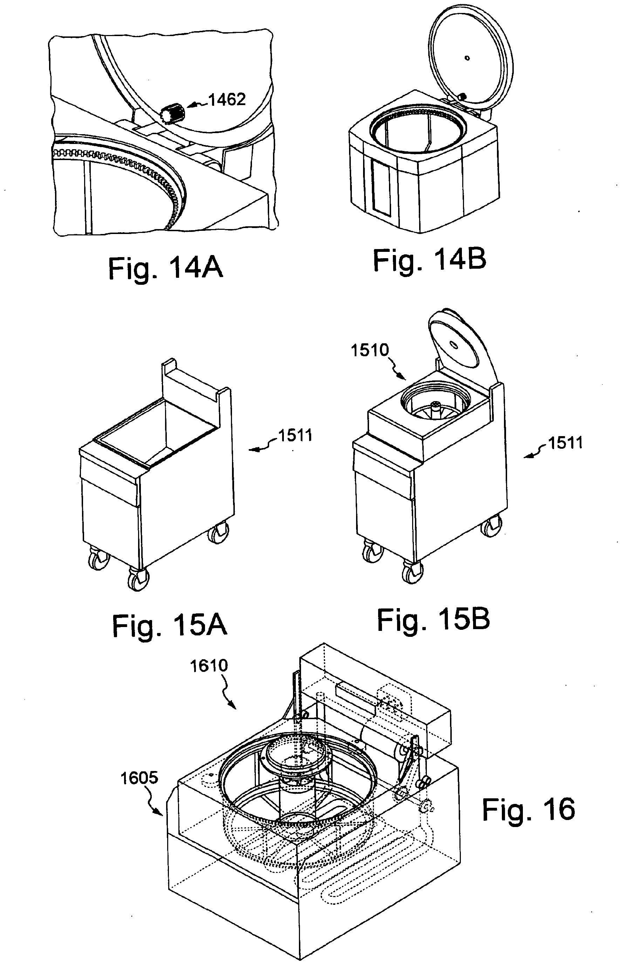

Other embodiments of the invention do not comprise top cover 16. Certain embodiments comprise a drawer 1105 configured to be slidably removable from cooking device 1110. For example, with reference to FIG. 11, drawer 1105 may be configured to comprise any of the components located in spinning section 1130. Drawer 1105 may also be configured to comprise any components utilized in the spinning of the oil from the fried food. In certain other embodiments, and as will be discussed below, drawer 1105 may be configured to allow the retrofitting of portions of the cooking device 1110, including but not limited to the portions of spinning section 1130, on to existing frying apparatuses. Drawer 1105 may be configured to comprise bearings to facilitate slidable movement of the drawer with respect to cooking device 1110. Cooking device 1110 may also comprise motors and/or gears to facilitate the automated movement of drawer 1105. In other embodiments, drawer 1105 may be manually slidable with respect to cooking device 1110. In further embodiments, drawer 1105 may contain the frame structure discussed above such that the components configured to allow movement of the basket well and the basket are removable from the cooking device when drawer 1105 is opened. Still other embodiments of the drawer are illustrated in FIGS. 16 - 17.

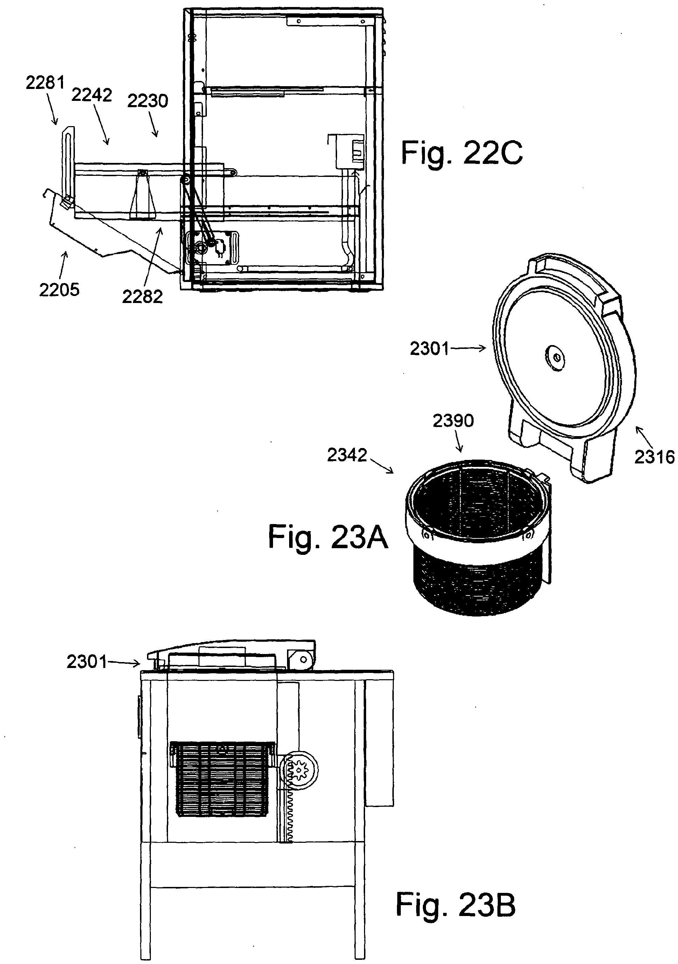

With reference to FIGS. 22A-22C, a further configuration for the cooking device is disclosed. The cooking device may comprise a hinged door 2205 that is configured to facilitate removing various components from the cooking device that are located in spinning section 2230 when door 2205 is opened. Basket well 2242, the cooking basket, and various associated components may be slidably mounted on vertical rails 2281 and horizontal rails 2282, such that when door 2205 is opened, basket well 2242 and associated components are removed from the cooking device. Gears, bearings, and or other components may be used to facilitate moving the components outside of the cooking device. Door 2205 may be automated in conjunction with a motor to facilitate automatic opening of door 2205 when the cooking process is finished.

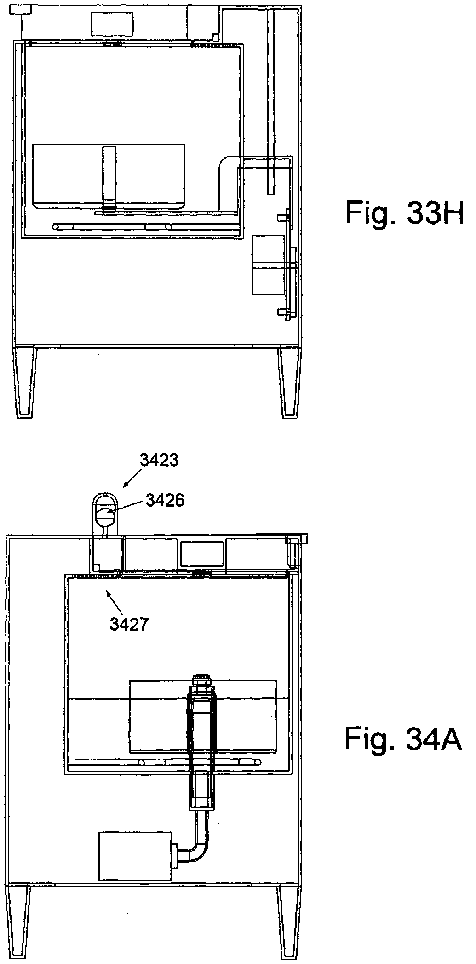

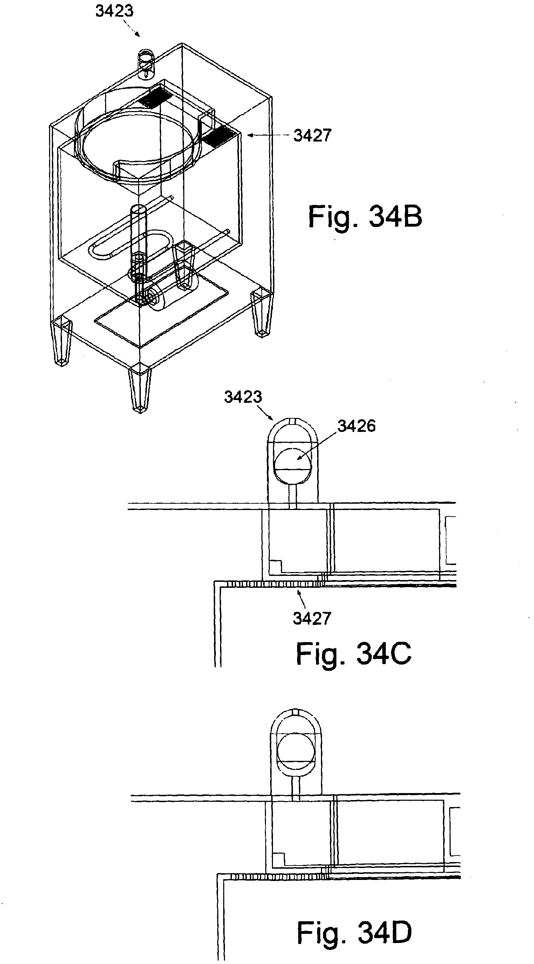

In some embodiments of the invention that comprise top cover 216, pressure may build within cooking device 210 during the frying and spinning processes. In order to relieve and/or release this pressure from cooking device 210, some embodiments comprise a mechanism to relieve the pressure, such as a pressure-relief valve 799 illustrated in FIG. 7C. Pressure-relief valve 799 is configured to substantially equalize the pressure between an internal portion of cooking device 210 and an external portion of cooking device 210. Any mechanism configured to substantially equalize the pressure may be used without departing from the scope of the present invention. Pressure relief valve 799 may be located anywhere on and/or in cooking device 210 that is configured to facilitate the substantial equalization of the pressure between the internal portion and the external portion. In another embodiment, and with reference to FIGS. 34A-34D, a cooking device may comprise a pressure release valve 3423 that comprises a ball 3426, such as a heavy ball bearing. Ball 3426 is configured to move up in valve 3423 in order to release pressure in the cooking device, in response to a sufficient pressure being exerted on ball 3426. The cooking device may comprise a vent 3427 that is configured to allow air from inside the cooking device to be routed to valve 3423 in order to facilitate releasing pressure from valve 3423.

Various components are operable to move basket 240 during the food frying and oil removal processes. In an embodiment of the invention, the motion of basket 240 within frying vessel 214 is controlled by linear motor 250, spin motor 260, guide shaft 290, basket support 245, basket coupling 246, basket lift mechanism 247, and controller 255. Basket 240 is coupled to basket support 45 which is coupled to basket lift mechanism 247. Basket lift mechanism 247 is coupled to linear motor 250, and linear motor 250 acts on lift mechanism 247 to facilitate moving basket 240 between oil section 220 and spinning section 230. For example, where oil section 220 is vertically-oriented with respect to spinning section 230, linear motor 250 vertically translates basket 240 between the two sections. In certain embodiments of the invention, linear motor 250 comprises a helical drive. In further embodiments, linear motor 250 comprises a direct drive motor, such that pulleys, belts, chains, and the like are not necessary for the motor to drive basket 240. In other embodiments, linear motor 250 comprises any device capable of automatically moving basket 240 between oil section 220 and spinning section 230. In yet other embodiments, basket 240 may be manually moved between the sections. In various embodiments, linear motor 250 may be powered by batteries, direct current, alternating current, solar power, gasoline, and the like.

With continued reference to FIG. 1, basket lift mechanism 247 sealably nests within basket support 245 so as to prevent cooking oil 222 from exiting oil section 220 and contaminating the basket lift mechanism. Basket 240 is attached to and receives basket support 245, thereby allowing linear motor 250 to move basket 240 between oil section 220 and spinning section 230. In accordance with various embodiments of the invention, basket 40 is cylindrical in shape, and basket support 245 is located centrally within basket 240. Guide shaft 290 runs centrally through basket 240, basket support 245, and basket lift mechanism 247 to facilitate the vertical movement of basket 240 between oil section 220 and spinning section 230.

Other embodiments of the present invention comprise a basket coupling 426 which interfaces with basket support 245 and spin motor 260 in order to allow spin motor 260 to rotate basket 240 about the basket's vertical axis. Basket coupling 246 interfaces with guide shaft 290, which causes basket support 245 to appropriately contact basket coupling 246 in order to allow spin motor 260 to rotate basket 240. In certain embodiments of the invention, spin motor 260 is a pancake-type motor. In other embodiments of the invention, spin motor 260 is any device capable of automatically rotating basket 240 within spinning section 230. In further embodiments, basket 240 may be manually rotated.

In other embodiments of the invention, other motor configurations are contemplated. With reference to FIG. 2, another embodiment of the present invention is shown. In this embodiment, spin motor 260 is not present within top cover 16; rather, rotational motor 265 is disposed within basket support 245 and/or basket lift mechanism 247. In such an embodiment, basket 240 is capable of rotating both in spinning section 230 and in oil section 220. Spinning may occur in both sections during the same frying process without removing top cover 216.

In still other embodiments of the invention, further motor configurations are contemplated. For example, with reference to FIGS. 6A - 6C and 14, where the basket is configured to nest within basket well 642, a circumferential motor 662 may be configured to interface with basket well 642 in order to rotate basket well 642. With reference also to FIGS. 8 and 9, the basket well may comprise a track 801, 901 comprising a plurality of teeth disposed around the circumference of the basket well. Track 801, 901 may be thus configured to interface with a spinning gear 604 of circumferential motor 662, such that motor 662 causes basket well 642 to rotate when spinning gear 604 rotates in conjunction with track 801, 901. In some embodiments, spinning gear 604 may be configured to have a diameter that is substantially smaller than the diameter of basket well 642. With spinning gear 604 located at the circumference of basket well 642, the space available for cooking food in basket well 642 increases, for example, because neither a drive shaft nor another component is located in the center of the basket well. Basket well 642 may further be configured to rotate in conjunction with bearings, gears, tracks and the like located substantially at the circumference of basket well 642. Such rotation will be discussed further below. Such embodiments do not require a center shaft (such as shaft 90), thereby increasing the room available for frying food in the frying basket.

In a further embodiment, and with reference to FIG. 12, cooking device 1210 may comprise spinning motor 1260 configured to interface with center portion 1249 of basket well 1242 via a basket well gear such as well coupling 1248. Spinning motor 1260 may comprise a spinning gear configured to interface with well coupling 1248. In some embodiments, the spinning gear and the well coupling may comprise substantially the same diameter, and the well coupling and spinning gear may be configured to share an axis of rotation that is substantially the same as the axis of rotation for the basket well. As such, spinning motor 1260 is configured to cause basket well 1242 to rotate about an axis centrally located within basket well 1242 and center portion 1249; however, unlike the embodiment illustrated in FIG. 1, basket well 1242 does not depend, for rotation, on a shaft (like shaft 90) that shares the same axis as the axis about which basket well 1242 rotates. Rather, with reference also to FIGS. 6A - 6C, basket well 642 may be configured to rotate in conjunction with bearings, gears, tracks and the like located substantially at the circumference of basket well 642, 1242.

It should be noted that in certain embodiments as discussed above, it may not be necessary to employ a top cover or any other cover to enclose the cooking device. The centrifugal force developed by spinning the basket and/or basket well may be sufficient to maintain the food and oil within the basket such that a cover is not needed.

According to other embodiments, with continued reference to FIGS. 6A - 6C, basket well 642 may be secured to a frame structure 602. Frame structure 602 may be configured to comprise a number of the components disclosed herein as part of the cooking device. For example, with reference also to FIGS. 12 and 13, frame structure 1202, 1302 may comprise a plurality of bearings 1203, 1303. The bearings may comprise grooves that are configured to interface with a bearing surface on basket well 642, 1242, 1342 and to allow rotation of the basket well with respect to the frame structure and the cooking device. In some embodiments, each of the bearings 1203, 1303 may individually comprise a plurality of bearings. For example, bearings 1203, 1303 may each be configured to comprise two horizontally-oriented bearings that abut each other creating a v-shape that receives an inversely-shaped portion of the bearing surface on the basket well. In other embodiments, the portion of the bearing surface on the basket well may be v-shaped, and the plurality of bearings may be configured to receive the v-shaped portion of the bearing surface.

It should be understood that these bearing configurations are only exemplary, and any other rotational mechanism configured to allow rotation of the basket well within the frame structure, including where the rotational mechanism is located substantially at the circumference of the basket well, is contemplated within the scope of the present invention. For example, the frame structure may comprise a male track configured to interface with a female track located on the basket well. In other embodiments, the track on the basket well may be a horizontally oriented track, and the lower side of the horizontally oriented track may be configured to interface with roller bearings located on the frame structure. The frame structure may be movable with, or comprise a portion that is movable with the basket well, such that the basket well and the mechanism for allowing the basket well to rotate may be movable together between the spinning section and the oil section.

Various embodiments configured to allow rotation of the basket well via a circumferentially-located track may be configured to reduce vibration compared to cooking devices that comprise a centrally-located (with respect to the axis of rotation of the frying basket) drive shaft and/or drive guide. Where a central drive shaft is employed and the basket is rotated, vibration may be induced in part due to the lack of support at the circumference of the basket. This condition may be exacerbated if the food basket is out of balance because of the position of the food. In embodiments of the invention, for example as illustrated in FIGS. 6A - 9, where a circumferentially located track interfaces with bearings in the frame structure, support is provided at the circumference of the basket. Therefore, when the basket is rotated, vibration is reduced. Such configurations may allow the cooking device of the present invention to be produced in a counter-top version, for example as illustrated in FIGS. 7A - 7C. These counter-top versions are configured to provide quieter operation that may be desirable in a home kitchen environment.

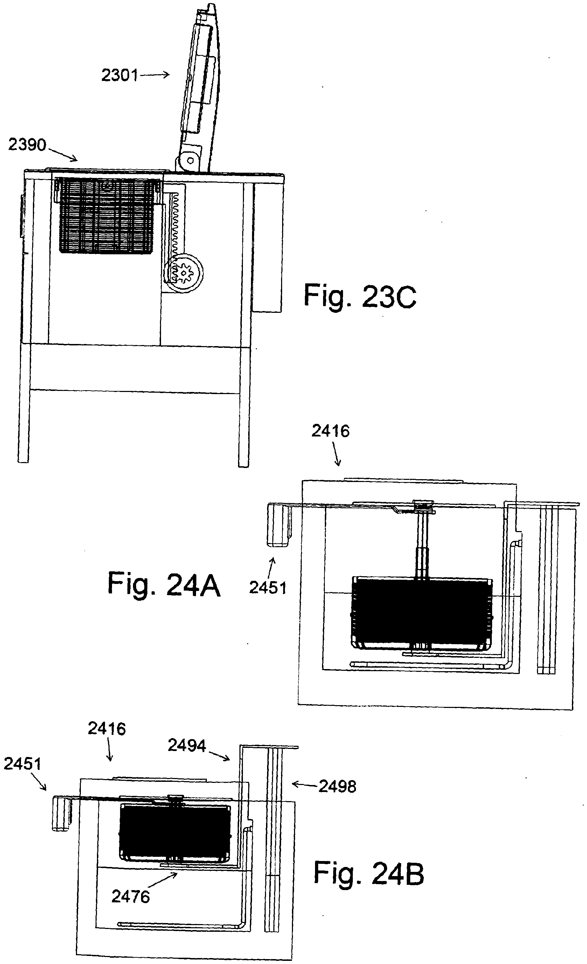

In accordance with another embodiment, and with reference to FIGS. 23A-23C, cover 2316 may comprise a rotating disk 2301 configured to interface with basket well 2342. Rotating disk 2301 may comprise a diameter substantially equal to the inside diameter of basket well 2342. Rotating disk 2301 may be configured to fit within basket well 2342 such that basket well 2342 may rotate when rotating disk 2301 rotates. Bearings and other structures and/or devices as disclosed herein with respect to the basket well may be used to facilitate rotating basket well 2342. For example, rotating disk 2301 may comprise a gear that mates with a corresponding gear on basket well 2342. Rotating disk 2301 may also be configured to couple with basket well 2342 in a manner that causes a friction-based fit between basket well 2342 and rotating disk 2301, such as where basket well 2342 and/or rotating disk 2301 comprise a gasket. A motor may be disposed within cover 2316 to facilitate rotation of rotating disk 2301. Such a configuration may not require a center shaft to rotate basket well 2342. A center shaft 2390 may still, however, be present to facilitate positioning a cooking basket within basket well 2342. In other embodiments, rotating disk 2301 may be configured to interface directly with the cooking basket.

In embodiments comprising the frame structure, various mechanisms may be employed to facilitate the raising and lowering of the basket well. For example, with reference again to FIGS. 6A - 6C, guide shafts 691, may be configured to interface with frame structure 602 in order to facilitate the raising and lowering of the basket. Guide shafts 691 may be configured to pass through the centers of bearings 1203, 1303, and or guide shafts 691 may be configured to be secured to frame structure 602 without passing through the bearings.

In other embodiments, a slider track 692 may be located on a portion of frame structure 602 that is movable between the oil section and the spinning section together with basket well 642. A slider 693 may be positionable within slider track 692 and may be rotatably attached to arm 694, such that when arm 694 rotates about fixed point 695, slider 693 moves horizontally within slider track 692, and slider track 692 and basket well 642 move vertically between the spinning section and the oil section. A motor may be employed at fixed point 695 to facilitate the automated movement of the basket well between the oil section and the spinning section. In other embodiments, arm 694 may be manually movable such that basket well 692 is manually movable between the oil and spinning sections.

According to still other embodiments, and with reference to FIG. 12, basket well 1242 may be movable between the oil and spinning sections by operation of a vertical gear 1296. Vertical gear 1296 may be secured to basket well 1242 or to any other component configured to facilitate the lowering of basket well 1242 out of the spinning section. Vertical gear 1296 may be configured to interface with a motor-gear structure 1297, such that when motor-gear structure 1297 rotates, vertical gear 1296 moves vertically, causing basket well 1242 to move between the oil and spinning sections. For example, motor-gear structure 1297 may comprise a rotary motor that is configured to rotate a gear having a parallel axis of rotation to that of the rotary motor, but that is displaced from the rotary motor. The rotary motor may be configured to rotate the gear by means of a drive belt and/or drive chain. In other embodiments, the rotary motor may comprise a rotary gear or plurality of rotary gears configured to interface directly with vertical gear 1296. As the gear rotates, it causes vertical gear 1296 to move up and down, thereby causing frame structure 1202 and basket well 1242 to also move up and down. In such an embodiment, guide shafts 691 may or may not be employed to guide basket well 1242 between the oil and spinning sections.

In further embodiments, any mechanism may be used to vertically translate the frame structure between the oil and spinning sections (and vice versa) that is now known or hereafter developed. For example, instead of motor-gear structure 1297, a direct drive motor may be employed to interface directly and/or via a gear or series of gears with vertical gear 1296. In still other embodiments, a lead screw may be configured to interface with the bottom of the basket well in order to facilitate movement of the basket well between the oil and spinning sections. In further embodiments, various belts, chains, pulleys, motors, cranks, cams, and the like may be employed to provide the desired movement of the basket well.

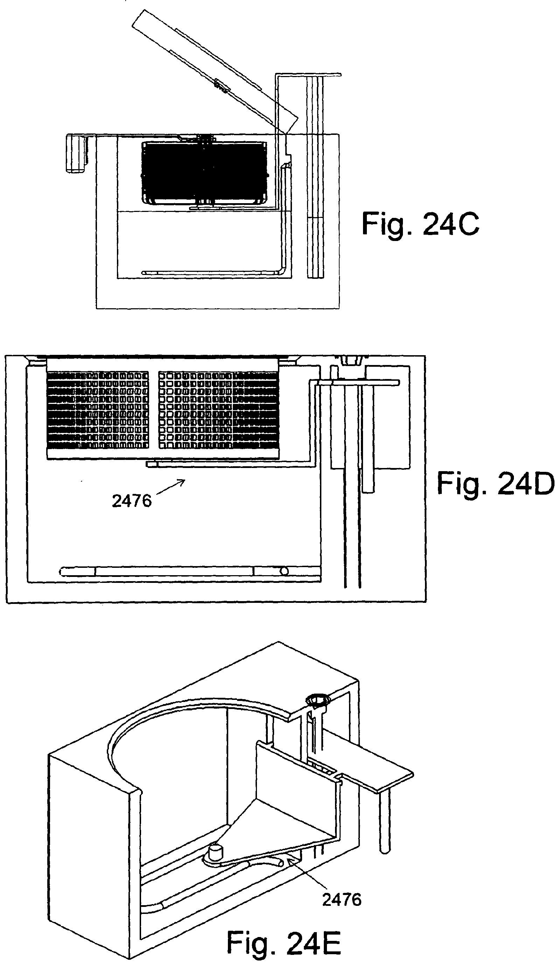

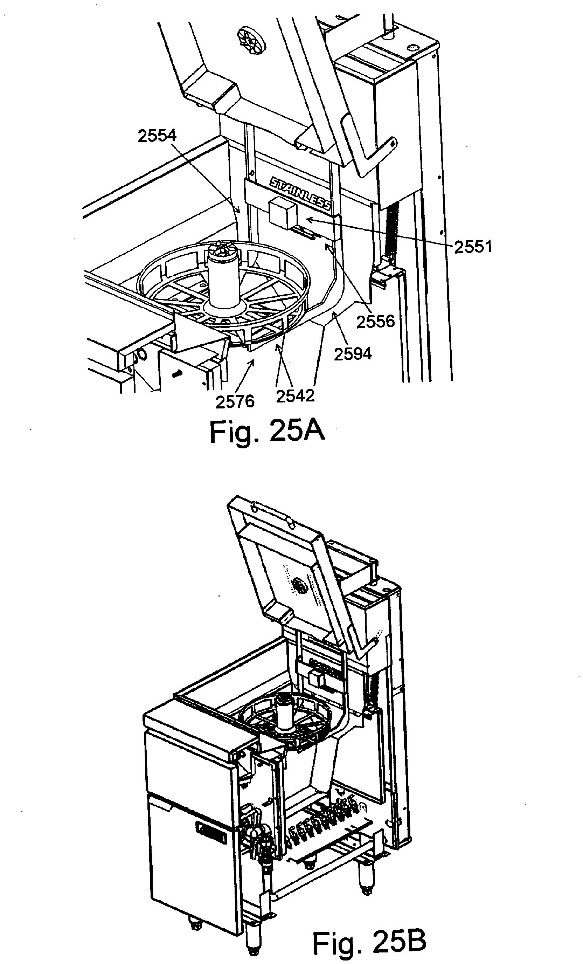

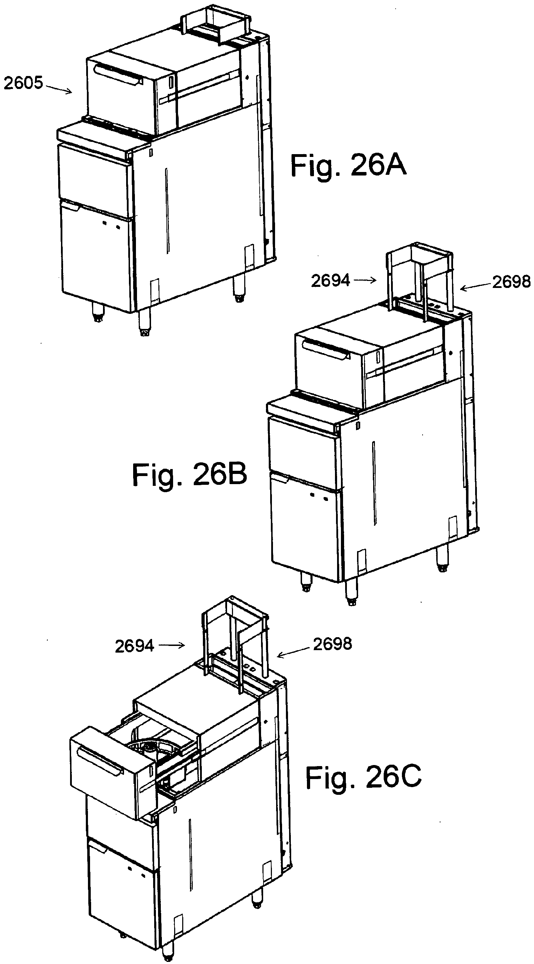

In accordance with further embodiments, a lifting plate may be utilized to facilitate moving the basket and/or basket well between the cooking and spinning sections. With reference to FIGS. 24A-24E, basket well 2442 may be operatively coupled to lifting plate 2476. For example, basket well 2442 may be configured to interface with a bearing centrally located in lifting plate 2476 (see, e.g., FIG. 24E) with respect to the axis of rotation of basket well 2442. The bearing may further be configured to maintain basket well 2442 in a given position during rotation of the basket well. Lifting plate 2476 may be coupled to lifting arms 2494 that are configured to raise and lower lifting plate 2479 (see also, for example, FIGS. 25 and 26A-26C). As lifting arms 2494 move vertically, lifting plate 2476 also moves vertically. For example, lifting arms 2494 may be coupled to drive arms 2498. Various mechanisms exist for causing drive arms 2498 to move vertically, and all such mechanisms are contemplated within the scope of the present disclosure. For example, drive arms 2498 may be coupled to a linking member that is in turn coupled to a rotary motor. As the rotary motor turns, the linking member rotates and causes drive arms 2498 to move vertically. Drive arms 2498 may also be coupled to a direct drive motor configured to move drive arms 2498 vertically. It should be noted that lifting plate 2476 may be used in other configurations for raising and lowering basket well 2442 without lifting arms 2494. For example, FIGS. 24D-24E disclose a lead screw mechanism for raising and lowering the basket well.

Lifting arms 2494, according to various embodiments, may facilitate stabilization and reduced vibration of the cooking device. For example, lifting arms 2494 may contact the cooking device at various points, and a bearing, guide, wheel or the like may be used to prevent horizontal and/or sideward movement. A track may further be utilized to allow basket well 2442 and lifting arms 2494 to move vertically, but to substantially prevent other motion. Such a track may be removably mounted to the cooking device. Reducing horizontal movement of basket well 2442 facilitates reduced vibration of the cooking device when the basket well and/or basket is spinning.

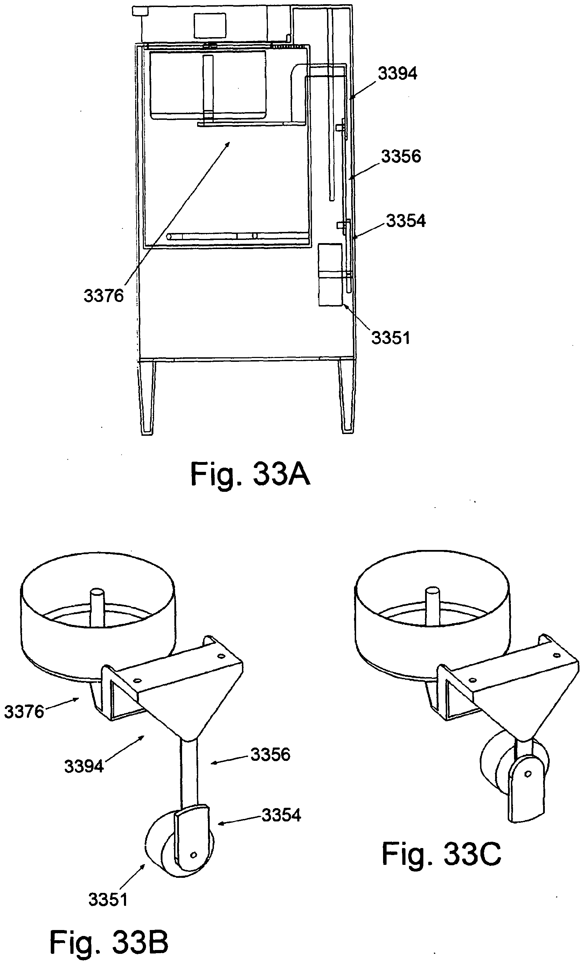

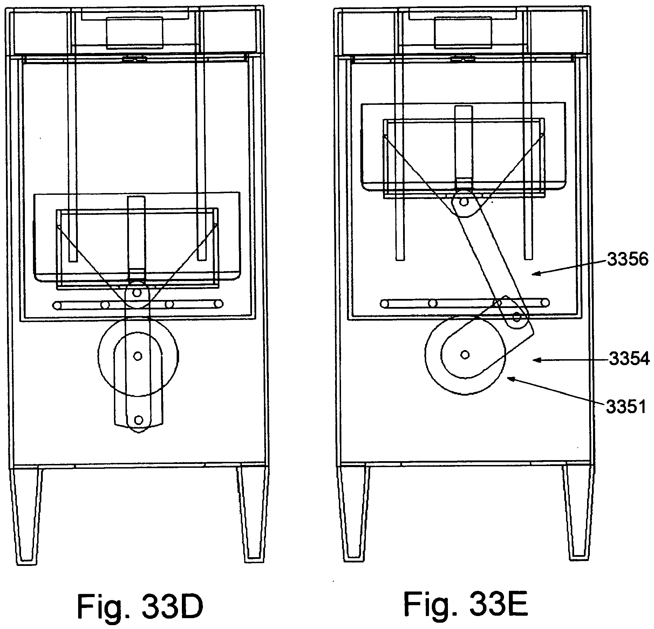

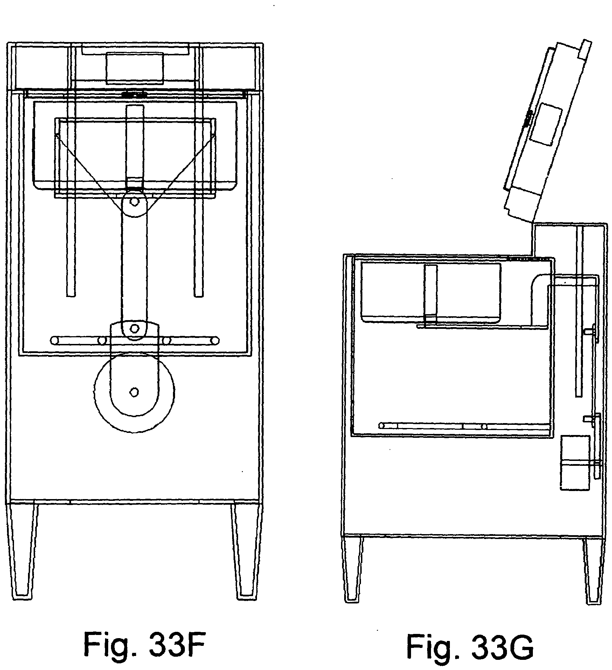

With reference to FIGS. 33A-33H, another type of lifting mechanism according to an embodiment of the present invention comprises a lifting plate 3376 that may be secured to a lifting bracket 3394. Lifting bracket 3394 may be rotatably attached to a first linking member 3356. First linking member may be rotatably attached to second linking member 3354, which may be rotatably attached to a rotary motor 3351. Rotary motor 3351 may be located away from the cooking liquid in order to facilitate isolating the motor from the cooking liquid. Rotary motor 3351 may be configured to rotate the second linking member, which in turn may cause the first linking member to rotate. As the first and second linking members rotate, lifting bracket 3394 and lifting plate 3376 may move up or down, depending on the relative rotation of the first and second linking members. Other motors may be used to cause lifting bracket 3394 to move upward. For example, a linear motor may interface with lifting bracket 3394 to facilitate vertical movement of the basket. In other embodiments, a screw-drive motor may also facilitate the vertical movement of the lifting bracket. In still other embodiments, any motor may be used that facilitates the vertical movement of the lifting bracket. In some embodiments, the cooking device may contain two baskets and/or basket wells that are each individually hung on lifting brackets that are individually movable into and out of the cooking liquid.

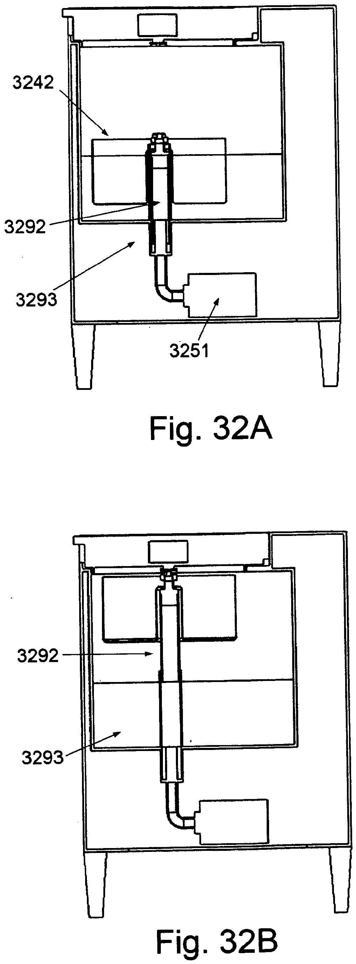

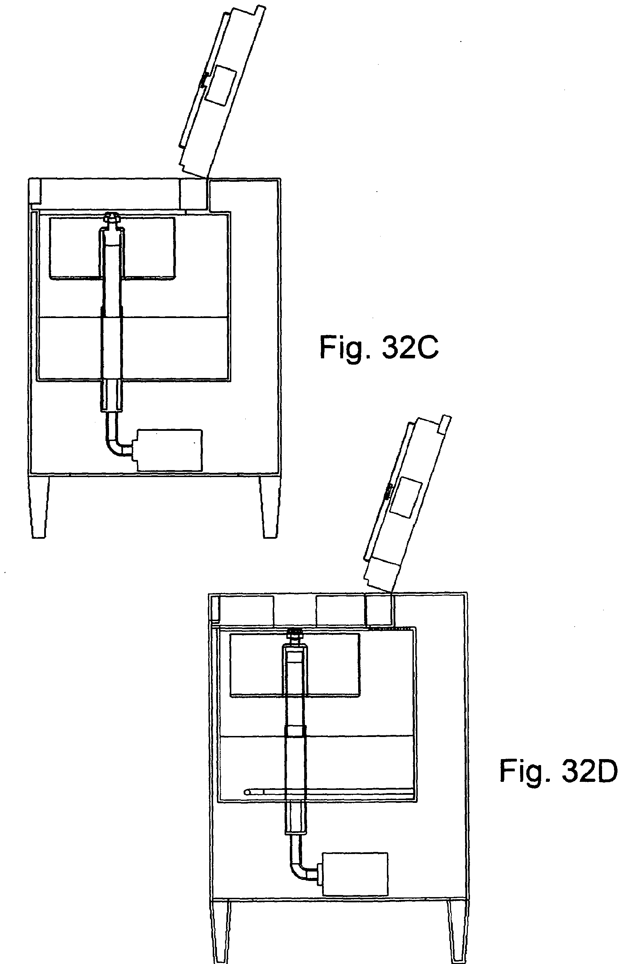

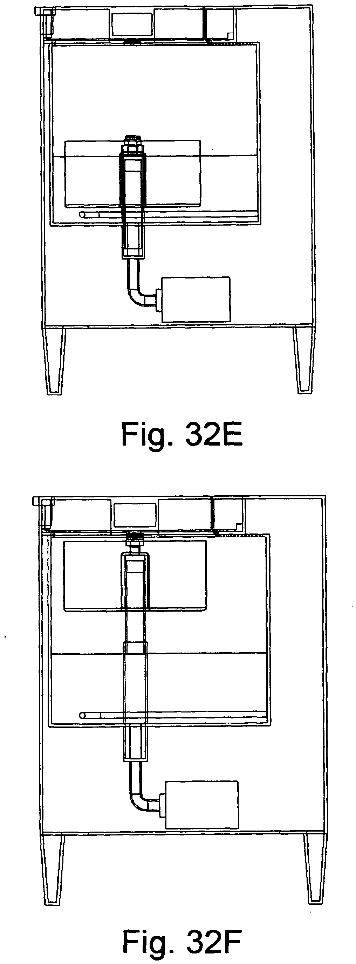

In accordance with another embodiment, and with reference to FIGS. 32A-32F, the cooking device may comprise a pressure-driven basket lifting mechanism. The cooking device may comprise a piston 3292 that is attached to the basket 3240 and/or the basket well 3242 at one end and that is disposed within a cylinder 3293 at the other end, such that when the piston 3292 moves within the cylinder 3293, the basket is moved from the cooking section to the spinning section. The cylinder 3293 may be pressurized by a pneumatic pump or pressure device 3251.

In other embodiments, where a pneumatic pump may not be present, the cylinder may be configured to be pressurized to a pressure equal to or higher than the pressure within the cooking device when the basket is in the cooking section of cooking device, thereby maintaining the basket in the cooking section. To cause the basket to move from the cooking section to the spinning section, pressure may be released from the cylinder, resulting in a pressure in the cylinder that is lower than the pressure in the cooking device. For example, where the cooking device contains a pressure that is greater than atmospheric temperature (such a where the cooking device is a pressure cooker), the cylinder may comprise a port that facilitates equalization of the pressure in the cylinder and the cooking device. To raise the basket, the port in the cylinder may be closed, and a pressure relief valve may be configured to release pressure from the cylinder only, and not the cooking device. The pressure is then greater in the cooking device than in the cylinder, the piston moves in the cylinder, and the basket is moved from the cooking section to the spinning section.

In accordance with another embodiment, the basket may be moved from the cooking section to the spinning section via a mounting plate that is attached to a jacking screw. The mounting plate may be substantially tangent to one vertical side of the basket and/or the basket well, and the mounting plate may be configured to interface with the jacking screw. In one embodiment, the jacking screw may be located above the basket and/or external to the fryer device. A rotational motor may be configured to rotate a drive shaft that in turn rotates the jacking screw, thereby causing the mounting plate and the basket to be removed from the cooking section. In connection with a mounting plate, a pulley system or other motor configuration may be used to facilitate removal of the basket from the cooking section.

Another embodiment of the present invention comprises a basket that may be held by a basket frame biased toward a position that maintains the basket out of the cooking section. The basket frame may be biased by means of a spring. To facilitate cooking the food in the basket, the basket frame may be forced down into the cooking oil by exerting a force downward. The basket frame may then be held in place by means of a holding rod or other mechanism for holding the basket frame in place. After the food is cooked, the holding rod may be released, and the springs may return the basket frame to its position above the cooking section (e.g., in the spinning section). A damper may be used to slow the speed at which the basket frame returns to its position above the cooking section.

In a further embodiment, a basket in the cooking device may be mounted on a rotatable panel that is movable between a plurality of positions. In one position, the panel may be positioned such that a guide attached to the basket and the panel is positioned under a door from a food reservoir, such that the reservoir may be opened, and the food may fall from the reservoir via the guide into the basket. The panel may then be rotated such that the basket is placed in a cooking section, thereby facilitating cooking the food in the basket. After cooking, the panel may then be rotated such that the basket is out of the cooking section, but the food remains in the basket, over the cooking section, so that the cooking liquid may be removed from the food (e.g., by spinning the basket according to various methods disclosed herein). After the cooking liquid has been removed sufficiently, the panel may be further rotated to result in discharge of the cooked food from the basket.

In a further embodiment, a lift mechanism may be mounted externally to a cooking device. The lift mechanism may include a motor that is configured to pull a pulley cable downward vertically toward the lift mechanism. The pulley cable may be routed over the pulley and connected to a basket via a mounting bracket and/or to a basket well in which the basket is disposed. As the lift mechanism pulls the pulley cable, the basket emerges from the cooking section of the cooking device.

In yet another embodiment, the basket and/or basket well may comprise a lift bar to facilitate lifting the basket out of the cooking liquid and/or removing the basket from the cooking device to discharge the cooked food from the basket. The cooking device may comprise a hook that is configured to interface with the lift bar, and the hook' may be actuated by a motor. For example, the hook may be attached to a flexible metal member that passes through a groove in one wall of the cooking device. The groove and basket and/or basket well shapes are configured such that when the flexible metal member moves through the groove, the basket is raised from the cooking liquid and then tilted at an angle such that the cooked food is discharged from the basket. The motor may facilitate movement of the flexible member via a series of linkages, such that when the motor rotates, the linkages fold together and draw the flexible member through the groove toward the motor.

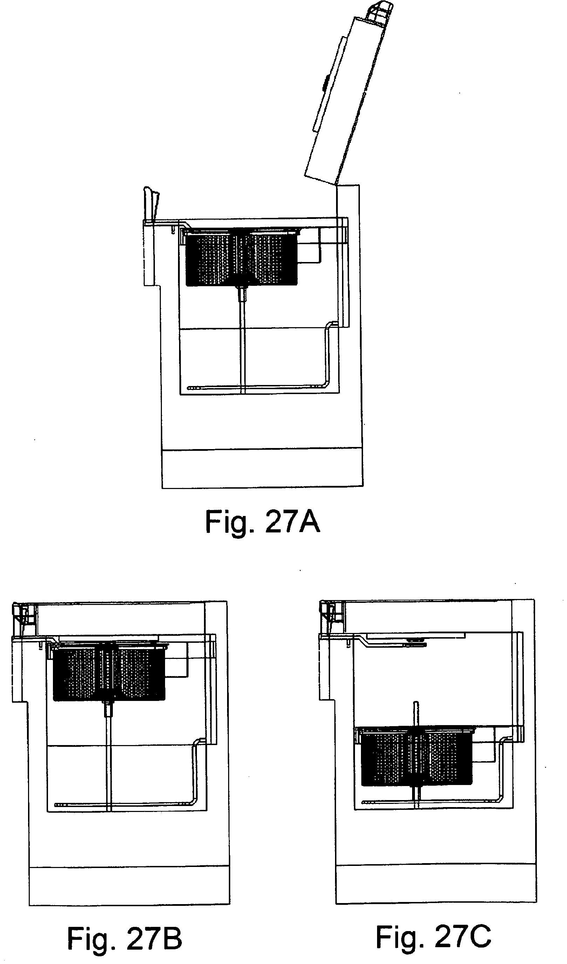

With reference to FIGS. 27A-27C, a further embodiment of the invention comprises a telescoping shaft 2790 configured to facilitate raising and lowering the cooking basket. In some embodiments, for example where the motor that rotates the basket is disposed in the cover of the cooking device, telescoping shaft 2790 may be configured to facilitate rotation and raising and lowering of the basket. Telescoping shaft may function in cooperation with a frame structure 2702 to facilitate raising and lowering of the basket and/or basket well.. For example, a lifting mechanism may be configured to vertically translate frame structure 2702, which may cause telescoping shaft 2790 to expand and/or collapse. Telescoping shaft 2790 may be configured to collapse as the basket is lowered into the cooking section. In other embodiments, and with momentary reference to FIGS. 24A-24C, telescoping shaft 2490 may be configured to collapse when the basket is moved into the spinning section. In such an embodiment, telescoping shaft 2490 may be configured to operate in conjunction with a lifting plate 2476 to facilitate raising and lowering of the basket and/or basket well.

In accordance with various embodiments, the basket may be configured to rotate about an axis defined by the telescoping shaft, and the telescoping shaft may be configured to reduce vibration of the spinning basket. In embodiment as illustrated in FIGS. 27A-27C, the basket and/or basket well may be configured to interface with a drive coupling 2748 when the basket is raised in the spinning section. The drive coupling may facilitate coupling the telescoping shaft, basket, and/or basket well to a motor disposed in the cover, and may thus facilitate rotation of the basket and/or basket well. In still other embodiments, the telescoping shaft may also function as the drive shaft for the cooking device. It should be understood that the telescoping shaft may be used in conjunction with various motor and/or cooking device configurations, such as those configurations disclosed herein.

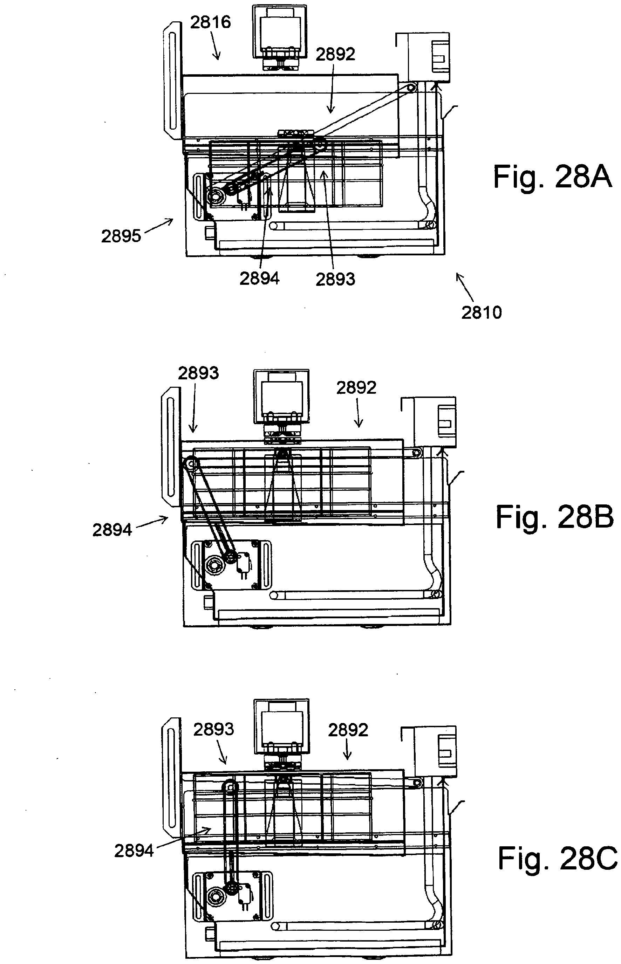

With reference to FIGS. 28A-28C, various embodiments comprise a cam configuration that facilitates raising and lowering the cooking basket. For example, a lifting bar 2892 may be rotatably attached at one end to cover 2816 of cooking device 2810. At another point along lifting bar 2892, the lifting bar may be rotatably attached at a point substantially at an axis of rotation of the cooking basket, and the lifting bar may be attached at this point on the basket well and/or on a corresponding frame structure. A cam 2894 may be operatively coupled to the lifting bar 2892 at one end and to a motor 2895 at the other end. A wheel, gear and/or bearing 2893 may facilitate the coupling of cam 2894 to lifting bar 2892. Motor 2895 may be a rotational motor configured to cause cam 2894 to move in a rotational manner. As illustrated in FIG. 28A, the cooking basket may be located in the cooking section of cooking device 2810. Motor 2895 may cause cam 2894 to move in a counter-clockwise direction, which in turn causes lifting bar 2892 to rotate in a clockwise direction, thereby causing the cooking basket to move out of the cooking section and into the spinning section. FIGS. 28B and 28C illustrate further positions of the cooking basket through a movement of cam 2894. Cam 2894 may then move in a clockwise direction in order to facilitate moving the cooking basket from the spinning section into the cooking section.

In accordance with various embodiments, and with reference back to FIGS. 24A-24C, cooking device 2410 may comprise a gripping handle 2451 configured to interface with basket 2440 and/or telescoping shaft 2490. Gripping handle 2451 may extend to the outside of cooking device 2410, such that a user may operate gripping handle 2451 during a cooking operation (e.g., when cover 2416 is closed). For example, with reference to FIG. 24A, where basket 2440 is in the cooking section, gripping handle 2451 may be configured to grip telescoping shaft 2490. In such a gripped position, gripping handle 2451 may be configured to cause basket 2440 to rotate and/or agitate. Such rotation and/or agitation, as discussed further below, may facilitate cooking and/or preventing sticking of the cooked food to basket 2440 and/or to other cooked food in basket 2440. With reference to FIG. 24C, where basket 2440 is in the spinning section, gripping handle 2451 may be configured to grip basket 2440 and/or telescoping shaft 2490. In such a configuration, gripping handle 2451 may be configured to facilitate agitation of basket 2440. In other embodiments, gripping handle 2451 may facilitate removing basket 2440 from cooking device 2410 in order to remove the cooked food from the cooking device. It should be noted that the gripping handle may be employed with various embodiments of the invention, and it may not be necessary to have a telescoping shaft in order to employ the gripping handle.

With reference back to FIG. 1, when starchy and/or battered foods are deep fried, they tend to stick together if they are not agitated and/or mixed during frying. Causing basket 240 to spin while in oil section 220 agitates and/or mixes the food within basket 240 and thereby discourages the food from sticking together. Spinning basket 240 within oil section 220 further facilitates the frying process by mixing the oil and thereby redistributing the heat throughout oil section 220. An agitation motor, such as rotational motor 265 may also be used to agitate basket 240 in oil section 220 by periodically switching directions of the rotation of basket 240. For example, rotational motor 265 can turn basket 240 for one-half of a rotation and then switch directions and turn basket 240 in the reverse direction for one-half of a rotation. In other embodiments, rotational motor 265 agitates, rotates, or otherwise moves basket 240 in spinning section 230. In various embodiments, rotational motor 265 may be powered by batteries, direct current, alternating current, solar power, gasoline, and the like.

According to other embodiments of the invention, linear motor 250 is operable to induce agitation in basket 240 while basket 240 is in oil section 220. For example, linear motor 250 may repeatedly move basket 240 up and down through a certain displacement, such as through a one-half inch displacement. These movements result in the food in basket 40 being agitated and/or mixed such that the food does not stick together and such that the food cooks more efficiently. Another embodiment of the invention comprises a cam that is operable to produce the desired vibratory agitation. Thus, according to these embodiments, basket 240 is capable of being rotated both within spinning section 230 and within oil section 220 during the same frying process for an item of food without opening top cover 216. Leaving top cover 216 closed between the frying and spinning processes decreases temperature loss from the food and increases the desirable characteristics of the food.

Various embodiments of the present invention allow different combinations of motors to produce the desired rotation, translation, and/or agitation of basket 240. For example, linear motor 250 may be the only motor, rotational motor 265 may be the only motor, and spin motor 250 may be the only motor. When only one motor is present in cooking device 210, that motor may be capable of providing all of the desired movement and/or a certain number of the desired movements. In certain embodiments, rotational motor 265 is operable to move basket 240 between sections, to rotate basket 240 in both sections, and to agitate basket 240 in oil section 220. In other embodiments, two motors may be used, and in still other embodiments, more than two motors may be used, for example, one motor each for agitation, translation, and rotation. In still other embodiments, a single motor may be employed to accomplish agitation, translation, and/or rotation. Motors may also be used to open and/or close the fryer cover and/or drawer. Further embodiments allow for manual user intervention to provide any of the desired rotation, translation, agitation and/or operation of other components.

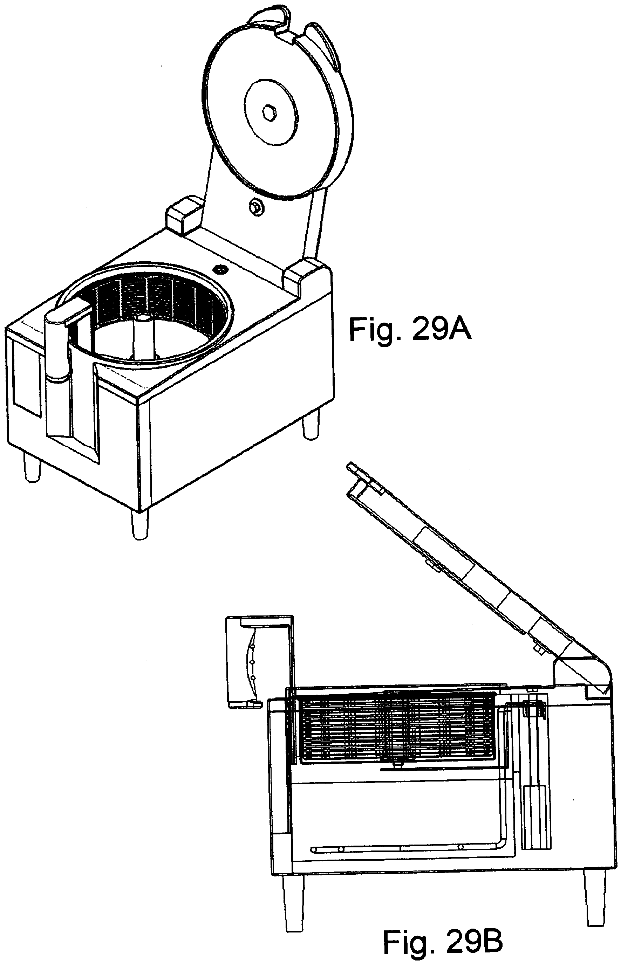

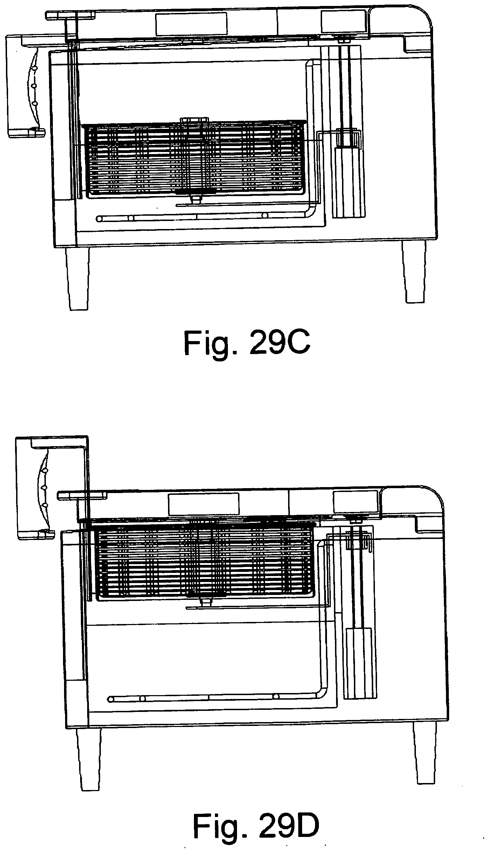

In accordance with another embodiment, and with reference to FIGS. 29A-29B, a cooking device 2910 may comprise two motors in cover 2916. Cover 2916 may comprise a spin motor 2960 and a lift motor 2950. Spin motor 2960 may be configured to interface with basket 2940 and/or a drive shaft to facilitate spinning basket 2940 when the basket is in the spinning section and/or the cooking section. With cover 2916 closed, spin motor 2960 may interface with the basket and/or drive shaft in any manner disclosed herein, or in any manner that may allow rotation of the basket. Lift motor 2950 may be configured to rotate a lead screw 2992 that is configured to cause lift member 2993 to move vertically along lead screw 2992. For example, lift motor 2950 may comprise a male gear configured to interface with a corresponding female gear in lift member 2993 and/or that is configured to drive lead screw 2992. Lift member may be operatively coupled to lift arms 2994 that are in turn coupled with lift plate 2976. As lead screw 2992 rotates, lift member 2993, lift arms 2994, and lift plate 2976 move vertically, thereby causing basket 2940 to also move vertically. Such a configuration with both motors in cover 2916 may extend the life of the motors because they are located away from the heat source for the cooking device, and away from the cooking liquid.

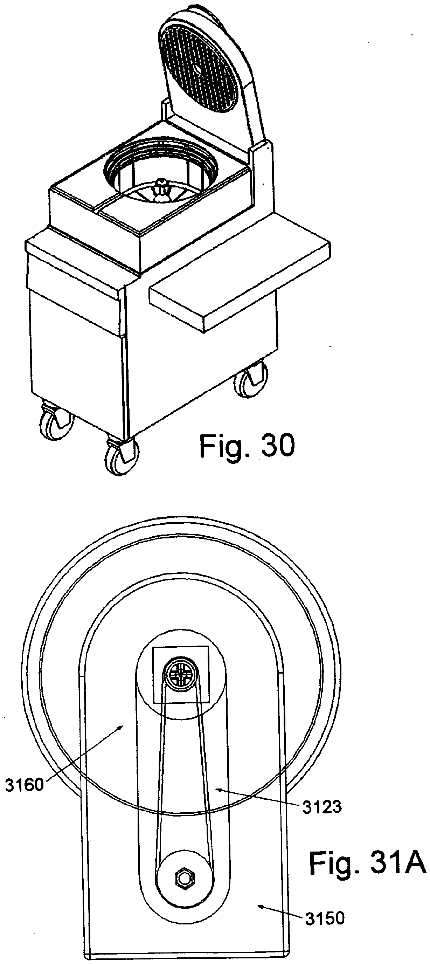

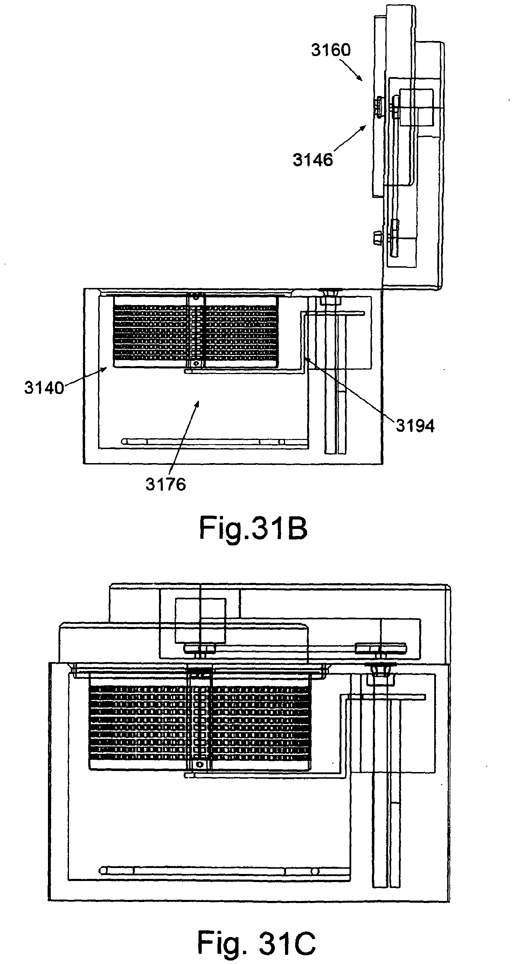

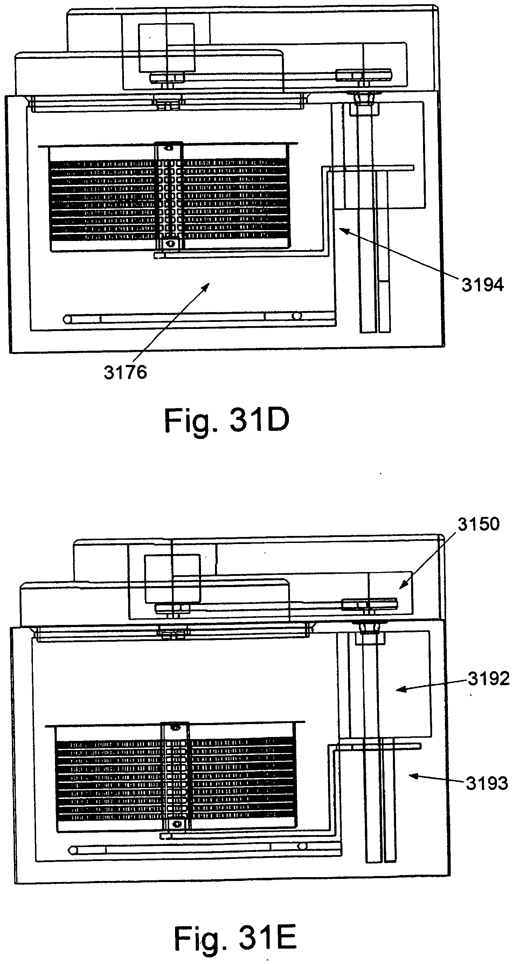

In accordance with another embodiment of the invention, and with reference to FIGS. 31A-31E, a single motor 3160 may both spin the cooking basket 3140 and/or the basket well, and raise and lower the cooking basket between the spinning section and the cooking section. Motor 3160 may be configured to spin basket 3140 via a basket coupling 3146. In other embodiments, motor 3160 may drive a disk that nests within basket 3140. It should be understood that motor 3160 may cause basket 3140 and or the basket well to rotate in any number of ways, such as with other configurations disclosed herein. Motor 3160 may facilitate raising and lowering basket 3140 by driving a lift gear 3150 with a drive chain and/or drive belt 3123. Lift gear 3150 may be configured to rotate a lead screw 3192 that is configured to cause lift member 3193 to move vertically along lead screw 3192. For example, lift gear 3150 may comprise a male gear configured to interface with a corresponding female gear that is configured to facilitate rotating lift member 3193 with lead screw 3192. Lift member 3193 may be operatively coupled to lift a lift bracket 3194 that is in turn coupled with a lift plate 3176. As lead screw 3192 rotates, lift member 3193, lift bracket 3194, and lift plate 3176 move vertically, thereby causing basket 3140 to also move vertically. In other embodiments, motor 3160 may be configured to raise basket 3140 using any mechanism that is configured to translate rotational motion to linear motion to facilitate raising basket 3140.

Further embodiments of the invention comprise means for increasing the heat transfer between the heating elements and the cooking liquid and/or between the cooking liquid and the food being cooked. For example, with reference to FIGS. 25A-25B, a vibration motor 2551 may be configured to induce vibrations in the cooking basket and/or in basket well 2542. Basket well 2542 may be operatively coupled to lift arms 2594 that may be configured to facilitate raising the basket well out of and submersing the basket well into the cooking liquid. A brace 2556 may be disposed between lift arms 2594, and vibration motor 2551 may be disposed on brace 2556. As vibration motor 2551 vibrates, vibration is induced in brace 2556 and lift arms 2594, thereby inducing vibration in basket well 2542. As basket well 2542 vibrates, bubbles and/or air pockets that may have formed in the cooking liquid are disrupted, thereby creating a more uniform cooking liquid. Bubbles and/or air pockets that form in the cooking liquid reduce the efficiency at which heat transfer occurs between the cooking liquid and the heating elements and/or the food being cooked. Disrupting and/or reducing the air pockets in the cooking liquid therefore facilitates increasing the effectiveness of the heat transfer between the cooking liquid and the heating elements and/or the food being cooked. It should be understood that other means for disrupting air pockets in the cooking liquid are contemplated within the scope of the present invention.

It should be noted that various embodiments of the invention comprise motors that operable at various and/or variable speeds. In certain embodiments, it may be desirable to alter the speed of the motors during spinning of the fried food, during the raising and lowering of the basket, the basket well, and/or the frame structure, during the adding of the food to the cooking device, during the removal of the food from the cooking device, and/or during the adding and/or filtering of the frying oil. In still other embodiments, the speed of the motors may be changed depending on the type of food being cooked. For example, where the food is more delicate, the motors may be configured to spin the cooked food at a lower speed, so that the centrifugal force exerted on the food is less. Or it may be desirable to start the spin cycle at one speed to allow the food to position itself on the outside of the basket and then modify the spin speed to remove more oil and/or conduct convection cooking. Any motor operable to achieve these functions and/or other functions of the cooking device may be configured to be variable speed motors. For example, a motor configured to facilitate the removal of the cooking liquid from the cooked food may start spinning at one speed and then ramp up to a maximum and/or desired spinning speed. After the spinning process is complete, the motor may slow down gradually until it stops. In other embodiments, the speed and/or acceleration of the spinning motor may change throughout the spinning process. The speed of the variable speed motors may be manually and/or automatically controlled as discussed further below.

In accordance with a further embodiment of the present invention, an exemplary fryer comprises mechanisms for automatically and/or manually controlling cooking device 210. Any of the procedures, processes, methods, and/or movements disclosed herein may be capable of automation, and any such automations now known or hereafter developed are contemplated within the scope of the present invention. For example, a user many manually crank basket 240 in order to remove excess oil from the fried food. In other embodiments, and with reference again to FIG. 1, controller 255 controls operation of at least one function and/or component of cooking device 10. Controller 255 may comprise any type of controller known in the art for controlling electrical and/or mechanical systems. As a motor controller, controller 255 may direct the operation of linear motor 250 to move basket 240 between oil section 220 and spinning section 230, and may direct spin motor 260 to rotate basket 240 about its vertical axis. A controller may also be used with the embodiments illustrated in FIGS. 6A - 14 to accomplish the various movements contemplated in those embodiments. In still other embodiments, controller 255 accepts input from a user for air temperature, oil temperature, oil viscosity, cook time, spin time, oil level, and other factors a user would want to control in relation to the operation of cooking device 210. In further embodiments, controller 255 may control automatic extraction of the food from cooking device 210 when the frying and spinning processes are complete. Controller 255 may also control automatic operation of a filtering system that removes impurities and other undesirable items from cooking oil 222. Controller 255 may also control additional motors, such as rotational motor 265, circumferential motor 662, and spinning motor 1260, and may control other cooking device functions, such as agitation of basket 240 in oil section 220. Controller 255 may comprise, control, and/or communicate with various sensors, such as temperature sensors, and other components within cooking device 210. Controller 255 may be preprogrammed with various cooking procedures to fully automate the adding of the food to the cooking device, the cooking of the food, the removal of the oil from the food, and/or the removal of the food from the cooking device. As discussed further below, controller 255 may comprise any device capable of processing data, such as a microprocessor, a series of logical gates, a computer, and the like.

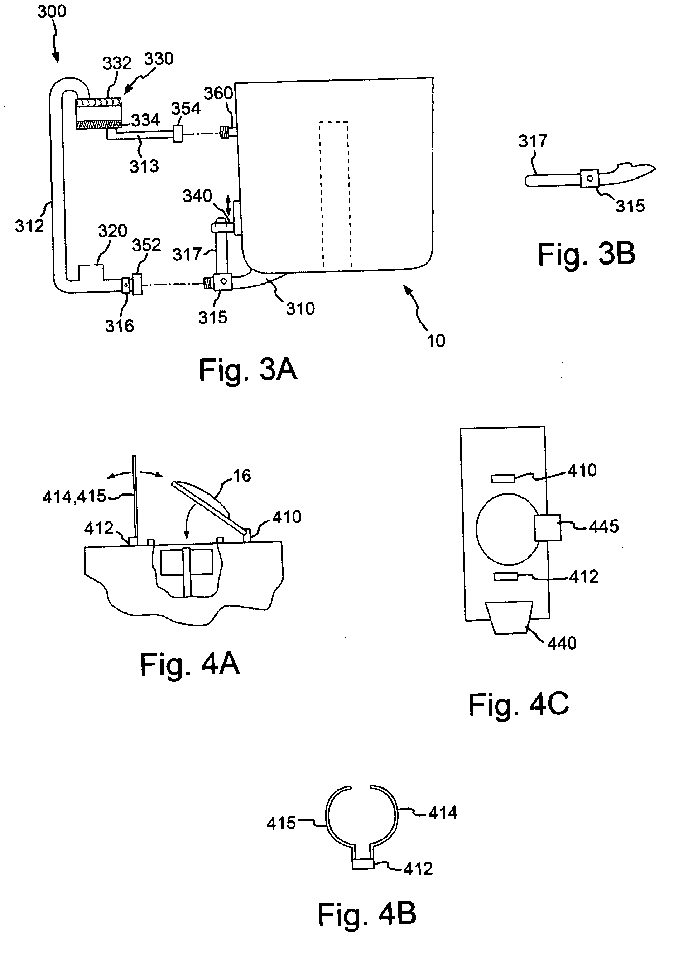

According to various embodiments of the present invention, it is desirable to remove impurities from cooking oil 222. With reference to FIG. 3, a filter system 300 for use with cooking device 210 according to an embodiment of the invention is now described to provide such a function. In certain embodiments, filter system 300 comprises an integrated oil filter for removing the impurities from cooking oil 222. Filter system 300 is operable to manually or automatically remove sediment, fried food particles, impurities, and other undesirable particles from cooking oil 222. For filter system 300 to be functional in some embodiments, a safety latch 340 is switched to an operating position. Cooking oil 222 then exits cooking device 210 via an exit pipe 310 and enters filter system 300 via a valve 315 and/or another valve 316. Valves 315 and 316 may be any valves capable of controlling the flow rate of fluids such as cooking oil 222 in a heated or cooled state. A valve switch 317 controls operation of valve 315 and controls the flow rate of cooking oil 222 into filter system 300. Exit pipe 310 and valve 315 are coupled to valve 316, pump 320, and transfer pipe 312 via female coupling 352.

A pump 320 moves cooking oil 222 through a transfer pipe 312, a filter box 330, and a return pipe 313 so that filter system 300 can return the filtered oil to cooking device 210. Pump 320 may be any device capable of pumping a fluid such as cooking oil 222 in a heated or cooled state.

Filter box 330 is operable to remove sediment and other undesirable particles from cooking oil 222. Filter box 330 comprises, according to various embodiments, at least one filter for filtering cooking oil 222. In certain embodiments, Filter box 330 comprises a wire mesh filter 322 and a fine filter 334. In other embodiments, filter box 330 comprises only one filter.

The filtered cooking oil exits filter box 330 via return pipe 313. Return pipe 313 is coupled to cooking device 210 via a female coupling 354 and a return port 360. Return port 360 receives the filtered cooking oil and returns the filtered cooking oil to oil section 220 for further frying processes. In certain embodiments of the invention, filter system 300 is thermally insulated in order to minimize the temperature drop between exit pipe 310 and return port 360 so as to minimize energy required to reheat the filtered cooking oil. Filter system 300 is operable during the frying process, during the spinning process, after both processes are finished, and at other times during operation of cooking device 210. Filter system 300 is configured so as not to interfere with any of the operations of cooking device 210, including the automatic discharge process discussed below. The filter system may be controlled by controller 255, and a user may specify parameters of the filtering process for automatic control by controller 255.

In an embodiment of the invention, cooking device 210 is capable of automatic operation following insertion of the uncooked food into basket 240, including the automatic process of discharging the cooked food from cooking device 210. In other embodiments, the uncooked food may be loaded into the cooking device through intake chute 445. With reference to FIGS. 4A-4E, embodiments of the automatic discharge process are described. The automatic discharge process involves automatically opening top cover 216, removing basket 240 from frying vessel 214 and discharging the cooked food down a food exit chute such as discharge chute 440. Controller 255 communicates with and controls the automatic operation of the various components involved in the automatic discharge process.

According to further embodiments of the invention, cooking device 210 comprises a basket retrieval mechanism. In certain embodiments, the basket retrieval mechanism comprises servos 410, 412 for automatically discharging the cooked food. Servo 410 is operable to open top cover 16 upon completion of the frying and spinning processes. Servo 412 is operable to control discharge arms 414, 415. Servos 410, 412 are configured to provide rotational, translational, and/or clamping movement and may be any devices capable of providing such movement. The servos may be operated by battery power, alternating current power, direct current power, gas power, and other mechanisms for providing power.

FIG. 4B shows a configuration of discharge arms 414, 415 according to one embodiment of the invention.

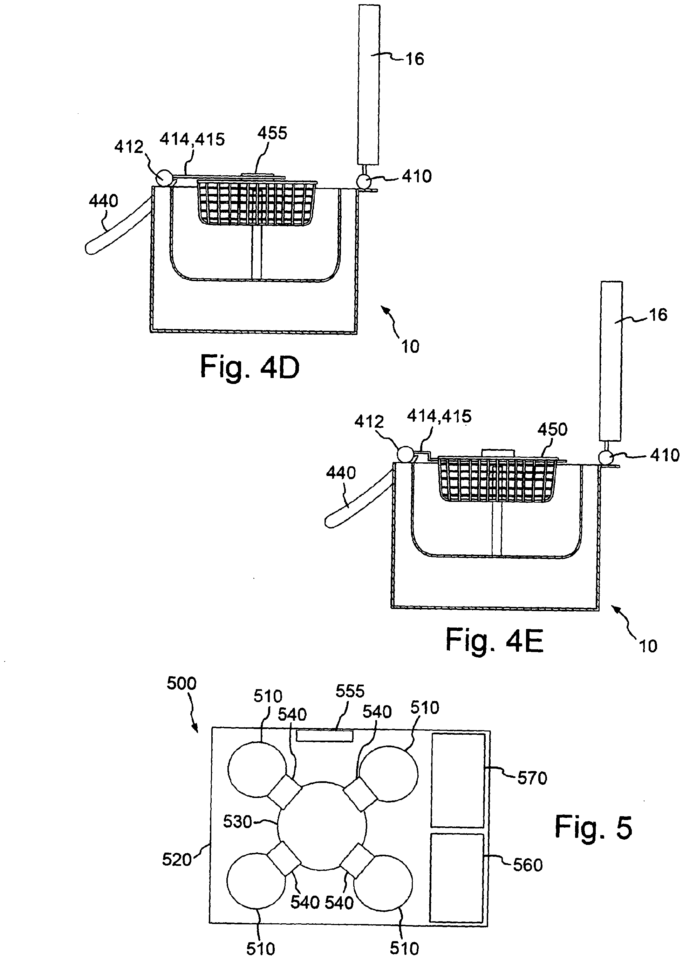

Discharge arms 414, 415, in this embodiments, are configured to interface with stabilizing ring 450 and/or discharge ring 455 on basket 40 (See FIGS. 4D, 4E). Servo 412 rotates discharge arms 414, 415 into place around stabilizing ring 450 and/or discharge ring 455. In some embodiments, discharge arms 414, 415 snap into place around stabilizing ring 450 and/or discharge ring 455. In other embodiments, servo 412 and/or other devices are operable to clamp discharge arms 414, 415 into place around stabilizing ring 450 and/or discharge ring 455. With discharge arms 414, 415 in place, servo 412 rotates basket 240 out of frying vessel 214, and the cooked food exits cooking device 210 via discharge chute 440. A user may place a bowl, pan, plate or other utensil proximate discharge chute 440 so that the utensil will receive the cooked food from discharge chute 440.

In accordance with an embodiment of the present invention, cooking device 210 is configured to produce a cooked food that is more desirable than cooked foods produced by other frying methods. When the fried food is done frying in the oil, some oil has collected at the outside of the fried food. If the excess oil is removed before the fried food cools, up to 80% of the oil content of the fried food may be reduced. However, as an item of fried food, for example, a french fry, begins to cool, the outside of the french fry cools faster than the inside. This uneven cooling causes the excess oil at the outside of the french fry to be drawn to the center of the french fry, causing the french fry to become soggy and increasing the oil content of the fried food. In addition, as the outside cools, the food tends to contract, which has the effect of locking the oil into the food. Soggy french fries are generally not desirable for consumption. Increased oil in the french fry is also not desirable from a health standpoint. Thus, it is desirable for the temperature at the inside and outside of the french fry to be the same until it is served to a consumer. However, some presently-known frying processes employ a method for removing excess oil from the fried food after frying and before serving to a consumer. These processes generally remove the excess oil in an environment that contributes to rapid cooling of the food.

Embodiments of the present invention, on the other hand, comprise an excess oil removal process that is conducted in an environment that minimizes the cooling rate of the fried food. In one embodiment, the average temperature of the french fry (or other fried food) is $T_{avg}$. The closer $T_{avg}$ is to the temperature of cooking oil 22, $T_{oil}$, the less temperature difference there will be between the outside and inside temperatures of the french fry, assuming the entire french fry was at the temperature of the cooking oil when the frying was completed. It is therefore desirable to minimize $T_{oil} - T_{avg}$, or $\Delta T_{avg}$ at the time the french fries are served to a consumer. A cooling rate (C) can be calculated at a specified time after frying in the oil has been completed (tc):

$$C = \Delta T_{avg} / tc$$

For example, assuming an oil temperature of $T_{oil}$ = 190°C, and cooling the fried food in an environment having a temperature of 27°C, at time after frying of tc = 180 seconds, and an average temperature at 2 minutes of $T_{avg}$ = 27°C, then $\Delta T_{avg}$ = 163°C, and C = 0.91 °C/second. On the other hand, assuming the other variables are the same, if $T_{avg}$ = 155°C, then $\Delta T_{avg}$ = 35°C, and C = 0.194 °C/second. In the scenario where C is higher, there is a greater likelihood of the french fries being soggy because more excess oil has been drawn to the center of the fried food, and/or the fried food has cooled too rapidly for the excess oil to be removed, making the fried food unhealthy and undesirable to consumers. Thus, it is important to minimize C.

It should be noted that according to other embodiments of the present invention, C may be a function of time, cooling conditions, thermal properties of the fried food, initial oil content of the fried food, geometry of the fried food, and the like. In certain embodiments, the convection heat transfer coefficient influences the cooling rate of the fried food. For example, if the ambient temperature where the fried food is being cooled is low, the heat transfer rate from the fried food will be greater. If air is moving past the fried food at the low ambient temperature, heat transfer will be further increased according to the speed of the air flow. Thus, moving air past the fried food is not desirable at a low ambient temperature because the fried food might cool more rapidly, thus preventing the removal of the excess oil before it collects at the center of the fried food. Thus, embodiments of the present invention provide a mechanism for moving air past the fried food in order to remove the excess oil at the surface of the fried food, but moving the air past the fried food at an elevated temperature in order to reduce the cooling rate of the fried food. According to an embodiment of the invention, the following table shows some theoretical temperatures of a fried food that is being cooled in different ambient temperatures, at different periods of time. An oil temperature of 190°C is used. All temperatures are in Celsius, and the time is in seconds.

**Table 1.**

| Time (s) | Ambient 27°C | Ambient = 65°C | Ambient = 150°C |
|---|---|---|---|
| 0 | 190 | 190 | 190 |
| 20 | 135 | 147 | 180 |
| 40 | 95 | 120 | 174 |

(continued)

| Time (s) | Ambient 27°C | Ambient = 65°C | Ambient = 150°C |
|---|---|---|---|
| 60 | 70 | 100 | 169 |
| 80 | 55 | 88 | 164 |
| 100 | 45 | 80 | 161 |
| 120 | 36 | 74 | 158 |
| 140 | 32 | 70 | 157 |
| 160 | 28 | 68 | 156 |
| 180 | 27 | 67 | 155 |

Thus, according to the embodiment expressed in Table 1, at 40 seconds after cooking, or tc = 40 seconds, $\Delta T_{avg}(27)$ = 95°C, $\Delta T_{avg}(65)$ = 70°C, and $\Delta T_{avg}(150)$ = 16°C. The corresponding cooling rates are C(27) = 2.375 °C/second , C(65) = 1.75 °C/second, and C(150) = 0.4 °C/second. Thus, where the ambient cooling temperature is higher, C is lower, and more oil may be removed from the surface of the fried food during the spinning process. It should be noted that Table 1 is only representative of embodiments of the present invention, and other cooling rates, temperatures, and other parameters are possible depending on the specific operating conditions of a particular embodiment of the invention.

According to further embodiments of the invention, the temperature of the fried food is a function of time. For example, the temperature may be a third-order polynomial as a function of time. In other embodiments, the temperature profile may be exponential, linear, a power function, n-order polynomials, and other types of functions. In such embodiments, the cooling rate is also a function of time, characterized by the change in temperature over a change in time, or dT(t)/dt, or the first derivative of the temperature function. For example, where the temperature profile is a third-order polynomial, $T(t) = At^3 + Bt^2 + Dt + E$, and $dT(t)/dt = C(t) = 3At^2 + 2Bt + D$.

Various embodiments of the present invention comprise methods of automatically reducing oil content of fried foods and minimizing C at the same time. For example, top cover 16 remains closed while basket 240 is moved out of oil section 220 and into spinning section 230. Top cover continues to remain closed while spin motor 260 and/or rotational motor 265 spins, agitates and/or moves basket 240 in order to remove oil from the fried food. Because top cover 216 remains closed after frying, the temperature surrounding the fried food remains at least close to, if not the same as, the temperature of cooking oil 222. Thus $\Delta T_{avg}$ approaches zero during the spinning process even while to grows, resulting in a C that also approaches zero. Only after the oil removal process do $\Delta T_{avg}$ and C begin to grow appreciably. Other embodiments comprise controller 255 configured to monitor C via a sensor or plurality of sensors. Monitoring C allows controller 255 to automatically change the cook temperature, cook time, spin temperature, spin time, spin speed, and other variable in order to maintain a desirable C. Therefore, embodiments of the present invention provide fried foods with a reduced oil content that are nearly the same temperature as the fried foods with higher oil content that are served immediately after frying in oil. Such embodiments provide for greater removal of the excess surface oil of the fried foods. Other embodiments provide fried foods that are more desirable than fried foods produced by other methods, where the other methods remove oil content without minimizing C and thus facilitate the production of undesirable foods.

Various processes according to embodiments of the invention, including those described above, facilitate convection cooking of the food in the spinning section. For example, various fans may move air across the cooked food to facilitate convection cooking. In other embodiments, the air may be heated during the spinning process, thereby facilitating moving heated air over the cooked food. In other embodiments, the spinning section may comprise heating elements to facilitate heating the air during the spinning process. In still other embodiments, heated air may be circulated by heated jets or other streams of air. Convection cooking may facilitate producing a crispy surface and/or texture of a fried food, thereby making the fried food more desirable for consumption. According to further embodiments, convection cooking may occur while the food is spinning (i.e., the food is moving through the air instead of the air moving across the food). Convection cooking may be enhanced due to the moist air environment created by the steam from the cooking section below the spinning section. In still further embodiments, add tabs, wings, blades, propellers or the like may be used to increase air movement within the cooking device and/or to create an air vortex. Such embodiments may facilitate moving more air and facilitate venting the moisture and pressure from the cooking device to a pressure relief valve or a moisture vent.

Other aspects of the invention provide systems such as a ventilation system and a fire suppression system. Such systems aid in the safe operation of the food fryer. Such systems also aid in maintaining a desirable operating environment. For example, the ventilation system may remove oil-filled heated air from the food fryer and replace it with fresh air. In certain embodiments, the fresh air may be preheated to aid in reducing the cooling rate of the fried food in the spinning section. In yet other embodiments, the spinning air created by basket 40 when it is being rotated, drives air out of spinning section 230 and into the venting system. In still other embodiments, the ventilation system may comprise an oil ventilation device for replacing used oil with new oil and/or reclaiming the used oil. The ventilation and fire suppression systems may be automatically and/or manually operated.

An embodiment of the invention comprises an opening near the top of the cooking device that may be configured to facilitate the removal of steam or other vapor from the cooking device. After passing through the opening, the steam moves through a duct that is disposed proximate the cooking device. The duct is configured to direct the steam to a condensation device that is removable from and/or disposed proximate to the cooking device. The condensation device may provide means for cooling the steam such that the water in the air is removed from the air and is collected in the condensation device. The condensation device may comprise absorptive components that facilitate absorption of the water. The absorptive components may be removable from the condensation device. The condensation device may be located such that the condensation device is at least partially insulated from the cooking device and/or a cooking chamber in the cooking device. In other embodiments, the cooking device may be actively cooled to facilitate removal of condensation.

In accordance with other embodiments of the invention, mechanisms may be employed to recycle and/or reuse heated air within the cooking device. With reference to FIG. 30, a heating table 3076 may be employed to facilitate maintaining an elevated temperature of the cooked food after the cooking process. For example, heating table 3076 may be heated by heated air extracted from the cooking device, such as heated air that is removed from the cooking device via a pressure release valve. The heated air may be routed to heating table 3076, and may run through a heat exchanger and/or series of tubes within heating table 3076 to facilitate elevating the temperature of heating table 3076. In other embodiments, cover 3016 may comprise a heat exchanger 3092 on the inside surface of cover 3016. During the cooking process, a liquid within heat exchanger 3092 may be heated, and this heated liquid may then flow through a heat exchanger in heating table 3076 as discussed above. Such a configuration may be desirable in a commercial environment where the cooked food is not served immediately after the cooking process is completed. Such a configuration may further be desirable to allow the cooked food to reach a temperature that is safe for consumption, but without cooling to a point that the cooked food is no longer desirable.

Further embodiments of the present invention comprise methods for reducing oil content from fried foods that are more efficient than previously-known methods for reducing oil content. As discussed above, top cover 16 remains closed during the oil removal process, which causes the temperature of the fried food to remain close to the temperature of cooking oil 22. At this elevated temperature, the cooking oil within and covering the fried food is less viscous. Because the oil is less viscous, it is more amenable to separation from the fried food during the oil removal process, thus making the oil removal process more efficient.

A method for automatically frying and reducing the oil content of a fried food according to an embodiment of the invention is now described. It should be understood that any of the cooking device structures disclosed herein (including without limitation lift mechanisms, spinning mechanisms, vibration mechanisms, motors, covers, baskets, basket wells, frame structures, and the like) may be automated, and the following disclosure is only an example according to an embodiment of the present invention. Cooking device 10 is provided, as well as a target food to be fried. A user instructs cooking device 10 with regards to the different variables involved in the frying process. For example, the user may specify a type of food, a quantity of food, a desired frying result (e.g., rare, medium-rare, medium, medium-well, well-done, etc.), an oil temperature, a frying time, an oil removal time (e.g., time for spinning), and the like. Controller 255 accepts the instructions and opens top cover 16 automatically upon the user's signaling that all instructions have been made. In other embodiments, top cover 16 may be manually opened by the user. The user loads the target food into loading chute 445 and instructs cooking device 210 to close top cover 216 and being the frying process. In other embodiments, some of the processes may be performed manually (e.g., manually opening the cover), and in still other embodiments, controller 255 may automatically determine certain operating parameters.

After top cover 216 is closed, cooking device 210 performs the frying process automatically. In certain embodiments, cooking device 210 has a manual override that allows the user to interrupt the automatic frying process. Controller 255 ensures cooking oil 222 is at the appropriate temperature by measuring the temperature and instructing heating element 280 to produce more or less heat. Controller 255 then instructs linear motor 250 to move basket 240 into oil section 220 to begin the frying process and/or perform manual tasks. While basket 240 is in oil section 220, basket 240 may be agitated, rotated, spun and/or otherwise moved in order to prevent the target food from sticking together and/or to facilitate the frying of the target food. Controller 255 may direct the moving of basket 240 in response to input from the user and/or as part of a pre-programmed routine. Controller 255 may communicate with and instruct various cooking device components in order to facilitate the movement of basket 240. For example, spin motor 260, linear motor 250, and/or rotational motor 265 may be instructed to move basket 240.

When controller 255 determines that the target food has been cooked according to the user's specifications, controller 255 instructs linear motor 250 and/or rotational motor 265 to move basket 240 into spinning section 230. Controller 255 further instructs basket 240 to begin spinning by instructing any of linear motor 250, spin motor 260, and/or rotational motor 265 to spin basket 240. A user may predetermine a spinning speed for basket 240 and controller 255 may operate the basket at the predetermined speed. Controller 255 may also automatically determine the required spinning speed depending on other operating conditions. In other embodiments, basket 240 need not spin, but may be moved in other ways that remove excess oil from the target food, for example, by agitation and/or ultrasonic motion. During the spinning process, according to some embodiments, controller 255 monitors the temperature of spinning section 30 and may instruct heating element 280 to increase its heat output in order to increase the temperature of cooking oil 222, thereby increasing the temperature in spinning section 230. During the spinning process, top cover 16 remains closed, thus minimizing the rate of temperature loss within the target food (C, as discussed above).

According to further embodiments, when controller 255 determines that the spinning process should be terminated, controller 255 ceases movement of basket 240 and instructs top cover 216 to open. Controller 255 may control top cover 216 via servo 410, for example. Controller 255 then instructs basket 40 to discharge the target food through discharge chute 440. Various methods of discharging the target food may be employed according to various embodiments of the invention, and one embodiment is disclosed here. For example, cooking device 210 may comprise servo 412 that is attached to discharge arms 414, 415. Discharge arms 414, 415 are configured to interface with basket 240 and to allow servo 412 to rotate basket 240 away from frying vessel 214 so as to discharge the target food through discharge chute 440. Controller 255 then returns basket 240 to frying vessel 214, and, depending on the user's instruction, may instruct cooking oil 222 to cool down. Although this embodiment has been described in terms of automated processes, manual processes may be employed to carry out the present invention.

In accordance with another embodiment of the present invention, a frying system 500 capable of removing oil content from fried food is now disclosed with reference to FIG. 5. Frying system 500 comprises a system housing 520 which comprises a plurality of cooking devices 510. Cooking devices 510 may be similar in structure and may be operated in a similar manner to cooking device 210 discussed previously. Cooking devices 510 may also be any device capable of frying or otherwise frying food. System housing 520 further comprises a spinner 530 which receives fried food from cooking devices 510 via discharge chutes 540 and/or via manual placement of the fried food in spinner 530 by a user. After cooking devices 510 have cooked the fried food, spinner 530 receives the fried food and processes the fried food in order to remove excess oil content from the food. In certain embodiments, cooking devices 510 may carry out their own spinning and/or oil removal operations prior to depositing the fried food in spinner 530, or they may deposit the fried food directly after frying it in the cooking oil. System housing 520 also comprises a system controller 555 which communicates with and directs operation of the various components in frying system 500.

According to further embodiments, system housing 520 is configured to increase the safety associated with the operation of frying system 500. For example, system housing 520 may comprise a fire suppression system 570. Fire suppression system 570 is operable to automatically detect and extinguish fires within system housing 520. In other embodiments, a user can manually instruct fire suppression system 570 to extinguish a fire and/or a threat of fire within system housing 520. According to other embodiments, system housing 520 further comprises a ventilation system 560 for increased safety, circulation, and/or degree of desirable environmental conditions. In further embodiments of the invention, ventilation system 560 is operable to remove oil-filled, heated air from system 500.

In accordance with another embodiment of the present invention, frying system 500 comprises a frying system cover. The frying system cover reduces temperature loss to the surroundings of the frying system which decreases the cooling rate of the fried food during the spinning process. Frying system 500 may further comprise heating elements such as heat lamps, resistive heating elements, gas burners, and other mechanisms for providing heat. The heating elements within system housing 520 may regulate the temperature within system housing 520 and regulate the temperature of the fried food during the oil removal process.

In certain embodiments of the invention, spinner 530 may be present in system housing 520 and cooking devices 510 may not be present. In such an embodiment, fried food from fryers external to system housing 520 is placed in spinner 530 and then the frying system cover is closed. Spinner 530 removes excess oil from the fried food and frying system 500 maintains the temperature of the fried food during the spinning process.

In still other embodiments of the present invention, cooking devices 510 may be present in system housing 520 and spinner 530 may not be present. In these embodiments, cooking devices 510 are nearly identical to cooking device 10 discussed above. Each cooking device 510 is independently operated and controlled and/or operated and controlled in conjunction with the other cooking devices 510. After the settings for the cooking devices 510 have been inputted by a user. The frying system cover is closed and the cooking devices 510 operate automatically to produce the fried food. The fried food from each of the cooking devices may be deposited within a fried food receptacle within system housing 520, and the fried food may be kept warm in the receptacle by heat lamps, heating elements, and or other devices for heating an enclosed space. When all of the cooking devices 5 10 are finished, the frying system cover may be opened, and the fried food may be served. Such an embodiment increases the amount of fried food that may be produced and provides a mechanism for maintaining a desirable temperature of the fried food until it is served.

In an embodiment, and with reference to FIGS. 15A - 15B, retrofit cooking device 1510 may be configured to be retrofitted to a pre-existing cooking device 1511. The pre-existing cooking device 1511 comprises an oil-heating and cooking section where food is cooked, for example, by means of a basket manually lowered into the oil and then manually removed. In an embodiment, a retrofit surface of retrofit cooking device 1510 may be configured to abut and/or be attached or secured to pre-existing cooking device 1511. Retrofit cooking device 1510 may be configured to accept food into a basket, lower it into pre-existing frying vessel 1511 to fry the food, and then raise the food up for spinning in a heated, enclosed environment.

Exemplary retrofit cooking devices as disclosed here may further comprise a retrofit housing, and the retrofit housing may comprise a spinning section for removing oil from cooked food, and may comprise the retrofit surface. The retrofit housing may be configured to comprise several components, such as the frame, motors, bearings, guide shafts, and/or gears. These components may reside exclusively within the retrofit housing, or some of them may reside exclusively in the housing, and others may be extendable into the cooking section of the pre-existing fryer. It is desirable to keep some of the components out of the cooking section of the pre-existing fryer in order to protect them from the cooking fluid, such as oil, that is present in the cooking section of the pre-existing fryer. For example, with reference to FIGS. 6A-C, basket well 642 may be configured to extend below the retrofit surface and into the cooking section of the pre-existing fryer in order to enable the food to be cooked. But guide shafts 691, slider 693, slider track 692, motor 662, gear 604, and/or other components may not extend outside of the retrofit housing, or they may only partially extend outside of the retrofit housing.

Pre-existing fryers such as pre-existing cooking device 1511 generally already contain the frying vessel, oil section, and necessary heating element(s). A substantial amount of space may have been allocated for such devices, which tend to be large and expensive. Instead of completely replacing the pre-existing fryers at a substantial cost, this invention allows the pre-existing fryers to be used in conjunction with retrofit cooking device 1510 in order to provide the various advantages associated with the present invention.

It should be noted that while any of the cooking devices disclosed herein may be configured to be retrofitted to pre-existing cooking devices, an embodiment of retrofit cooking device 1510 does not comprise any component other than the basket well that needs to be submerged into the cooking oil of pre-existing cooking device 1511. For example, with reference to FIGS. 1 and 2, cooking device 210 comprises a shaft 290 that runs through oil section 220. However, with reference to FIGS. 8, 9, and 12, there are no components that reside within and/or pass through the oil section; rather, substantially all the components (with the exception, for example, of the heating elements) are located within the spinning section. Therefore, the embodiments illustrated in FIGS. 8, 9, and 12 would be more amenable to retrofitting because they would not require the insertion of any components other than the basket well into the oil section of pre-existing cooking device 1511. Retrofit cooking device 1510 according to these embodiments would sit on top of and/or be attached to the top of pre-existing cooking device 1511.

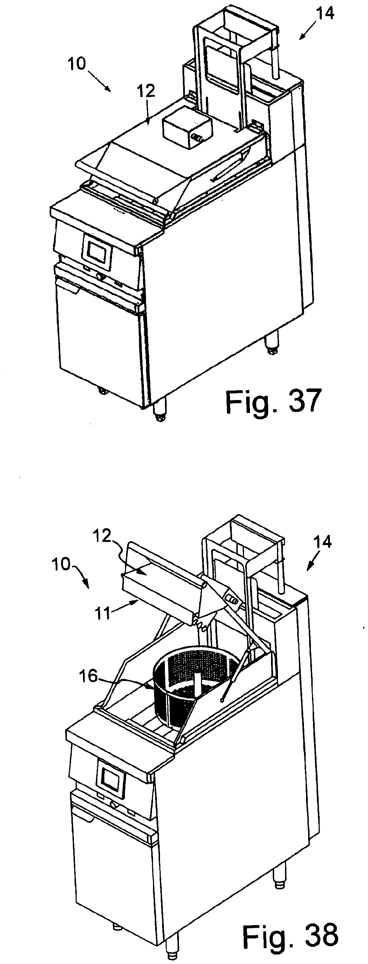

With reference to FIG. 37, other embodiments of a retrofit fryer device 10 comprise a hood 12 and a lifting mechanism 14. Hood 12 is configured to enclose a cooking section where food is cooked, and a spinning section and/or liquid removal section where a liquid such as oil is removed from the cooked food. With reference to FIG. 38, retrofit fryer device 10 may be configured to house a basket 16 that holds the food to be cooked, and lifting mechanism 14 may be configured to move basket 16 between the cooking section and the liquid removal section.

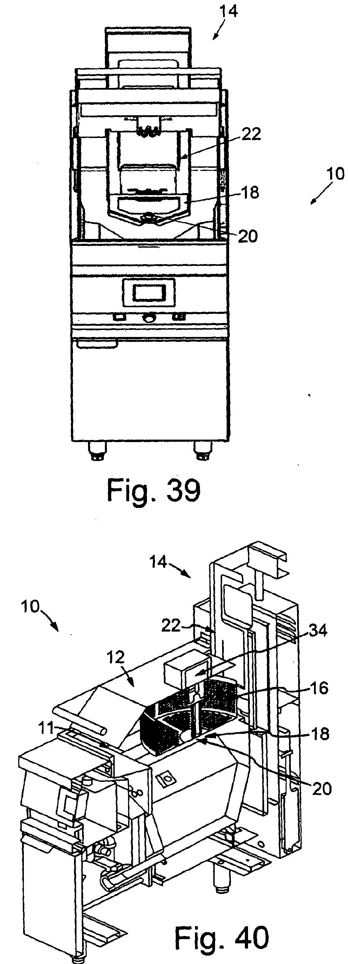

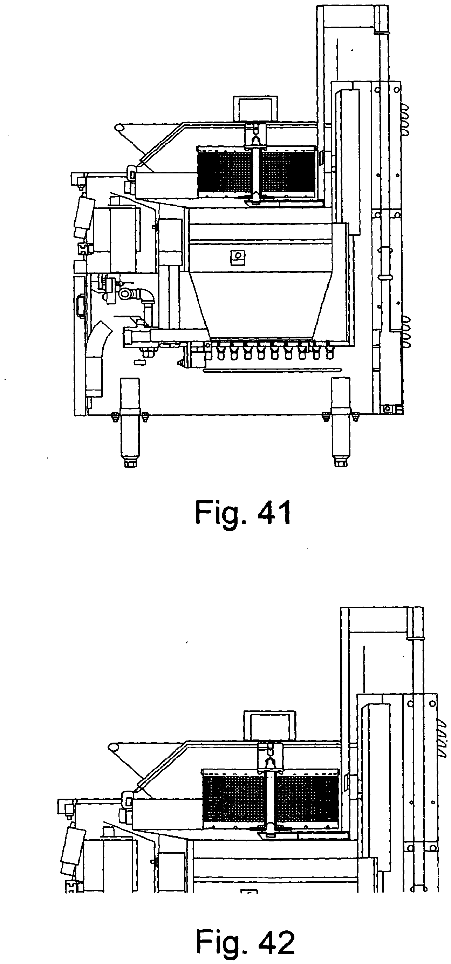

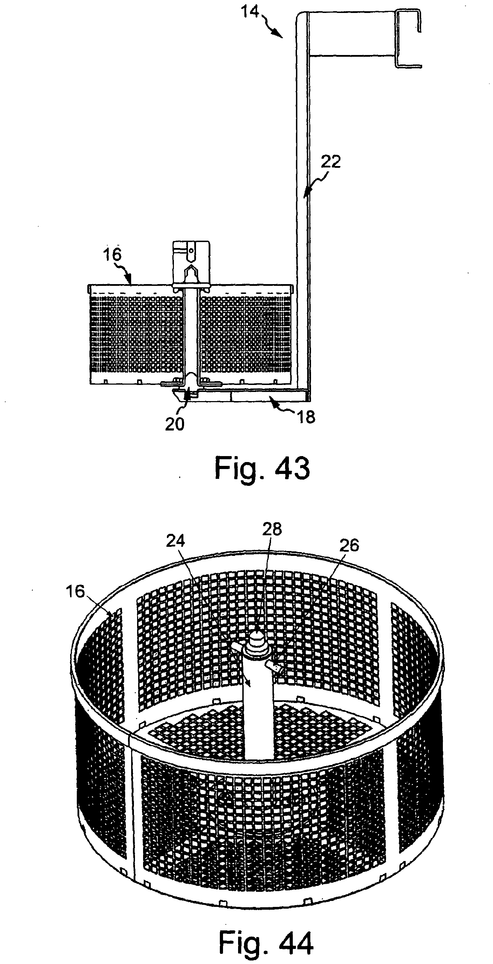

In accordance with a further embodiment, and with reference to FIGS. 39 and 43, lifting mechanism 14 comprises a lifting arm and/or arms 22 configured to raise and lower lifting plate 18. As illustrated in FIG. 40 (and similarly in FIGS. 41-43), lifting plate 18 may comprise a spindle 20 configured to facilitate locating basket 16 on lifting plate 18. Lifting plate 18 and lifting arms 22 are configured to facilitate moving basket 4016 between the cooking and liquid removal sections of fryer device 10. The lifting plate 18 and/or lifting anns 22 may include bearings or a frame mounted on bearings and/or gear(s) in such a way as to allow the food basket to spin or rotate.

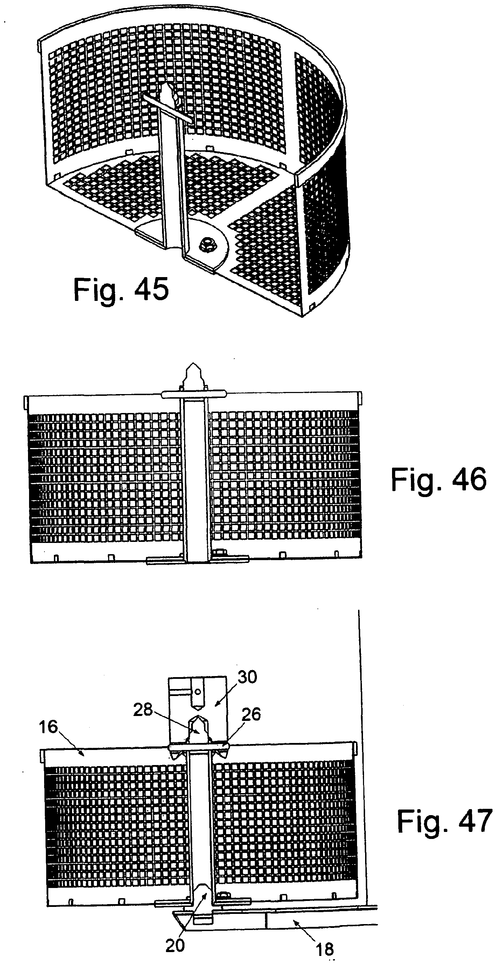

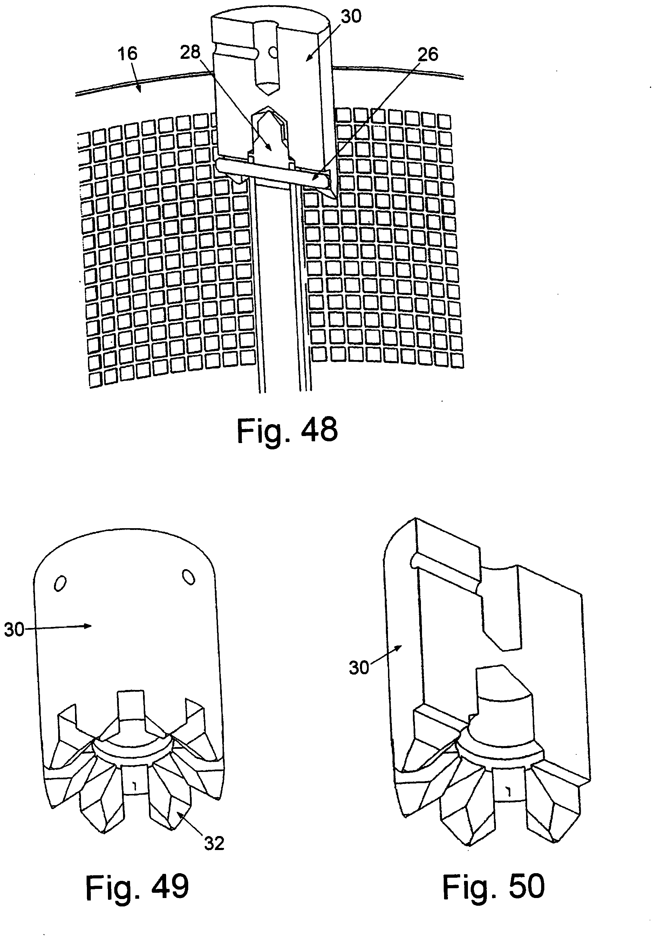

Basket 16, according to various embodiments, comprises a central shaft 24, a motor gear coupling such as motor key 26, and motor spindle 28, for example, as illustrated in FIG. 44 (and similarly in FIGS. 45-46). With reference to FIG. 47, motor spindle 28 and motor key 26 may be configured to interface with a motor gear 30 that is driven by a motor 34 in the hood 12 of cooking device 10 (see, for example, as illustrated in FIG. 40). With reference also to FIG. 49, motor gear 30 may comprise a plurality of teeth 32 configured to facilitate spinning basket 16 when basket 16 is in the spinning and/or liquid removal section. For example, as basket 16 moves from the cooking section to the spinning section, motor key 26 causes basket 16 to rotate in one direction about spindle 20 to facilitate locating motor key 26 within a grove created by the plurality of teeth 32. Thus, in an exemplary embodiment, motor key 26 in conjunction with the plurality of teeth 32 facilitates automatic seating of motor key 26 with motor gear 30. For example, in an embodiment, the plurality of teeth 32 are configured to cause basket 16 to rotate in a counter-clockwise manner when basket 16 is raised into the spinning position, and the plurality of teeth are configured to cause basket 16 to rotate in a clockwise direction when motor 34 causes motor gear 30 to rotate. Motor 34 may cause motor gear 30 to rotate, and motor key 26 then transmits the rotary motion to shaft 24 and basket 16.

In accordance with various embodiments, cooking devices as disclosed herein may be used in conjunction with existing cooking devices to retrofit the existing cooking device with the devices disclosed herein. Existing cooking devices may also be designed to incorporate aspects of the present invention. For example, with reference to FIGS. 37-42, an open bay fryer may be fitted with a lifting plate (e.g., 18), basket (e.g., 16), cover/hood (e.g., 12) and/or other aspects of the present invention to facilitate operating the open bay fryer as a closed fryer with spinning capabilities as disclosed herein. In other embodiments, a lifting mechanism and/or lifting plate may already exist in a preexisting cooking device, and the lifting plate may be modified with a spindle 20 to facilitate spinning basket 16 via motor 34 in cover and/or hood 12 that is retrofitted to the preexisting cooking device.

Adding cover 12, in various embodiments, to the open bay fryer allows for energy savings due at least in part to a more efficient heating system. For example, adding cover 12 to a fryer as illustrated in FIGS. 37-42 results in an energy savings of about 13%, or about 10-15% or more compared to operating the fryer without cover 12. Cover 12, in various aspects of the present invention acts as a thermal break keeping the surface heat, air heat, and/or oil heat from being removed from the fryer, for example, from being removed by the exhaust system, ventilation system, and/or other systems or mechanisms (e.g., heat loss to the ambient environment). Furthermore, retrofitting existing cooking devices according to various embodiments facilitates utilizing existing energy efficient heating systems in those existing cooking devices, such as those devices that employ heating systems with tube designs.

In accordance with further embodiments of the invention, a commercial-type frying device comprises an oil section where a food item is fried, a spinning section where excess oil, grease, fat and the like are removed from the food, and a conveyor system for moving the fried food to the spinning section. In various embodiments, the food is fried within a frying vessel and then either removed and transported to the spinning section or moved to a combined spinning section and conveyor system, which removes oil and transports the food simultaneously. In other embodiments, the conveyor system is integrated with the oil removal section, for example, while traveling through the conveyor system, oil may be removed from the food. The conveyor system may be automatically or manually operable. Additionally, in accordance with various embodiments of the present invention, a food freezing and/or packaging system may also be present. Furthermore, the conveyor system and oil removal section may be suitably maintained at an elevated temperature (in accordance with C as discussed above) to aid in reducing cooling of the food during transport and oil removal, for example, a heating element may be used in these sections. Additionally, various controllers may regulate, among other aspects, the movement of the conveyor.

In various embodiments, the food frying system may comprise a plurality of oil removal devices located within the conveyor system. For example, the oil removal devices may be connected to a conveyor belt, each capable of independent rotation, and all contained within a housing configured to maintain an elevated temperature as noted above.

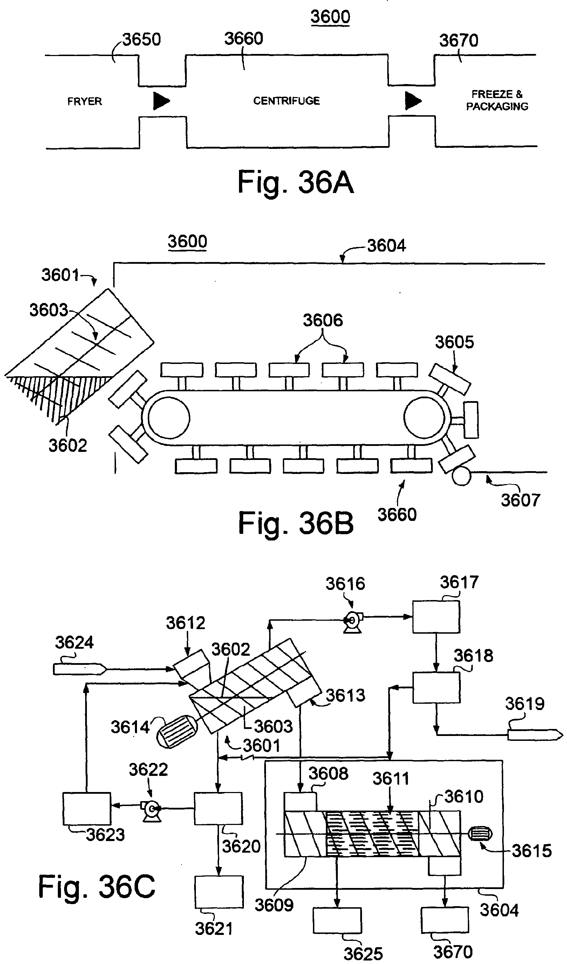

With reference to FIG. 36A, an exemplary embodiment of the frying device is described. Frying device 3600 comprises a fryer section 3650, a combined conveyor and cooking oil removal section 3660, and a freeze and/or package section 3670. The frying section 3650 houses and/or heats cooking oil for frying the food, and a mechanism for heating cooking oil is also provided. In exemplary embodiments, this mechanism may comprise a heating element in thermal contact with the cooking oil, operable to heat the cooking oil. In other embodiments of the invention, a thermally conductive material may be present between the heating element and the cooking oil.

For example, the heating element may be located outside of, but in thermal contact with the fryer section 3650, which may have thermally conductive walls, or may have a partially thermally conductive wall proximate the heating element. In yet other embodiments, where the heating element is located within fryer section 3650, fryer section 3650 may be thermally insulated in order to aid in maintaining the outside of frying device 3600 at a safe operating temperature. The heating element is operable to be driven by electricity, gas, solar power, and the like.

In other embodiments, the heating element, or additional heating elements, may be located within a section other than fryer section 3650 and/or may be located both within the spinning and oil sections. In still other embodiments, two or more heating elements may be used. For example, one heating element may be used to heat the oil in the oil section, and a second heating element may be used to aid in maintaining a desirable temperature in the conveyor/oil removal sections. Employing a second heating element for heating the conveyer/oil removal sections aids in increasing the amount of oil removed from the fried food. The higher the temperature during, for example, a spinning process, the less viscous the oil is so it is easier to spin off, and the higher the temperature, the less oil has been drawn to the center of the fried food. Thus, where spinning occurs at higher temperatures, more oil is available to be spun off the fried food.

In the presently described embodiment, with continuing reference to FIG. 36A, upon completion of frying, food is transported to the conveyor/removal section 3660, where oil is removed from the fried food for example, by a horizontal decanting centrifuge or a spinning basket containing the fried food, preferably at an elevated temperature. After oil removal, the food is deposited into the freezing/packaging section 3670. The frying device 3600 and/or the various components thereof may be automatically or manually operable.

In various embodiments, in the frying section 3650, the food is fried in vessels suitable for containing heated oil and food and/or in baskets. Likewise, in the oil removal section 3660, oil may be removed from fried foods placed in baskets or similar vessels suitable for oil extraction.

For example, with reference to FIGS. 36B and 36C, exemplary embodiments of the present invention are illustrated. In these embodiments, fryer section 3650 comprises a vessel 3601 containing heated frying oil 3602. Preferably vessel 3601 is cylindrical in shape, though numerous alternative shapes (e.g., rectangular, ovoid, etc.) may likewise be employed. In the presently described embodiment, vessel 3601 contains a mechanism for moving and/or agitating food therein, such as a transport auger 3603. For example, transport auger 3603 suitably is configured as a screw type mechanism, driven by a motor 3614, which as it rotates relative to vessel 3601, causes food to be moved axially along vessel 1001. Additionally, in various embodiments, by timing rotation of auger 3603, the length of time food remains in oil 3602 can be controlled. Alternatively, those skilled in the art will appreciate that other mechanisms for agitation and/or removal of food from vessel 3601 likewise may fall within the scope of the present invention.

With continued reference to FIGS. 36B and 36C, food enters vessel 3601 through an entry opening 3612 and is fried while being transported by auger 3603. When food reaches a distal end of vessel 3601, food may be deposited from vessel 3601 into the conveyer/oil removal section 3660. Such removal may be assisted mechanically or otherwise simply occur based on a "gravity feed" arrangement. For example, through a discharge chute 3613. As described in more detail below in connection with personal use type fryers, oil temperature, time of cooking, and other factors are suitably determined depending on the particular application involved, but generally include conventional parameters used in frying devices.

With reference to FIG. 36B, vessel 3601 is suitably in communication with a housing 3604 which encloses a conveyor system 3605 and a mechanism for the removal of oil. As described in more detail below, among other features, housing 3604 suitably maintains food that has been fried at elevated temperatures and with appropriate moisture levels (e.g., through thermal and moisture insulation) in order to aid in the oil removal process.

In the exemplary embodiment of FIG. 36B, after leaving vessel 3601, food is deposited into any of numerous individual baskets 3606 or similar vessels located on conveyor system 3605. As described below, baskets 3606 are configured to spin so that oil is removed (thrown off) the fried food. Conveyor system 3605 transports baskets 3606 though housing 3604 from vessel 3601 along an upper portion of conveyor system 3605 to freezing/packaging section 3670, where the food is deposited either directly into the freezer/packaging section 3670, or alternatively, onto another conveyor system 3607 which transports the food to the freezer/packaging section 3670. After depositing the food, baskets 3606 are returned to vessel 3601 along a lower portion of conveyor system 3605 to retrieve more fried food.

In embodiments such as those of FIG. 36B, and as also described below in the context of individual frying devices, baskets 3606 are suitably configured to rotate at speeds sufficient to remove oil from the food. In accordance with various embodiments of the invention, spinning of baskets 3606 removes excess oil from the surface of the fried food at an elevated temperature. In such an embodiment, basket 3606 may be a food spinner wherein the fried food is spun to remove the excess oil. In various embodiments, as the oil is removed from the food, the removed oil returns to fryer section 3650 for further use in frying, for removal from frying device 3600 and/or for filtering in order to reclaim the used oil.

With reference now to FIG. 36C, in an alternative embodiment of the present invention, after leaving vessel 3601, food is deposited into a hopper 3608 or similar mechanism for collection and direction of fried food from fryer section 3650 to conveyor/oil removal section 3660. From hopper 3608, the fried food enters a horizontal decanting centrifuge 3609 for oil removal.

Centrifuge 3609 is suitably configured with a high speed auger 3610, typically driven by a motor 3615, which rotates and agitates the fried food, as well as translates the food laterally (similar to the above described conveyor system) to packaging/freezer section 3670. Surrounding auger 3610 is a screen mechanism 3611 configured to rotate (generally slower) than auger 3610, and in the opposite direction, as well as to maintain the fried food within a volume surrounding auger 3610, and additionally to allow the passage of oil through the screen 3611 and away from the fried food as the auger 3610 spins the food therein. In accordance with various embodiments, oil passing through screen may be collected by an oil discharge mechanism/collector 3625, and optionally filtered to remove water, solids and other contaminants, and then re-circulated to vessel 3601

In embodiments such as those of FIGS. 36B and 36C, and as described below in the context of individual frying devices, baskets 3606 and centrifuges 3609 are suitably configured to rotate at speeds sufficient to remove oil from the food. These embodiments (and others which use spinning to remove oil) are described in the context of "baskets" hereinbelow.

The spinning of baskets removes excess oil from the surface of the fried food at an elevated temperature. In such an embodiment, the basket may be a food spinner wherein the fried food is spun to remove the excess oil. In such embodiments, the basket may be considered a centrifugal oil removal device, because the rotation of the basket aids in removing oil from the fried food.

Thus, in a commercial conveyor embodiment, after food has been cooked in fryer section 3650, food is moved to basket 3606 and is spun to remove excess oil from the cooked food. In various embodiments, as the oil is removed from the food, the removed oil returns to fryer section 3650 for further use in frying, for removal from frying device 3600 and/or for filtering in order to reclaim the used oil.

Additionally, in various embodiments, a controller may regulate, among other aspects, the amount of time for frying the food, the movement of the conveyor, the amount of time for removing oil from the food, and the movement of baskets in the frying section and/or oil removal section, movement of fried foods from one section to another, any of the baskets' rotational speeds, and the freezing and packaging of the fried foods, all according to input from a user.

The user may also define other operating parameters that are carried out by the controller. For example, while the food is being cooked in the oil, the food may be agitated in order to prevent the food items that are cooking from sticking together. When the food has been cooked for a specified time, the controller directs the motor to automatically move the fried food to a conveyor system to the oil removal section where the fried food/basket is rotated for a specified time at a predetermined speed in order to reduce the oil content of the food by spinning the oil out through centrifugal forces.

In various embodiments, during the frying and oil removal processes, various additional covers may be provided in order to prevent heat and moisture loss from the device and/or help contain the oil within the apparatus.

As noted above, the conveyor system and oil removal section are suitably maintained at an elevated temperature to aid in reducing cooling of the food during transport and oil removal. For example, a heating element may be used in these sections. Thus, embodiments of the present invention allow the food to be cooked in a more desirable manner without cooling off such that the taste, texture and desirability of the food are not adversely affected.

In the various embodiments of the present invention, one or more motors are employed to control operation of the frying device and the systems therein. For example, in certain embodiments, one motor controls the movement of the food/basket in the frying section (when applicable), another motor controls the conveyor system, and another motor controls the spinning of the basket (or horizontal decanting centrifuge). In various embodiments, the frying device has various lids and doors which are closed during operation until the frying, conveying and spinning processes are complete.

In addition to the aspects described above, in accordance with various additional and/or optional aspects of the present invention, various components may be incorporated into the frying device to change and improve performance.

For example, with reference to FIG. 36C, vessel 3601 is suitably hermetically sealed, but configured with various operable mechanisms to vent or introduce gases. For example, a blanket of inert gas 3624, such as nitrogen may be introduced into the system, for example, at entry chute 3612. An inert gas blanket suitably aids in maintaining heat and moisture of the food as it goes into and through the centrifuge. Additionally, blanketing may reduce the risk of fire, improves operational efficiency, reduces emissions and lowers the costs of product loss, and, because moist air is kept out, tank corrosion is reduced.

Embodiments of the present invention may also vent gases from vessel 3601, for example, by a venting line operated by a vacuum pump 3616. In various embodiments, gases moved by pump 3616 may first be passed through one or more filters such as a cooled coalescing filter 3617, prior to venting to atmosphere. In such embodiments, the cooled coalescing filter 3617 captures oil and water, while allowing gases to pass. The oil/water mixture can then be passed to an oil water separator mechanism 3618 which separates oil and water, discharging the water through a discharge pipe 3619.

The separated oil can then be reintroduced into the system by sending the oil to an oil solid separator 3620, where remaining solids in the captured oil are removed and discharged 3621. The now clean oil can be returned to vessel 3601 for re-use. In this regard, oil can be pumped by an oil recirculation pump 3622 directly to vessel 3601, or first heated by an oil heater 3623, prior to re-introduction to vessel 3601.

Various embodiments of the invention allow different combinations of motors to produce the movement of individual and/or multiple fryer devices and/or oil removal devices and food transport mechanisms in accordance with the conveyor system discussed above.

According to various embodiments of the present invention, systems, mechanisms, and methods are disclosed for damping vibration in a cooking device subject to vibratory motions. Although the various damping mechanisms discussed herein may be utilized in connection with any number of cooking devices that comprise spinning, rotating, and/or moving elements, a cooking device according to various embodiments is briefly described in order to facilitate discussion of the damping mechanisms.

In accordance with various aspects of the present invention, a cooking device comprises a basket configured to hold the food to be cooked. The basket may be rotated about a shaft centrally disposed in the basket. The shaft itself may be driven by a motor, or the basket may be driven by a motor, and the shaft may be configured to control the rotation about an axis. In other embodiments, a shaft may not be utilized, and a motor may be configured to rotate the basket via a gear, a bearing, a gasket, or the like configured to rotate the basket.

The basket may be disposed within a basket well that is configured to facilitate raising and lowering the basket into and out of different cooking sections. For example, where the cooking device is a spinning fryer device, one section may be the cooking section where the food is cooked in oil, and the other section may be a spinning section where the oil is spun out of the cooked food.

The basket and the basket well may be disposed within a cooking vessel configured to hold the cooking liquid. Various heating elements may be disposed within and/or about the cooking vessel to facilitate heating the cooking liquid. The cooking vessel may be disposed within a body of the cooking device, and a cover may be utilized in connection with the body of the cooking device to form an enclosure within the body of the cooking device and to facilitate maintaining the cooking liquid and the food within the cooking device. The body of the cooking device may have feet to facilitate locating the cooking device in a particular location, such as on a counter or on a kitchen floor.

Although it should be understood that cooking devices of various configurations are contemplated within the scope of the present invention, an exemplary embodiment is disclosed to illustrate various aspects of the invention. FIG.

37, for example, illustrates a fryer device 10 that comprises a hood 12 and a lifting mechanism 14. Hood 12 is configured to enclose a cooking section where food is cooked, and a spinning section and/or liquid removal section where a liquid such as oil is removed from the cooked food. With reference to FIG. 38, fryer device 10 may be configured to house a basket 16 that holds the food to be cooked, and lifting mechanism 14 may be configured to move basket 16 between the cooking section and the liquid removal section.

In accordance with a further embodiment, and with reference to FIGS. 39 and 40, lifting mechanism 14 comprises a lifting arm and/or arms 22 configured to raise and lower lifting plate 20. As illustrated in FIGS. 40-43, lifting plate 18 may comprise a spindle 20 configured to facilitate locating basket 16 on lifting plate 18. Lifting plate 18 and lifting arms 22 are configured to facilitate moving basket 16 between the cooking and liquid removal sections of fryer device 10. The lifting plate 18 and/or lifting arms 22 may include bearings or a frame mounted on bearings and/or gear(s) in such a way as to allow the food basket to spin or rotate. In an embodiment, lifting plate 18 and/or lifting arms 22 are detachable from each other and/or from the cooking device or the lifting mechanism. Removal of lifting plate 18 and/or lifting arms 22 may facilitate cleaning of the cooking device.

Basket 16, according to various embodiments, comprises a central shaft 24, a motor key 26, and motor spindle 28, for example, as illustrated in FIGS. 44-46. Motor spindle 28 and motor key 26 may be configured to interface with a motor gear 30 that is driven by a motor 34 in the hood 12 of cooking device 10 (see, for example, as illustrated in FIG. 40). Motor gear 30 may comprise a plurality of teeth 32 configured to facilitate spinning basket 16 when basket 16 is in the spinning and/or liquid removal section. For example, as basket 16 moves from the cooking section to the spinning section, motor key 26 causes basket 16 to rotate in one direction about spindle 20 to facilitate locating motor key 26 within a groove created by the plurality of teeth 32. Thus, in an exemplary embodiment, motor key 26 in conjunction with the plurality of teeth 32 facilitates automatic seating of motor key 26 with motor gear 30. For example, in an embodiment, the plurality of teeth 32 are configured to cause basket 16 to rotate in a counter-clockwise manner when basket 16 is raised into the spinning position, and the plurality of teeth are configured to cause basket 16 to rotate in a clockwise direction when motor 34 causes motor gear 30 to rotate. Motor 34 may cause motor gear 30 to rotate, and motor key 26 then transmits the rotary motion to shaft 24 and basket 16.

According to an embodiment, motor key 26 and motor gear 30 are configured to automatically engage to facilitate spinning basket 16. For example, an electromagnetic coupling between motor key 26 and motor gear 30 may be configured to secure motor key 26 within teeth 32 of motor gear 30. When basket 16 is raised such that motor key 26 engages motor gear 30, a current may automatically or manually flow through a circuit to create an electromagnetic coupling between motor key 26 and motor gear 30 and/or teeth 32.

It should be understood that although particular lifting mechanisms and rotating mechanisms have been disclosed herein, other lifting and rotating mechanisms are contemplated within the scope of the present invention. For example, PCT Application No. PCT/US2009/040451 discloses various lifting and rotating mechanisms, and the entirety of PCT/US2009/040451 is hereby incorporated herein by reference.

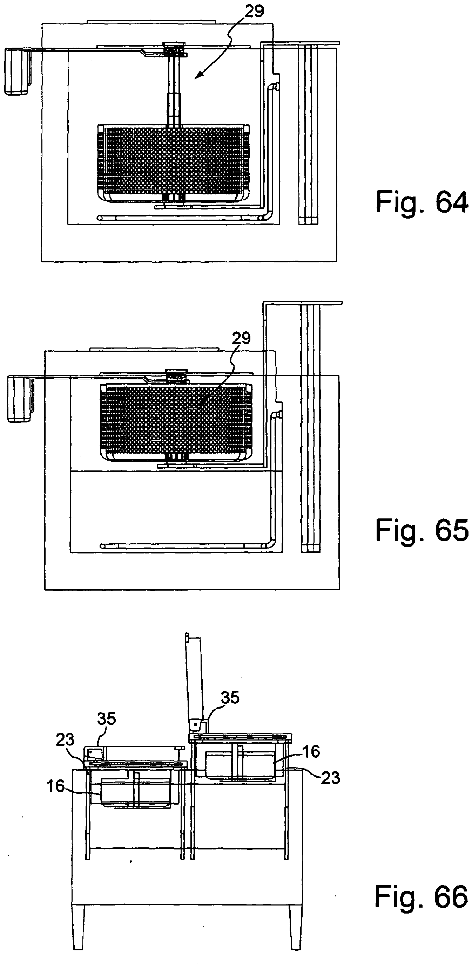

Embodiments of the present invention include various mechanisms for rotating basket 16 in a cooking section and/or in a liquid removal section. For example, lifting plate 18 may include a motor, gear, drive mechanism and the like for rotating basket 16 in the cooking section, such as in the oil in a frying device. In other embodiments, for example, as illustrated in FIGS. 64-65, the cooking device may include a telescoping shaft 29 configured to interface with a motor in hood 12 of cooking device 10 while basket 16 is in the cooking section.

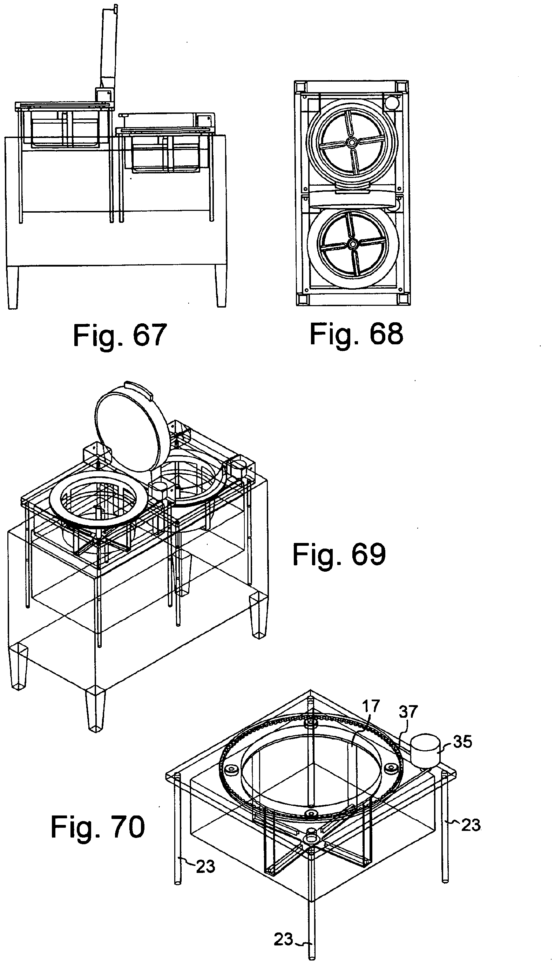

In further embodiments, for example, as illustrated in FIGS. 66 and 70, a basket rotating mechanism may be configured to move with basket 16, such that basket 16 may be spun both in the spinning section and the cooking section. Basket 16 may be disposed within basket well 17 to provide support to basket 16 and/or to facilitate spinning basket 16. In an embodiment, the cooking device includes a rotational motor 35 configured to drive a belt 37, chain drive, loop, gear and/or the like to facilitate rotating basket 16 and/or basket well 17. Motor 35 and basket 16 and/or basket well 17 are movable between the spinning and cooking sections via guide posts 23. Motor 35 may be a variable and/or constant speed motor configured to provide tailored spinning speed based on food, temperature, cooking liquid, desired cooking outcome, and the like. A motor and threaded gear may be proximate one or more of guide posts 23 and may be configured to raise and lower motor 35 and basket 16 assembly. In further embodiments, other lifting mechanisms may be employed to raise and lower motor 35 and basket 16, for example, lifting mechanisms as noted above.

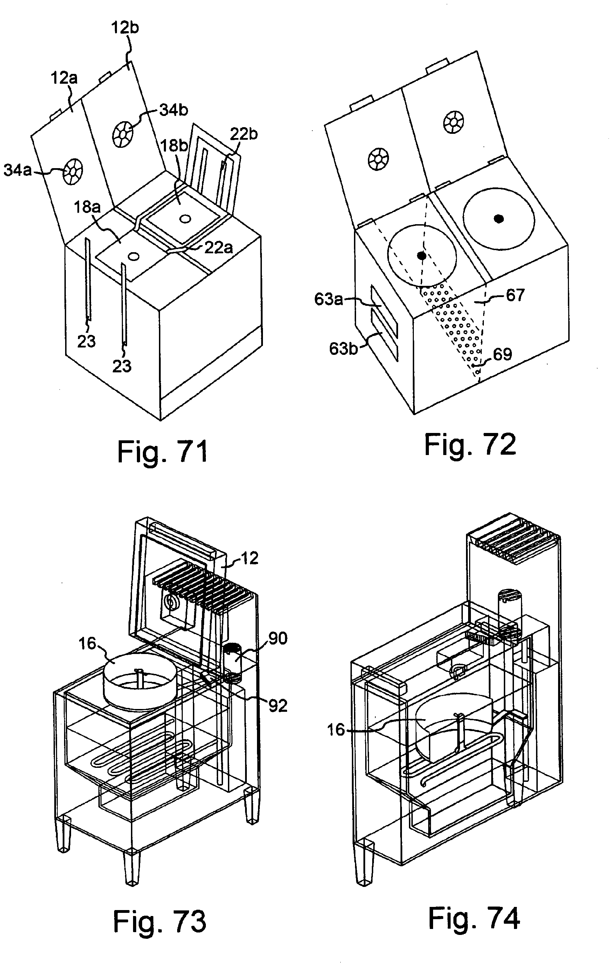

Various embodiments of the invention include multiple means for frying food within the same fryer bay. For example, with continued reference to FIGS. 66-72, multiple baskets 16 may be disposed within the same fryer bay, and these baskets are independently movable between the cooking and spinning sections, independently rotatable, and independently removable from the cooking device. In other embodiments, and with reference to FIG. 71, each basket may have its own lifting plate 18, 18b, and the lifting mechanisms for both baskets are located on one side of the cooking device. Lifting arms 22b are configured to raise and lower lifting plate 18b as discussed above. Lifting arms 22a extend around lifting plate 18b to lifting plate 18a such that lifting plate 18a may be raised and lowered irrespective of the location of lifting plate 18b. Guide posts and/or tracks 23 may be disposed proximate lifting plate 18a and/or lifting plate 18b to facilitate guiding the motion of the lifting plates between the cooking and spinning sections.

According to various embodiments, the cooking device may include a separate cover 12a, 12b and motor 34a, 34b for each of the baskets to facilitate independent operation of each of the baskets. Hinges associated with covers 12a, 12b may be located on any side of covers 12a, 12b that allows covers 12a, 12b to open in a desired manner. For example, the hinges may be located on opposite sides of covers 12a, 12b such that the covers open away from each other. The hinges may further be located on adjacent and/or neighboring ides of covers 12a, 1b, such that the covers open towards each other. In still other embodiments, a hinge for cover 12a may be located towards the front of the cooking device, and a hinge for cover 12b may be located towards the back of the cooking device, such that covers 12a, 12b open away from each other and towards the front and back of the cooking device respectively.

Different environmental and operating conditions may necessitate and/or utilize various configurations of the hinges so that opening and closing of covers 12a, 12b may be accomplished given the particular environmental and operating conditions. For example, portions of the cooking device, such as a lifting mechanism, filter, exhaust port, and the like may be located near covers 12a, 12b. Such configurations may require that covers 12a, 12b open in a particular manner so as to avoid hitting the portions of the cooking device when opening and/or closing covers 12a, 12b. Various embodiments include covers 12a, 12b that have removable and/or modifiable hinges. For example, covers 12a, 12b may open in a certain manner for a given set of operating conditions, and the hinges may be moved from one side of covers 12a, 12b to another side of the covers in order to accommodate different operating conditions.

In accordance with a further embodiment, and with reference to FIG. 72, a cooking device with two baskets may include a separating portion between each of the baskets. In the spinning section, for example, a substantially solid plate 67 may be utilized to prevent food particles from one basket being spun into the cooking/spinning section of the other basket. Additionally, in the cooking section, a perforated plate 69 may be utilized to allow the cooking liquid to move between the cooking areas for both baskets, but may prevent migration of larger cooking debris between each of the areas. In other embodiments, perforated plate 69 may not be utilized, and in further embodiments, solid plate 67 may extend through the spinning and cooking sections to facilitate maintaining the cooking liquid separate for each of the baskets. One or more controllers 63a, 63b may be utilized to provide independent, individualized, and/or simultaneous control of each of the baskets.

In accordance with another embodiment, the cooking device may comprise a mister configured to moisten, dampen and/or wet the cooked food after and/or during the spinning process. For example, it may be desirable to add salt and/or other seasonings to a food (e.g., french fries) after the cooking process, but with the reduced cooking liquid content of the cooked food after the spinning process, sufficient liquid may not be present on the surface of the cooked food to allow the seasonings to stick to the food. Therefore, a misting device may distribute an amount of a liquid sufficient to allow the seasoning to adhere to the cooked food. The misting device may be configured to provide the misting liquid at an elevated temperature to facilitate maintaining an elevated temperature of the cooked food. The misting device may be controlled manually and/or automatically, for example, via a microcontroller configured to control various aspects of the cooking device.

Further, according to an embodiment, the cooking device may include different components and/or mechanisms for facilitating cleaning the cooking device. For example, a removable shield may be disposed along the internal sides of the cooking device (e.g., within a bay of a fryer), or the shield may be a cylindrical shield disposed a certain distance from the rotating food basket. These shields may be removed so that food and/or oil residue may be cleaned from the surfaces. Additionally, in another embodiment, a gutter may be disposed along the internal sides of the cooking device such that the gutter is configured to catch oil and/or food particles that are spun off the food during the spinning process. The gutter may reduce debris deposited in the cooking liquid by catching the debris. The gutter may be removable to facilitate removing the debris from the gutter and otherwise cleaning the gutter.

In accordance with various embodiments, cooking devices as disclosed herein may be used in conjunction with existing cooking devices to retrofit the existing cooking device with the devices disclosed herein. Existing cooking devices may also be designed to incorporate aspects of the present invention. For example, with reference to FIGS. 37-42, an open bay fryer may be fitted with lifting plate 18, basket 16, cover 12 and/or other aspects of the present invention to facilitate operating the open bay fryer as a closed fryer with spinning capabilities as disclosed herein.

Adding cover 12, in various embodiments, to an open bay fryer, or utilizing cover 12 in a centrifugal cooking device, allows for energy savings due at least in part to a more efficient heating system. For example, utilizing cover 12 in a fryer as illustrated in FIGS. 37-42 results in an energy savings of about 13%, or about 10-15% or more compared to operating the fryer without cover 12. Cover 12, in various aspects of the present invention acts as a thermal break keeping the surface heat, air heat, and/or oil heat from being removed from the fryer, for example, from being removed by the exhaust system, ventilation system, and/or other systems or mechanisms (e.g., heat loss to the ambient environment). Additionally, cover 12 in various embodiments includes an oil filter to facilitate removing oil from the air in the spinning section before the oil is exhausted from the cooking device. Furthermore, retrofitting existing cooking devices according to various embodiments facilitates utilizing existing energy efficient heating systems in those existing cooking devices, such as those devices that employ heating systems with tube designs.

According to a further embodiment, and with reference to FIGS. 38 and 40, cover 12 comprises a lip 11 disposed at the end of cover 12 opposite where cover 12 hinges to cooking device 10. Lip 11 is angled toward the inside of cooking device 10. When cover 12 is closed, lip 11 is configured to extend at least partially below the surface upon which cover 12 rests. As basket 16 spins liquid off the cooked food in the spinning section, lip 11 is configured to catch at least some of the liquid to prevent the liquid from exiting cooking device 10. Additionally, lip 11 may be configured to prevent a straight edge at the side of cover 12 where lip 11 is located-without lip 11, cover 12 may exhibit a guillotine-type effect when cover 12 is closed, potentially resulting in an unsafe operating condition.

In accordance with various embodiments of the present invention, cooking device 10 may utilize different mechanisms for heating the cooking liquid. For example, electrical heating elements may run through and/or proximate to the cooking section. A gas flame burner may be utilized to heat the oil. In certain embodiments, tube heating may be employed, for example, where tubes carrying a liquid and/or gas coolant at an elevated temperature run through and/or proximate to the liquid in the cooking section. To conserve energy and to facilitate making the heating process more efficient, exhaust heat from the spinning section of the cooking device may be utilized to preheat and/or reheat the coolant running through the heating tubes.

In embodiments of a dual basket fryer as illustrated in FIGS. 66-72, different heating mechanisms may be utilized to heat each section, but it should be understood that the same heating mechanism may be utilized to heat the cooking liquid in both sections. For example, the first section may employ electrical heating elements, and the second section may employ tube heating elements. Exhaust heat from the first section may be utilized to preheat and/or reheat a coolant in the tube heating elements in the second section, thereby increasing efficiency and decreasing energy consumption of the dual basket fryer.

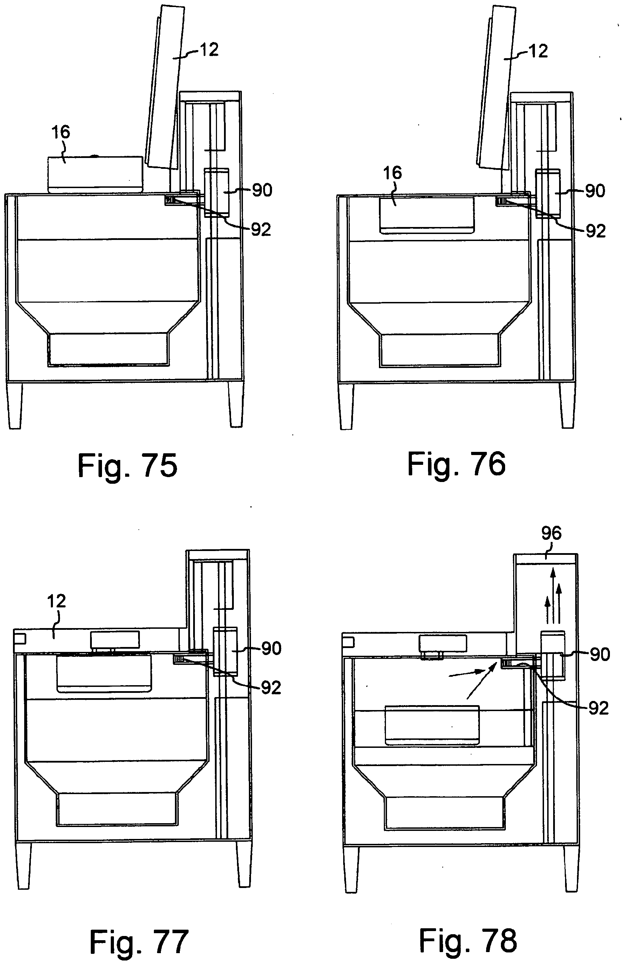

According to further embodiments, it may be desirable to create a vacuum and/or substantially reduce the pressure in the cooking device. Reducing the pressure during frying facilitates a lower frying temperature and longer oil life. Reducing the pressure during spinning may facilitate better oil removal from the cooked food. For example, with reference to FIGS. 73-78, cooking device 10 comprises vacuum motor 90 and vacuum vent 92. Cooking device 10 may comprise a plurality of vacuum motors 90 and vacuum vents 92.

With cover 12 open, basket 16 may be configured to extend above the fryer bay to facilitate removing the basket and loading and unloading cooked food. Once basket 16 is filled with food, it is lowered into the cooking device, and cover 12 is closed and sealed. Basket 16 is lowered into the cooking section, and vacuum motor 90 removes air from the cooking and spinning sections via vacuum vent 92 until a suitable pressure level is reached. Air removed from the cooking and spinning sections may be vented externally to the cooking device via exhaust vent 96. In an embodiment as mentioned above, the removed air may be utilized to reheat and/or preheat coolant in heating tubes that may be employed to heat the cooking liquid. After cooking is completed, basket 16 is raised to the spinning section, and the pressure level may be altered or maintained during spinning to achieve the desired outcome for the cooked food.

These aspects of a centrifugal cooking device are configured to individually and/or collectively affect the outcome of food that is cooked in the centrifugal cooking device. For example, spinning oil out of fried food may result in up to approximately a 24% decrease in fat calories. This reduced oil content results in a desirable difference in taste of the fried food because the fried food is crispy on the outside without an oily residue. Furthermore, up to approximately 48.8% less oil is consumed during cooking because it is spun off the food, thereby resulting in less oil loss. In embodiments where gas is used to heat the oil, gas consumption may be reduced by up to approximately 13.1%. Many other advantages may apparent to one skilled in the art.

Vibration in cooking devices with rotating parts may be caused when oscillatory actions occur around an equilibrium point. This circumstance may occur in a fryer device that includes a basket or container of food that is spun to remove excess oil from the food. Spinning in and of itself may cause these oscillatory actions. Additionally, if the food load in the basket is not equally distributed, the oscillatory actions may be exacerbated creating more vibration.

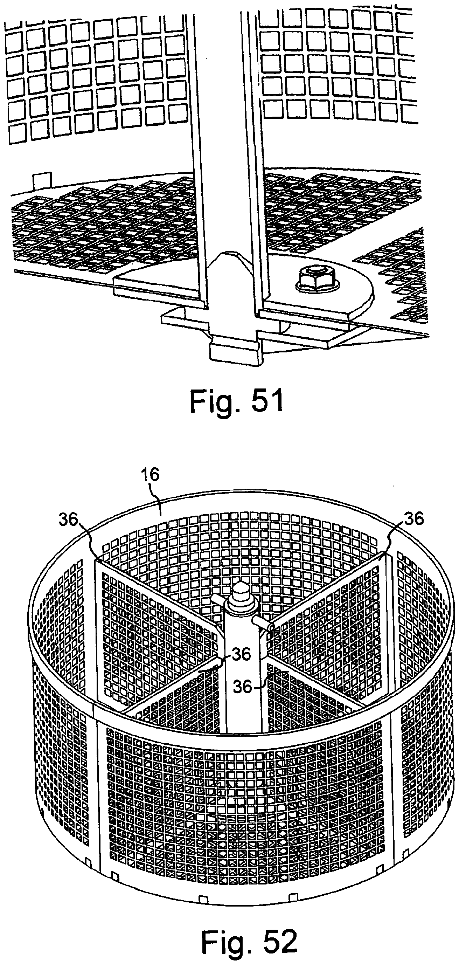

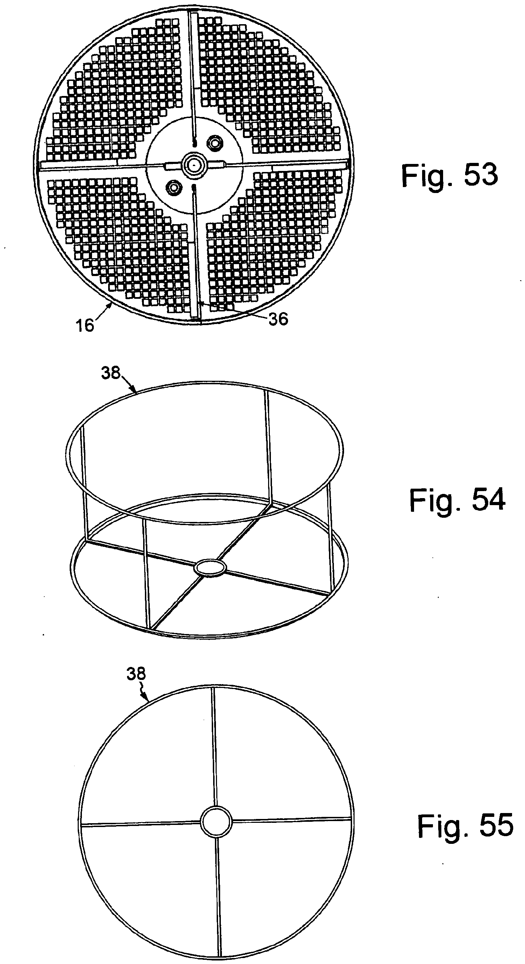

In accordance with various embodiments, the vibration generated by the spinning basket may be reduced by balancing the load within the fryer basket or container. The basket may be partitioned in such a way as to create a balanced load, for example, as illustrated in FIGS. 52-53, basket 16 may comprise basket partitions 36. Fried foods, when placed in the fry vessel containing the frying oil, may migrate as they are cooked. Creating partitions 26 within the fry basket or container may thus facilitate restricting this migration and maintaining a balanced or substantially balanced load. In other embodiments, basket 16 may comprise shelves and/or horizontal inserts configured to create layers in basket 16 to facilitate distributing the food in basket 16 and/or to accommodate different foods in the same basket.

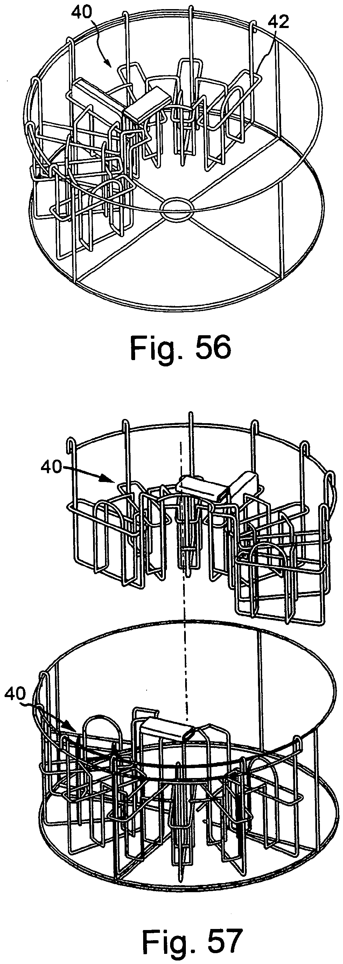

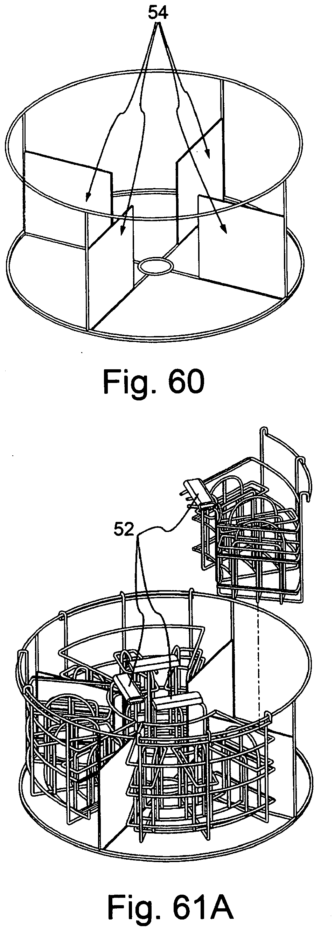

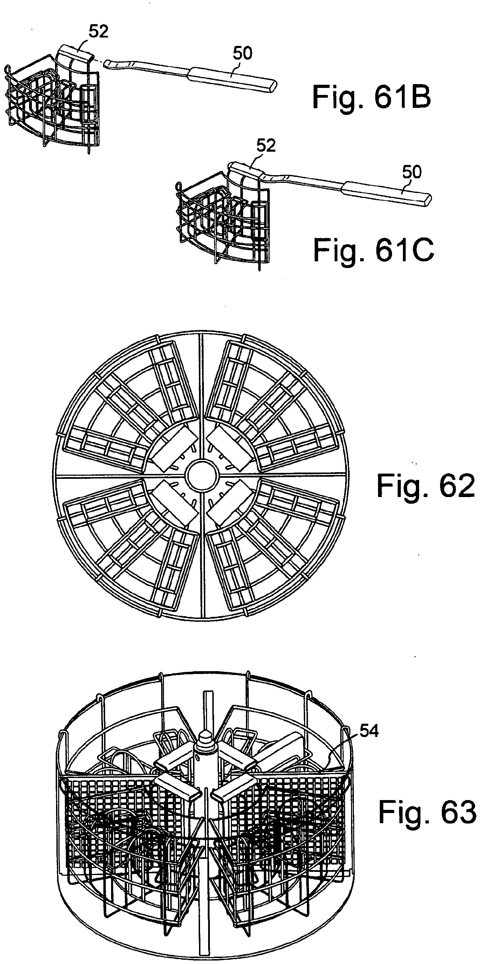

In an embodiment, as illustrated for example in FIGS. 44-45, basket 16 may comprise a wire frame 38 configured to hold one or more basket inserts. For example, different basket inserts may be configured to hold different types of food to be fried, or basket inserts may facilitate frying different types of foods in different orientations within basket 16. Various embodiments of the present invention comprise different numbers of basket inserts 40, for example 2 (as illustrated in FIG. 57), 3, 4 (as illustrated in FIG. 61), or more. It should be understood that the basket inserts may be used with basket 16 with or without wire frame 38.

With reference to FIG. 56, in accordance with various aspects of the present invention, basket insert 40 may comprise a plurality of slots configured to maintain a food in a substantially vertical orientation. For example, it may be desirable to maintain hash brown patties in a substantially vertical orientation during the cooking and spinning processes. In other embodiments, it may be desirable to hold the hash browns in a substantially horizontal orientation or in a tilted orientation. For example, it may desirable to hold the hash browns in a tilted orientation so that the oil may run off the hash brown. In various embodiments, the plurality of slots may thus be configured to be horizontal and/or tilted slots. Further, the plurality of slots may be movable and/or rotatable to facilitate changing the orientation of the slots.

In accordance with further embodiments, the cooking device may be configured to cook cylindrical shaped food such as hot dogs, corn dogs or sausages. Similar to the slots illustrated in FIG. 56 for hash browns, cylindrical tubes may be utilized in connection with basket insert 40 to facilitate cooking and/or frying hot dogs, corn dogs and/or sausages. The cylindrical tubes may be oriented in vertical, horizontal or tilted orientations, depending on the type of food being cooked, the method of cooking (e.g., boiling, frying, etc.), and/or the desired outcome of the food. It should be understood that any food capable of being cooked in a liquid may be cooked in the cooking device disclosed herein, and any basket insert that would facilitate cooking these foods is contemplated within the scope of the present invention.

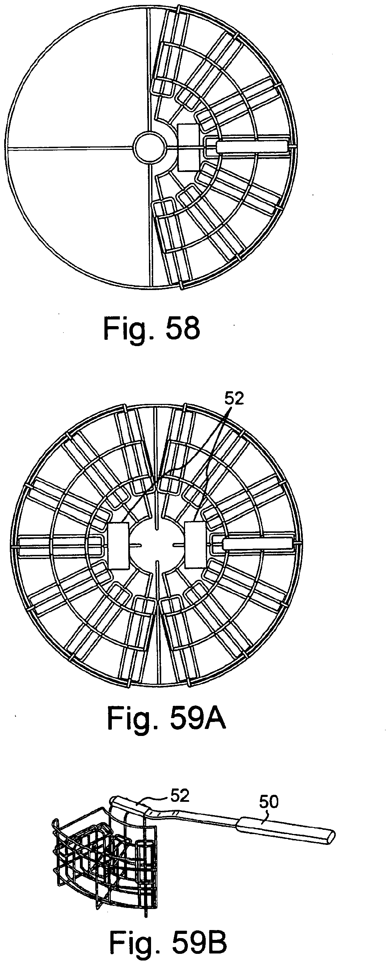

According to various embodiments, and with reference to FIGS. 59 and 61, basket inserts 40 may comprise a handle slot 52 configured to receive a handle 50. Handle 50 may be utilized to facilitate removing basket inserts 40 from basket 16 and/or wire frame 38. For example, handle 50 may be inserted into handle slot 52 before, during, or after the cooking or spinning processes to facilitate inserting basket insert 40 into and/or removing basket insert 40 from basket 16 and/or wire frame 38.

In accordance with an embodiment, and with reference to FIG. 60, wire frame 38 comprises a vertical portion 54. Vertical portion 54 may be a solid or substantially solid wall configured to separate portions of wire frame 38. For example, vertical portion 54 may facilitate defining sections of wire frame 38 into which basket inserts 40 may be inserted. Vertical portions 54 may facilitate centering and/or locating basket inserts 40 within wire frame 38. In various embodiments, for example, as illustrated in FIG. 63, vertical portions 54 may include mesh portions. In further embodiments, vertical portions 54 may exist in basket 16, and may facilitate cooking a food without using inserts 40.

Further, according to an aspect of the present invention, it may be desirable to utilize basket materials that facilitate reducing vibration in the cooking device. Basket 16 may be constructed out of stainless steel to provide a rugged basket that is resistant to damage. However, heavier baskets may create greater vibration during spinning. Therefore, it may be desirable to utilize lighter weight basket materials, such as aluminum, composites, ceramics, high-temperature polymers, and the like. Any material may be used that is configured to withstand the high operating temperatures and that is safe for use in connection with food products. In an embodiment, meshes of between approximately 8 squares per inch and approximately 16 squares per inch may be utilized.

Notwithstanding the placement of partitions in the fry basket and/or using basket inserts, unbalanced loads may still occur in the fry basket. When this condition of an unbalanced load occurs, further action may be utilized to reduce and/or eliminate vibration generated by the spinning of the fry basket.

Vibration may be transmitted through solid materials so that substantial isolation of specific areas of the fryer may serve to reduce or "damp" the vibration. Where a fry vessel is rigidly affixed to a frame of a fryer device, vibrations that affect the fry vessel may be transmitted to the frame of the fryer device. Hence, according to various embodiments, substantially isolating the fry vessel from the frame by means of damping techniques may serve to absorb and thereby reduce the vibration of the entire fryer device. This damping process may include having the fry vessel mounted on springs or other energy absorbing materials designed to handle heat and oil. This damping process may occur at the edge of the fry vessel, under the fry vessel, or at any other location configured to facilitate damping the vibrations to which the fry vessel and/or fryer device are subject.

Vibratory energy may be transmitted to the frame of the fryer in many ways. If the damping procedures on the fry vessel are inadequate or do not sufficiently absorb the energy of the vibration caused by the spin motion, then further damping procedures may be employed on the frame of the fryer. In an embodiment, the damping mechanism may be employed in the area where the fryer frame comes in contact with the floor or counter top where the fryer device is mounted and/or positioned. The damping techniques employed according to various embodiments may be springs or energy absorbing materials configured to operate in a heated, oil laden environment. These absorption devices may be mounted on or about the "feet" or supports for the fryer frame. In other embodiments, affixing the fryer frame to the floor or countertop through the use of bolts or locking devices may also serve to help absorb vibratory energy.

In accordance with further aspects of the invention, as the basket spins within the fryer, the spinning may cause vibration within the fryer. If the food becomes unequally distributed within the fryer, additional vibration may occur. Vibration is undesirable, particularly in counter top models, because the fryer may walk off the counter. Further, in large fryer applications, vibrations may substantially increase the noise in the area where the fryer is located.

In an embodiment of the cooking device comprising a spinning shaft, one end of the shaft may have a spring or other vibration damping mechanism to absorb energy and reduce vibration. The spring may be at either end of the shaft and may be enclosed by a compartment configured to receive one end of the shaft and to allow the shaft to rotate with or without the spring also rotating. A spring or other damping device may be used to connect the basket to the shaft to facilitate damping vibrations generated when the basket is spinning. In another embodiment, a bearing may be configured to interface with the shaft to facilitate rotation of the shaft. The bearing may comprise a vibration damping material, or the bearing may be disposed in a bearing block comprising vibration damping material such as rubber.

In accordance with a further embodiment, as discussed above, a lifting plate may be utilized to facilitate raising and lowering the basket. The lifting plate (or other support for the basket) may be secured to the fryer via a connector that provides damping functionality. For example, a spring may be connected between the lifting plate and the body of the fryer. In such a configuration, the spring may be configured to absorb vibration energy generated by the spinning basket and transmitted to the lifting plate. In further embodiments, a damping mechanism may be deployed between the lifting plate and the basket to facilitate damping vibrations when the basket is spinning (for example, between basket 16 and spindle 20 as illustrated in FIG. 47). In other embodiments, the lifting plate may comprise damping material itself.

In accordance with another embodiment, the cooking device may comprise a frame disposed within the cooking device that is configured to provide support to the cooking device. The frame of the cooking device may have vibration damping elements, for example, in the legs of the frame or the body of the cooking device. The frame inside the body of the cooking device may be secured to the body via vibration damping mechanisms such as springs. For example, shafts with corresponding springs may be used as shock absorbers at each corner of the frame to facilitate damping vibrations. A vibration damping material such as foam rubber may be disposed between the frame and the body of the cooking device and/or between the cooking vessel and the body of the cooking device, thereby absorbing vibration generated within the cooking vessel before it is transmitted to the body of the cooking device. In accordance with another embodiment, springs may be attached between the cooking vessel and the body and/or frame of the cooking device to facilitate absorbing vibration of the cooking vessel generated when the basket spins within the cooking vessel. The cooking device may also be mounted on a surface that is configured to damp vibrations.

In accordance with further embodiments, the cooking vessel may have rods mounted about the circumference of the cooking vessel. The rods may be secured to the lid of the cooking device, to the frame of the cooking device, or to the body of the cooking device. Where the rods interface with the cooking device, a damping mechanism may be disposed between the rods and the body. For example, springs may be disposed about the rod at the end where it connects to the cooking device and may be configured to be slightly movable with respect to the cooking device. For example, when the cooking vessel vibrates, the rods may move slightly with resistance from the springs, such that vibration energy is absorbed by the springs. In another embodiment, the rods may be flexible rods and they may extend to the bottom of the cooking device where they contact the surface whereon the cooking device sits. Springs or other vibration damping means may be disposed in feet configured to receive the flexible rods in order to further facilitate damping vibrations. In another embodiment, a vibration damping material such as rubber may be disposed between the cooking vessel and the body of the cooking device and/or where the cooking vessel is connected to the body of the cooking device.

In various embodiments, the cooking device may have legs configured to locate the cooking device in a desired location. The legs of the cooking device may comprise a vibration damping material such as rubber. The legs may further comprise other vibration damping mechanisms such as springs disposed in the legs of the cooking device, for example, where a rod is secured to the fryer, and the other end of the rod is disposed within a spring and configured to compress the spring into a foot wherein the spring is disposed.

In accordance with an embodiment where a motor may be mounted within the lid of the cooking device (for example, as illustrated in FIGS. 37-42), the lid-mounted motor may comprise a housing that includes a vibration damping mechanism. For example, the housing may comprise rubber or another vibration damping material. The rubber may facilitate absorbing vibration generated by the spinning motor and/or basket such that the transmission of the vibratory oscillations to the lid of the cooking device is substantially reduced.

In other embodiments, various motors may be secured within the cooking device via a clamp and/or bracket. The clamp or bracket may comprise bolts configured to facilitate operation of the clamp or bracket. A spring may be disposed around the bolts between the faces of the clamp, such that the spring may facilitate absorbing vibrations generated by the motor.

Further embodiments comprise a lazy suzie-type disk disposed within the opening of the cooking basket to facilitate rotating the basket. The lazy suzie disk may be configured to interface with the basket or basket well via a vibration damping material such as rubber. For example, a gasket may be disposed between the disk and the basket well and/or basket such that the rubber absorbs vibration energy generated by spinning the basket.

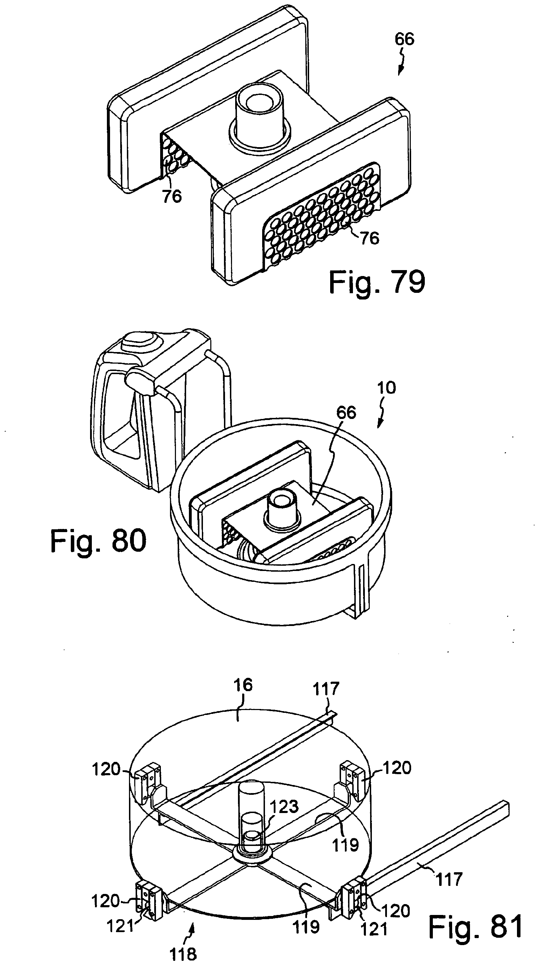

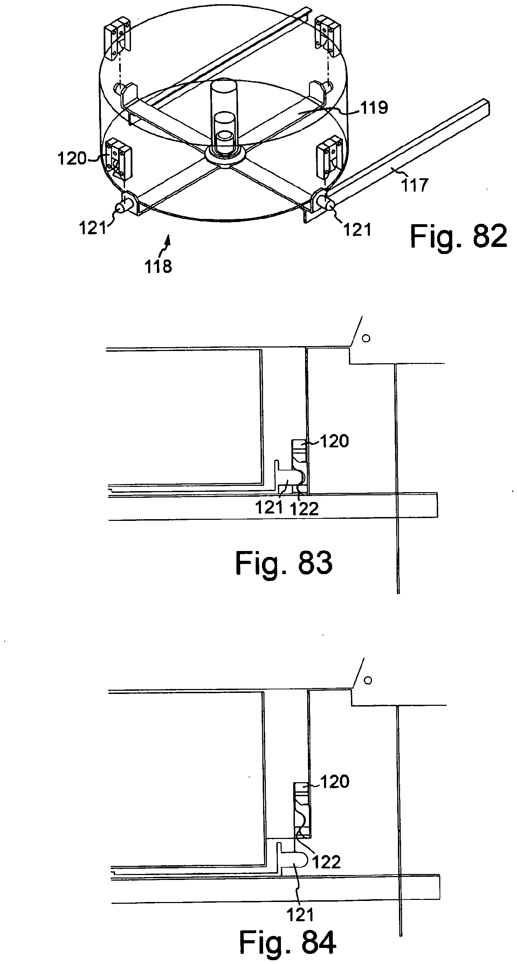

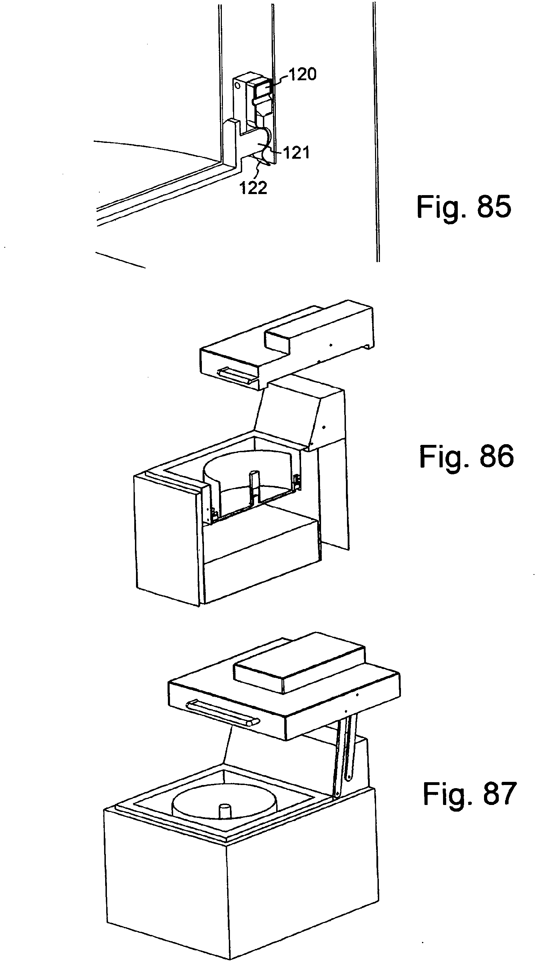

According to another embodiment for vibration damping, with reference to FIGS. 81-89, basket 16 may be configured to be rotatably connected to a cross bar 118. Cross bar 118 may include four or more cross bar members 119. Two collinear cross bar members 119 are configured to receive lift arms 117 that facilitate raising and lowering basket 16 in connection with a lift mechanism. Cross bar members 119 interface with basket 16 via spindle 123 to facilitate rotation of basket 16 with respect to cross bar 118. Spring docking stations 120 are disposed about the vertical side of the inside of cooking device 10 proximate the location of the ends of cross bar members 119. Balls 121 on cross bar members 119 interface with spring 122 in spring docking station 120. Basket 16 transmits vibration energy to cross bar 118 during spinning, and spring docking stations 120 are configured to absorb some of that vibration energy to reduce the amount of vibration transferred to the cooking device itself.

In accordance with various embodiments, and with reference to FIGS. 79-80 cooking device 10 may be configured to cook hash browns utilizing a hash brown basket 66. Hash brown basket 66 has two or more hash brown holders 76 disposed opposite each other that are configured to hold hash browns in a substantially vertical orientation. Vertically orienting the hash browns is desirable to prevent disintegration during the spinning process. Hash brown holders 76 are connected to a center shaft that is configured to fit with a center post driven by a rotational motor to facilitate spinning hash brown basket 66.

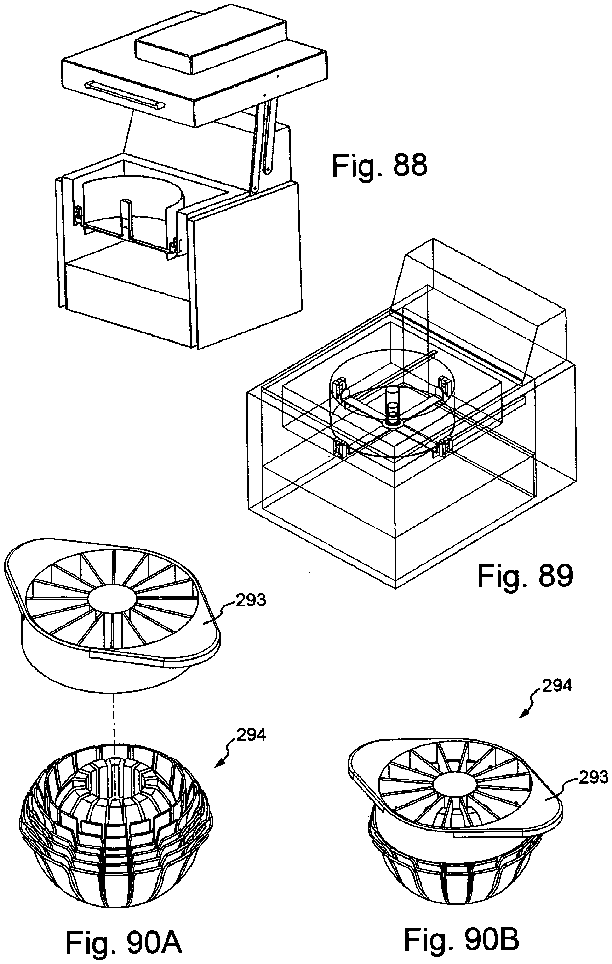

According to an embodiment of the present invention, and with respect to FIGS. 90A-93, a centrifugal cooking device may be configured to fry an onion. Onion slicer 293 may be configured to cut the center out of onion 294, while slicing partially through onion 294 such that part of the connecting web of onion 294 remains intact. Onion basket 295 is configured to receive onion 294 via the hole left by the center of the onion that was removed. Onion cover 296 is configured to be inserted into the top of onion 294, and may be utilized to facilitate maintaining the onion intact during the spinning process.

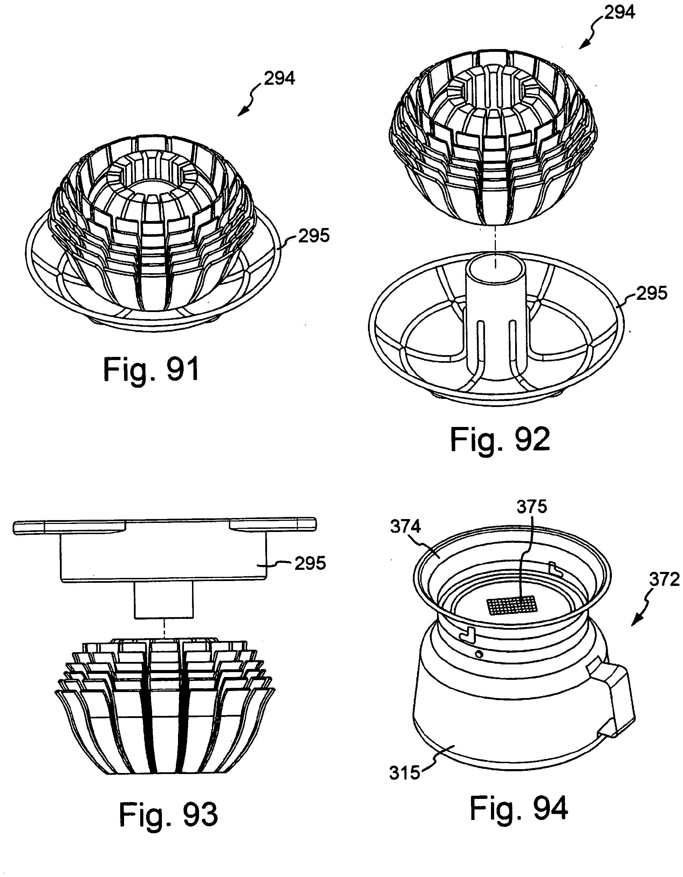

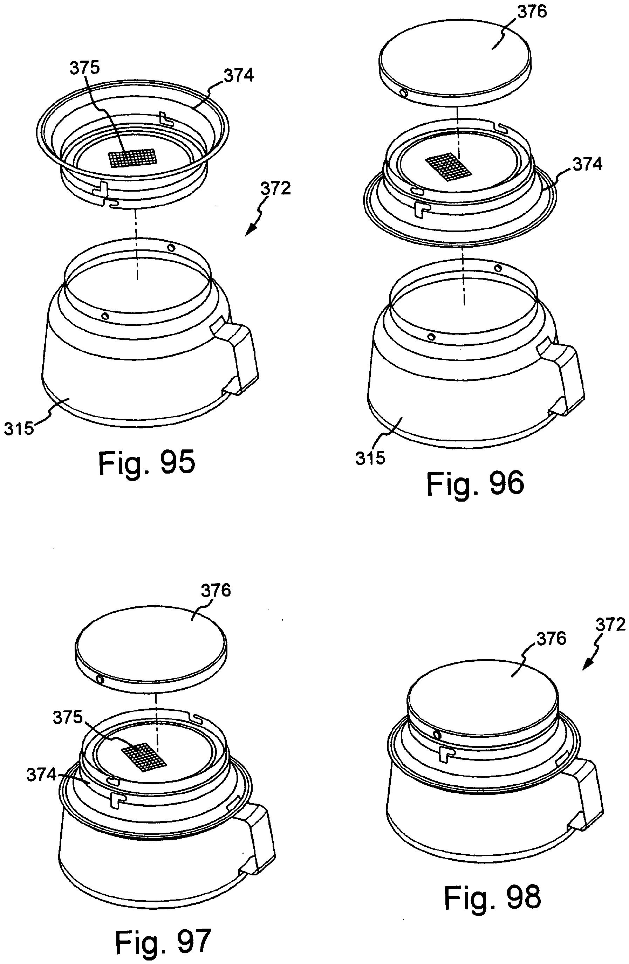

In accordance with an embodiment, and with reference to FIGS. 94-98, a separate oil filter may be used to filter and/or store cooking oil. Oil filter 372 comprises a base 373 that may be made of stainless steel or other suitable material for high temperature and storage of oil. Oil filter 372 may further comprise a funnel filter portion 374 that includes filter element 375. Funnel filter portion 374 may be secured to base 373 with the funnel portion upwards for receiving oil. As oil is poured through filter element 375, impurities from the oil are removed. Filter portion 374 may then be cleaned and inverted before being reattached to base 373 for oil storage. Oil filter 372 further comprises a cover 330 configured to be attached to filter portion 374 in its inverted position (see, e.g., FIGS. 96-98) to prevent oil spillage during storage.

In other embodiments of the invention, a controller is provided which controls the operation of the various motors, devices, components, conditions and processes to allow for substantially complete automation of the cooking device. Although the term "controller" may be used to describe the electronic and/or automated controlling of various processes, it should be appreciated that such functionality may be realized by any number of hardware and/or software components configured to perform the specified functions. For example, various embodiments may employ various integrated circuit components (e.g., memory elements, processing elements, logic elements, look-up tables, and/or the like), which may carry out a variety of functions under the control of one or more microprocessors or other control devices. Similarly, the software elements of the various embodiments may be implemented with any programming or scripting language such as C, C++, Java, COBOL, assembler, PERL, Visual Basic, SQL Stored Procedures, extensible markup language (XML), with the various algorithms being implemented with any combination of data structures, objects, processes, routines or other programming elements. Further, it should be noted that the present invention may employ any number of conventional techniques for data transmission, signaling, data processing, network control, and/or the like.

The "controllers" discussed herein may also comprise computing systems including a processor configured to process digital data, a memory coupled to the processor for storing digital data, an input digitizer coupled to the processor for inputting digital data, an application program stored in the memory and accessible by the processor for directing processing of digital data by the processor, a display coupled to the processor and memory for displaying information derived from digital data processed by the processor and a plurality of databases, the databases including cooking, temperature, food type and like data that may be used in association with the present embodiments. As those skilled in the art may appreciate, a user interface for each system described herein may be configured to include an operating system (e.g., Windows NT, 95/98/2000/XP/Vista, Linux, Unix, Solaris, etc.) as well as various conventional support software and drivers typically associated with computers.

Various information and data are described herein as being "stored." In this context, "stored" may mean that the information is kept on a database. In accordance with the various embodiments, a database may be any type of database, such as relational, hierarchical, object-oriented, and/or the like. Common database products that may be used to implement the databases include DB2 by IBM (White Plains, New York), any of the database products available from Oracle Corporation (Redwood Shores, California), Microsoft Access or MSSQL by Microsoft Corporation (Redmond, Washington), or any other database product. Databases may be organized in any suitable manner, including as data tables or lookup tables. Association of certain data may be accomplished through any data association technique known and practiced in the art. For example, the association may be accomplished either manually or automatically. Association techniques include common techniques such as using a key field in the tables to speed searches, sequential searches through all the tables and files, and sorting records in the file according to a known order to simplify lookup. In other embodiments, data may not be stored in a database, but may be stored by any other known means for storing data.

In accordance with various embodiments, any suitable data storage technique may be utilized to store data. Data sets may be stored using any suitable technique, including, for example, storing individual files using an ISO/IEC 7816-4 file structure; implementing a domain whereby a dedicated file is selected that exposes one or more elementary files containing one or more data sets; using data sets stored in individual files using a hierarchical filing system; data sets stored as records in a single file (including compression, SQL accessible, hashed via one or more keys, numeric, alphabetical by first tuple, etc.); block of binary (BLOB); stored as ungrouped data elements encoded using ISO/IEC 7816-6 data elements; stored as ungrouped data elements encoded using ISO/IEC Abstract Syntax Notation (ASN.1) as in ISO/IEC 8824 and 8825; and/or other proprietary techniques that may include fractal compression methods, image compression methods, etc.

An embodiment of the invention comprises a storage medium configured to provide instructions to a computer processor for carrying out the various cooking processes and steps disclosed herein. As used in this application, "storage medium" may be anything capable of storing information, for example, magnetic tape, RAM, ROM, compact disc media, flash memory, solid state memory, and the like. As mentioned above, a processor may be any device capable of reading and/or accessing the storage medium, and the processor may be configured to be part of the controller. In other embodiments, the processor may be separate from the controller.

In some embodiments, the computer processor may be configured to receive a number of inputs from a user, such as food type, cook time, spin time, cook temperature, spin temperature, spin speed, and food result (e.g., rare, medium rare, medium, medium well, well). In other embodiments, the user may provide only some of the above inputs, and the processor may be configured to automatically calculate and/or produce the other inputs. Any inputs relevant to the functionality of the cooking device may be received from a user and/or produced automatically by the processor. The processor may be configured to receive the inputs from a user interface and/or via algorithms, pre-loaded instructions, and/or other processes that do not require user input.

The storage medium may further provide instructions to the processor such that the processor may be configured to (1) open and/or close the fryer drawer and/or lid; (2) move the basket between the cooking and spinning sections; (3) maintain a desired temperature in the cooking and spinning sections; (4) allow the cooked food to remain in the cooking section for a desired cook time; (5) rotate the basket well and/or food basket in the spinning section for a desired spin time; (6) set speeds for the various motors; (7) perform misting after spinning; (8) control electric coupling of the motor key and motor gear; and/or (9) perform other functions contemplated within the scope of this disclosure. It should be understood that any of the above functions may be performed automatically by the processor, and/or certain of the functions may be performed by the processor, and others may be performed manually. In further embodiments, the storage medium may be configured to instruct the processor to store a number of pre-configured cooking procedures depending on various types of food, food results, users, operating conditions, and the like. Where such a pre-configured procedure is employed, a user may need to only make one or a limited number of choices, and the processor may then fully automatically complete the cooking process. In other embodiments, the processor may require user input at various times during the cooking process.

In an embodiment, a user may input a food type and a desired food result via a user interface on the frying device. In other embodiments, a user may provide inputs to the cooking device via a network connection, such as via Internet, Ethernet, cellular, wireless, wired satellite, infrared, radio frequency and the like network and/or communications systems.

Various principles of the present invention have been described in embodiments. However, many combinations and modifications of the above-described structures, arrangements, proportions, elements, materials, and components, used in the practice of the invention, in addition to those not specifically described, can be varied without departing from those principles. Various embodiments have been described as comprising automatic processes, but these processes may be performed manually without departing from the scope of the present invention.

Although various embodiments are disclosed herein, it should be understood that other embodiments exist which are not disclosed. Further, various embodiments disclosed herein may be used together with other embodiments, so that when "an embodiment" is described, it is not intended to be exclusive of other embodiments unless expressly stated as such. Therefore, although "further embodiments," "another embodiment," and the like may be used to describe the various embodiments presented herein, such language is not limiting and/or exclusive of other embodiments. Various combinations of the embodiments presented herein may be used without departing from the scope of the present disclosure.

Additionally, benefits, other advantages, and solutions to problems have been described herein with regard to various embodiments. However, the benefits, advantages, solutions to problems, and any elements that may cause any benefit, advantage, or solution to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Furthermore, no element, component, or method step in the present disclosure is intended to be dedicated to the public regardless of whether the element, component, or method step is explicitly recited in the claims. No claim element herein is to be construed under the provisions of 35 U.S.C. 112, sixth paragraph, unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

Clauses

Clause 1. A rotatable food basket for a cooking device, the rotatable food basket comprising:

a first section;
a second section;
a lifting plate coupling for rotatably connecting the rotatable food basket to a lifting plate operable to move the rotatable food basket between a cooking section and a spinning section;
a first basket portion disposed within the first section of the rotatable food basket, the first basket portion comprising a first handle slot;
a second basket portion disposed within the second section of the rotatable food basket, the second basket portion comprising a second handle slot, wherein the first handle slot and the second handle slot are configured to receive a handle to facilitate removal of the first basket portion and the second basket portion from the rotatable food basket; and
a food slot configured to hold a food in a substantially vertical orientation, wherein the first basket portion, the second basket portion, and the food slot facilitate maintaining a substantially equal distribution of a food in the rotatable food basket while the rotatable food basket is rotating.

Cause 2. A centrifugal liquid removal device, comprising:

a horizontal surface;
a vertical surface forming a food compartment together with the horizontal surface, wherein the food compartment is a cylindrical basket comprising a mesh covering at least one of the horizontal surface and the vertical surface;
a particle basket disposed about the cylindrical basket, wherein the particle basket has a particle mesh that is finer than the mesh covering at least one of the horizontal surface and the vertical surface;
a submerser plate configured to maintain the food in a cooking section of the food compartment;
a first stackable portion that comprises at least a portion of the horizontal surface and the vertical surface, wherein the first stackable portion is configured to receive a first type of food;
a second stackable portion configured to receive a second type of food;
a plurality of segments configured to distribute the food within the centrifugal liquid removal device, wherein the plurality of segments comprises at least one of two compartments, three compartments, four compartments, five compartments, and six compartments; and
a gear interfacing with at least one of the horizontal surface and the vertical surface to facilitate rotating the food compartment to remove a liquid from a food;
wherein the food compartment is configured to hold at least one of french fries, hash browns, meat patties, vegetable patties, fish, chicken nuggets, chicken, fish, pork, beef, meat, taco shells, ice cream, chocolate, fruit, strawberries, potatoes, hot dogs, corn dogs, and sausages.

Clause 3. A cooking device, comprising:

a rotatable food basket disposed within the cooking device;
a damping mechanism configured to reduce a vibration generated by the rotatable food basket rotating within the cooking device;
a lifting plate and a lifting mechanism operable to move the rotatable food basket between a cooking section and a spinning section;
a first basket portion and a second basket portion configured to be disposed within a first section and a second section of the rotatable food basket;
a cooking vessel disposed within the cooking device, wherein the rotatable food basket is disposed within the cooking vessel, wherein the cooking vessel is configured to hold a cooking liquid;
wherein the vibration damping mechanism is at least one of:

a vessel energy absorbing device disposed between the cooking vessel and a frame of the cooking device, wherein the energy absorbing device comprises is at least one of:

a spring disposed between the frame and at least one of a side and a bottom of the cooking vessel; .
an energy absorbing material configured to be operable in a heated environment and in conjunction with a cooking liquid; and
a frame energy absorbing device disposed between a frame and a surface external to the cooking device, wherein the frame is configured to receive the cooking vessel, the frame comprising:

supports, wherein the frame energy absorbing device is disposed between the supports for the frame; and
at least one of a bolt and a locking device; and
a drive mechanism coupled to the rotatable food basket to facilitate rotating the rotatable food basket, wherein the damping mechanism is coupled to the drive mechanism to reduce the vibration generated by the rotatable food basket rotating within the cooking device;
wherein the damping mechanism is configured to isolate at least one of the rotatable food basket, the cooking vessel, and the drive mechanism from the frame to facilitate reducing the vibration generated by the rotatable food basket rotating within the cooking device.

Clause 4. A retrofit apparatus for a preexisting cooking device, comprising:

a hood defining a liquid removal section and comprising a housing;
a motor disposed within the hood;
a motor gear rotatable by the motor to facilitate rotating a centrifugal liquid removal device;
a plurality of teeth in the motor gear configured to automatically engage a motor gear coupling on a shaft of the centrifugal liquid removal device;
a basket well locatable within the housing and moveable between a cooking section and the liquid removal section, wherein the centrifugal liquid removal device is disposable within the basket well, the basket well comprising a bearing surface and a basket well gear, wherein the basket well gear comprises a plurality of teeth disposed around the circumference of the basket well;
a spinning gear coupled to the motor to interface with the basket well gear at the circumference of the basket well;
means for moving the basket well between the liquid removal section and a cooking section of the preexisting cooking device; and
a heating element disposed within the housing for heating a liquid in the cooking section of the preexisting cooking device.

Clause 5. A cooking device comprising:

a fryer bay comprising a cooking section and a spinning section;
a first basket disposed in a first section of the fryer bay;
a second basket disposed in a second section of the fryer bay, wherein the first basket and the second basket are independently movable between the cooking section and the spinning section, and wherein the first basket and the second basket are independently removable from the cooking device;
a first lifting mechanism, first lifting arms, and a first lifting plate for moving the first basket between the cooking section and the spinning section;
a second lifting mechanism, second lifting arms, and a second lifting plate for moving the second basket between the cooking section and the spinning section, wherein the second lifting arms extend around the first lifting plate to facilitate independently moving the first basket and the second basket;
guide posts disposed proximate at least one of the first lifting plate and the second lifting plate to facilitate guiding the at least one of the first basket and the second basket between the cooking section and the spinning section;
a first cover for the first basket;
a second cover for the second basket, wherein the first cover and the second cover facilitate independent operation of cooking in the first basket and the second basket.
first hinges coupled to the first cover;
second hinges coupled to the second cover, wherein the first hinges and second hinges are located on at least one of adjacent, opposite, and neighboring sides of the cooking device; and
a separating plate between the first basket and the second basket, wherein the separating plate comprises a solid portion proximate the spinning section and a perforated portion proximate the cooking section.

Clause 6. A cooking device, comprising:

a centrifugal liquid removal device;
a cooking section comprising a cooking liquid;
a spinning section for at least partially removing the cooking liquid from a food;
a tube heating element in the cooking section for heating the cooking liquid, wherein the tube heating element runs at least partially through the cooking liquid;
a coolant disposed in the tube heating element;
means for utilizing exhaust heat from the spinning section to at least one of preheat and reheat the coolant in the tube heating element; and
a vacuum motor and a vacuum vent for reducing a pressure in the cooking device to facilitate removal of the cooking liquid from the food, wherein the means for utilizing exhaust heat comprises the vacuum motor and the vacuum vent.

Clause 7. A cooking device comprising:

a rotatable food basket;
a hood with a lip, wherein the hood and lip are interoperable to prevent heat loss;
a motor in the hood for rotating the rotatable food basket;
a motor gear that includes a plurality of teeth configured to receive a motor key on a central shaft of the rotatable food basket, wherein the motor key is configured to automatically seat with the plurality of teeth in the motor gear via an electromagnetic coupling;
wherein the motor gear, the plurality of teeth, the motor, and the motor key are interoperable to facilitate rotating the rotatable food basket; and
means for inducing sonic vibration in the rotatable food basket to agitate a food in the rotatable food basket and to prevent sticking of the food.

Clause 8. The cooking device of clause 7, wherein the hood and the lip are interoperable to achieve an energy consumption improvement of about 13%.

Clause 9. A controller for a cooking device, the controller configured to cause the cooking device to perform a method, comprising:

receiving an instruction relating to a cook time, a spin time, and a cook temperature;
moving a centrifugal liquid removal device to a cooking section, wherein the centrifugal liquid removal device comprises a food to be cooked;
measuring a cooking liquid temperature in the cooking section;
adjusting a heating element until the cooking liquid temperature is substantially equal to the cook temperature;
agitating the food in the cooking section;
after the cook time, instructing a motor to move the centrifugal liquid removal device to a liquid removal section;
rotating the centrifugal liquid removal device for the spin time to remove an amount of liquid from the food, wherein a spin speed of the centrifugal liquid removal device is a linearly changing variable spin speed;
damping a vibration in the cooking device;
adjusting at least one of the cook temperature, the cook time, and the spin time in order to obtain a predetermined cooling rate of the food; and
removing the food from the cooking device.

Clause 10. The controller of clause 9, wherein the instruction relates to the spin speed, a food type, a spin temperature, and a food result.

Clause 11. The controller of clause 10, the method further comprising:

measuring a liquid removal section temperature;
adjusting the liquid removal section temperature until it is substantially equal to the spin temperature;
adjusting at least one of the cook temperature, the spin temperature, the cook time, the spin time, and the spin speed in order to obtain the food result; and
adjusting at least one of the spin temperature and the spin speed in order to obtain the predetermined cooling rate of the food.

Clause 12. A cooking device, comprising:

> a housing:
> a drawer slidably coupled to the housing;
> a door coupled to the drawer and the housing;
> a cooking basket disposed in the drawer, the cooking basket configured to hold a food;
> a lifting mechanism to move the cooking basket between a cooking section and a spinning section when the drawer is located in the housing and when the door is closed;
> a center post connected to the cooking basket; and a motor coupled to a gear for spinning the cooking basket, wherein the gear automatically couples to the center post when the cooking basket moves from the cooking section to the spinning section to facilitate spinning the cooking basket to remove a liquid from the food.

Clause 13. The cooking device of clause 12, wherein the door is slidably coupled to the drawer and the housing for moving the drawer into and out

## Claims

1. A cooking device, comprising:

   > a rotatable food basket disposed within the cooking device;
   > a damping mechanism configured to reduce a vibration generated by the rotatable food basket rotating within the cooking device;
   > a cooking vessel disposed within the cooking device, wherein the rotatable food basket is disposed within the cooking vessel, wherein the cooking vessel is configured to hold a cooking liquid; and
   > a drive mechanism coupled to the rotatable food basket to facilitate rotating the rotatable food basket.

2. A cooking device of claim 1, wherein the damping mechanism is coupled to the drive mechanism to reduce the vibration generated by the rotatable food basket rotating within the cooking device.

3. A cooking device of claim 1, wherein the damping mechanism comprises an energy absorbing material configured to be operable in a heated environment and in conjunction with a cooking liquid.

4. A cooking device of claim 1, further comprising a frame.

5. A cooking device of claim 4, wherein the damping mechanism is disposed between the cooking vessel and the frame of the cooking device and comprises at least one of:

   > a spring disposed between the frame and at least one of a side and a bottom of the cooking vessel; and
   > a frame energy absorbing device disposed between a frame and a surface external to the cooking device, wherein the frame is configured to receive the cooking vessel, the frame comprising a plurality of supports, wherein the frame energy absorbing device is disposed between the supports for the frame; and at least one of a bolt and a locking device.

6. A cooking device of claim 4, wherein the damping mechanism is configured to isolate at least one of the rotatable food basket, the cooking vessel, and the drive mechanism from the frame to facilitate reducing the vibration generated by the rotatable food basket rotating within the cooking device.

7. A cooking device of claim 1, further comprising a lifting plate and a lifting mechanism operable to move the rotatable food basket between a cooking section and a spinning section.

8. A cooking device of claim 1, further comprising a first basket portion and a second basket portion configured to be disposed within a first section and a second section of the rotatable food basket.

9. A cooking device of claim 8, wherein the first basket portion further comprises a first handle slot and second basket portion further comprises a second handle slot.

10. A controller for a cooking device, the controller configured to cause the cooking device to perform a method, comprising:

receiving an instruction relating to a cook time, a spin time, and a cook temperature;
moving a centrifugal liquid removal device to a cooking section, wherein the centrifugal liquid removal device comprises a food to be cooked;
measuring a cooking liquid temperature in the cooking section;
adjusting a heating element until the cooking liquid temperature is substantially equal to the cook temperature;
after the cook time, instructing a motor to move the centrifugal liquid removal device to a liquid removal section;
rotating the centrifugal liquid removal device for the spin time to remove an amount of liquid from the food, wherein a spin speed of the centrifugal liquid removal device is a linearly changing variable spin speed;
adjusting at least one of the cook temperature, the cook time, and the spin time in order to obtain a predetermined cooling rate of the food; and
removing the food from the cooking device.

11. A controller of claim 10, wherein the instruction relates to the spin speed, a food type, a spin temperature, and a food result.

12. A controller of claim 10, the method further comprising:

measuring a liquid removal section temperature;
adjusting the liquid removal section temperature until it is substantially equal to the spin temperature;
adjusting at least one of the cook temperature, the spin temperature, the cook time, the spin time, and the spin speed in order to obtain the food result; and
adjusting at least one of the spin temperature and the spin speed in order to obtain the predetermined cooling rate of the food.

13. A controller of claim 10, further comprising agitating the food in the cooking section.

14. A controller of claim 10, further comprising damping a vibration in the cooking device.

15. A controller of claim 10, further comprising filtering the cooking liquid.

Fig. 1

Fig. 2

Fig. 3A

Fig. 3B

Fig. 4A

Fig. 4C

Fig. 4B

Fig. 4D

Fig. 4E

Fig. 5

Fig. 6A

Fig. 6B

Fig. 6C

Fig. 7A

Fig. 7B

Fig. 7C

Fig. 8

Fig. 9

Fig. 10A

Fig. 10B

Fig. 10C

Fig. 11

Fig. 12

Fig. 13

Fig. 14A

Fig. 14B

Fig. 15A

Fig. 15B

Fig. 16

Fig. 17

Fig. 18A

Fig. 18B

1840

1875

Fig. 18C

Fig. 19A

Fig. 19B

Fig. 19C

2073b

2073a

Fig. 20A

2073c

2040

2073b

2073a

Fig. 20B

2073c

2040

2183

Fig. 21A

2140

Fig. 21B

2183

2140

Fig. 22A

2205

Fig. 22B

2281  2242  2230

2205

2282

Fig. 22C

Fig. 23A

Fig. 23B

Fig. 23C

Fig. 24A

Fig. 24B

**Fig. 24C**

**Fig. 24D**

2476

**Fig. 24E**

2476

Fig. 25A

Fig. 25B

2605

Fig. 26A

2694 → 2698

Fig. 26B

2694 → 2698

Fig. 26C

Fig. 27A

Fig. 27B

Fig. 27C

Fig. 28A

Fig. 28B

Fig. 28C

Fig. 29A

Fig. 29B

Fig. 29C

Fig. 29D

Fig. 30

3160

3123

Fig. 31A

3150

Fig.31B

Fig. 31C

3194

3176

Fig. 31D

3150

3192

3193

Fig. 31E

3242

3292

3293

3251

Fig. 32A

3292

3293

Fig. 32B

Fig. 32C

Fig. 32D

Fig. 32E

Fig. 32F

3394

3356

3354

3376

3351

Fig. 33A

3376

3394

3356

3354

3351

Fig. 33B

Fig. 33C

Fig. 33D   Fig. 33E

Fig. 33F

Fig. 33G

Fig. 33H

3423
3426
3427

Fig. 34A

3423

3427

Fig. 34B

3423

3426

3427

Fig. 34C

Fig. 34D

Fig. 35A

Fig. 35B

Fig. 36A

Fig. 36B

Fig. 36C

Fig. 37

Fig. 38

Fig. 39

Fig. 40

Fig. 41

Fig. 42

14

22

16

20    18

# Fig. 43

24    28    26

16

# Fig. 44

Fig. 45

Fig. 46

Fig. 47

**Fig. 48**

**Fig. 49**

**Fig. 50**

Fig. 51

Fig. 52

Fig. 53

Fig. 54

Fig. 55

## Fig. 56

## Fig. 57

Fig. 58

Fig. 59A

Fig. 59B

54

Fig. 60

52

Fig. 61A

**52**

**50**

Fig. 61B

**52**

**50**

Fig. 61C

Fig. 62

**54**

Fig. 63

Fig. 64

Fig. 65

Fig. 66

Fig. 67

Fig. 68

Fig. 69

Fig. 70

Fig. 71

Fig. 72

Fig. 73

Fig. 74

Fig. 75

Fig. 76

Fig. 77

Fig. 78

66

**Fig. 79**

76

76

**Fig. 80**

66

10

16    117

120    120

123

119

120
121    120    **Fig. 81**
118    119    121

Fig. 82

Fig. 83

Fig. 84

Fig. 85

Fig. 86

Fig. 87

Fig. 88

Fig. 89

Fig. 90A

Fig. 90B

Fig. 91

Fig. 92

Fig. 93

Fig. 94

Fig. 95

Fig. 96

Fig. 97

Fig. 98

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2009040451 W